# EUROPEAN PATENT APPLICATION

(11) **EP 4 632 386 A1**
(43) Date of publication of application: **15.10.2025**
(21) Application number: 25169653.0
(22) Date of filing: 10.04.2025
(51) Int. Cl.: G01N 35/00, G01N 35/10

(54) **SAMPLE ANALYZER**

(30) Priority: 10.04.2024 CN 202410445214
(71) Applicant: Shenzhen Mindray Bio-Medical Electronics Co., Ltd., Shenzhen, Guangdong 518057 (CN)
(72) Inventor: WU, Yongfeng, Shenzhen, 518057 (CN); JIN, Shuo, Shenzhen, 518057 (CN); DAI, Jiandong, Shenzhen, 518057 (CN); FENG, Yahui, Shenzhen, 518057 (CN); LIU, Pan, Shenzhen, 518057 (CN); DONG, Guodong, Shenzhen, 518057 (CN)
(74) Representative: KIPA AB

(57) **Abstract**

The invention provides a sample analyzer, including a sample distribution device, a sample detection device, and a controller. The sample distribution device includes first and second sample dispensing components. The controller is configured to: perform a first detection process including controlling the first sample dispensing component to perform a sample distribution action and obtaining a first detection result based on first detection data detected by the sample detection device and first calibration data; and perform a second detection process including controlling the second sample dispensing component to perform a sample distribution action and obtaining a second detection result based on second detection data detected by the sample detection device and second calibration data. When a detection item performed by the first detection process and a detection item performed by the second detection process are the same, the first calibration data and the second calibration data are the same.

## Description

### TECHNICAL FIELD

The invention relates to the field of in vitro diagnosis devices, and in particular to a sample analyzer.

### BACKGROUND

A sample analyzer provided by conventional technologies distributes a liquid by using a single-needle pipetting device, that is, all aspirating and dispensing actions of the same liquid are performed by a single pipetting needle of a single pipetting device, that is, distribution of the same liquid in all detection items in the sample analyzer is performed by the same pipetting needle. For example, sample distribution actions in all the detection items in the sample analyzer are performed by sharing the same sample needle, and reagent distribution actions in all the detection items are performed by sharing the same reagent needle. Since a pipetting speed of the single-needle pipetting device has an upper limit, a sample detection speed of the whole analyzer is also limited, which is not beneficial for improving the detection speed of the sample analyzer. In order to improve the detection speed of the sample analyzer, a solution in which a sample or reagent is distributed by using a double-needle pipetting device or a three-needle pipetting device or even a more-needle pipetting device is proposed in the related art, that is, the sample distribution action is performed by using two sample needles or three sample needles or more sample needles respectively, or the reagent distribution action is performed by using two reagent needles or three reagent needles or more reagent needles respectively. When the sample or reagent is added by using the double-needle pipetting device or the three-needle pipetting device or even the more-needle pipetting device, there may be a difference in distribution accuracy when the same liquid is distributed by different pipetting needles, which may result in a precision of the whole analyzer failing to meet performance requirements for clinical analysis.

To solve the above problem that the precision of the whole analyzer is reduced because of pipetting with different pipetting needles, solutions proposed in the related art mainly include the following two solutions. In a first solution, each pipetting needle is used to perform a pipetting action in a respective detection item, that is, different pipetting needles are separately responsible for the pipetting actions in different specified detection items respectively, and they do not interfere with each other. In this solution, a clinical calibration corresponding to the specified item is performed for each pipetting needle separately. In a second solution, with respect to each detection item, a clinical item calibration is performed for each pipetting needle respectively, so that several sets of calibrators and corresponding reagents are required if there are several pipetting needles. However, these two solutions have shortcomings in a specific application. Specifically, in the first solution, each pipetting needle is used to perform the pipetting action in a respective specified detection item. When a certain detection item needs to be performed on many samples in a time period, there may be a phenomenon that many samples will wait in a long queue for the pipetting actions under a pipetting needle corresponding to the detection item, while other pipetting needles are in an idle state. This results in a great waste of resources, a clinical detection scenario for a large number of samples will be slowed down, and an actual detection efficiency of the sample analyzer is significantly reduced, which is contrary to a purpose of improving the speed of pipetting with multiple needles. In the second solution, with respect to each detection item, the clinical item calibration needs to be performed on a pipetting component composed of pipetting needles. Therefore, on one hand, usage of the calibrators and corresponding reagents will be increased, thereby increasing a calibration cost; on the other hand, a calibration efficiency may be reduced. Further, since a performance transmission chain between a clinical result of the item and a pipetting accuracy is long, or a difference in accuracy of different pipetting needles cannot be reflected by clinical data of a single detection, a more uncontrollable calibration deviation may occur when the clinical item calibration is used.

### SUMMARY

A first object of the invention is to provide a sample analyzer, which is intended to solve the technical problem in the related art that the detection efficiency, calibration cost and calibration efficiency cannot be balanced when a pipetting action of the same liquid is performed by using a multi-needle pipetting device.

In order to achieve the above object, a solution provided by the invention is as follows. A sample analyzer includes a sample distribution device, a reagent distribution device, a sample detection device, and a controller.

The sample distribution device includes a first sample dispensing component and a second sample dispensing component. Each of the first sample dispensing component and the second sample dispensing component is configured to perform a sample distribution action including aspirating a sample from a sample vessel and dispensing at least a portion of the aspirated sample into a reaction vessel. The first sample dispensing component includes a first sample needle, the second sample dispensing component includes a second sample needle, and the first sample needle and the second sample needle are two sample needles capable of performing the sample distribution action independently of each other.

The reagent distribution device is configured to perform a reagent distribution action including aspirating a reagent from a reagent vessel and dispensing at least a portion of the aspirated reagent into the reaction vessel.

The sample detection device is configured to detect a to-be-detected solution prepared from at least the sample distributed by the sample distribution device and the reagent distributed by the reagent distribution device.

The controller is configured to perform a first detection process including: controlling the first sample dispensing component to perform the sample distribution action, controlling the reagent distribution device to perform the reagent distribution action, controlling the sample detection device to detect the to-be-detected solution prepared from at least the sample distributed by the first sample dispensing component and the reagent distributed by the reagent distribution device, obtaining first detection data based on detection information fed back by the sample detection device, and obtaining a first detection result based on the first detection data and first calibration data.

The controller is further configured to perform a second detection process including: controlling the second sample dispensing component to perform the sample distribution action, controlling the reagent distribution device to perform the reagent distribution action, controlling the sample detection device to detect the to-be-detected solution prepared from at least the sample distributed by the second sample dispensing component and the reagent distributed by the reagent distribution device, obtaining second detection data based on the detection information fed back by the sample detection device, and obtaining a second detection result based on the second detection data and second calibration data.

When a detection item performed by the first detection process and a detection item performed by the second detection process are the same detection item, the first calibration data and the second calibration data are the same calibration data.

As an implementation, a deviation between a sample distribution accuracy of the first sample dispensing component and a sample distribution accuracy of the second sample dispensing component may be less than or equal to a first preset value, and the first preset value is equal to or greater than zero and less than or equal to 5%.

As an implementation, the first preset value may be less than or equal to 2%.

As an implementation, the sample analyzer may further include a distribution amount detection device.

The controller is further configured to perform a sample addition calibration process including: controlling the first sample dispensing component to aspirate a sample addition calibrator and distribute the sample addition calibrator into the reaction vessel, and controlling the distribution amount detection device to detect a first calibrator distribution amount distributed by the first sample dispensing component into the reaction vessel; controlling the second sample dispensing component to aspirate the sample addition calibrator and distribute the sample addition calibrator into the reaction vessel, and controlling the distribution amount detection device to detect a second calibrator distribution amount distributed by the second sample dispensing component into the reaction vessel; correcting, based on the first calibrator distribution amount and the second calibrator distribution amount, a sample distribution amount of the first sample dispensing component upon performing the sample distribution action and/or a sample distribution amount of the second sample dispensing component upon performing the sample distribution action, such that a deviation between a sample distribution accuracy of the first sample dispensing component and a sample distribution accuracy of the second sample dispensing component is less than or equal to a first preset value.

As an implementation, the operation of correcting, based on the first calibrator distribution amount and the second calibrator distribution amount, the sample distribution amount of the first sample dispensing component upon performing the sample distribution action and/or the sample distribution amount of the second sample dispensing component upon performing the sample distribution action may include the following operations.

A first deviation value of the second calibrator distribution amount relative to the first calibrator distribution amount is calculated, and the sample distribution amount of the second sample dispensing component upon performing the sample distribution action is corrected based on the first deviation value.

Or, a second deviation value of the first calibrator distribution amount relative to the second calibrator distribution amount is calculated, and the sample distribution amount of the first sample dispensing component upon performing the sample distribution action is corrected based on the second deviation value.

As an implementation, the operation of correcting, based on the first calibrator distribution amount and the second calibrator distribution amount, the sample distribution amount of the first sample dispensing component upon performing the sample distribution action and/or the sample distribution amount of the second sample dispensing component upon performing the sample distribution action may include the following operations.

A third deviation value of the first calibrator distribution amount relative to a reference amount is calculated. A fourth deviation value of the second calibrator distribution amount relative to the reference amount is calculated. The sample distribution amount of the first sample dispensing component upon performing the sample distribution action is corrected based on the third deviation value. The sample distribution amount of the second sample dispensing component upon performing the sample distribution action is corrected based on the fourth deviation value.

The reference amount is a target distribution amount of the sample actually required to be distributed by the sample distribution device into the reaction vessel in the sample distribution action, or there is a preset difference between the reference amount and the target distribution amount of the sample actually required to be distributed by the sample distribution device into the reaction vessel in the sample distribution action.

As an implementation, the operation of correcting, based on the first calibrator distribution amount and the second calibrator distribution amount, the sample distribution amount of the first sample dispensing component upon performing the sample distribution action and/or the sample distribution amount of the second sample dispensing component upon performing the sample distribution action may include the following operations.

A first deviation value of the second calibrator distribution amount relative to the first calibrator distribution amount is calculated, a first correction parameter is obtained based on the first deviation value, a corrected sample distribution amount of the first sample dispensing component is calculated based on a target distribution amount of the sample actually required to be distributed by the sample distribution device into the reaction vessel in the sample distribution action and the first correction parameter, and the sample distribution amount of the second sample dispensing component is kept unchanged.

Or, a second deviation value of the first calibrator distribution amount relative to the second calibrator distribution amount is calculated, a second correction parameter is obtained based on the second deviation value, a corrected sample distribution amount of the second sample dispensing component is calculated based on a target distribution amount of the sample actually required to be distributed by the sample distribution device into the reaction vessel in the sample distribution action and the second correction parameter, and the sample distribution amount of the first sample dispensing component is kept unchanged.

Or, a third deviation value of the first calibrator distribution amount relative to a reference amount is calculated, a third correction parameter is obtained based on the third deviation value, and a corrected sample distribution amount of the first sample dispensing component is calculated based on a target distribution amount of the sample actually required to be distributed by the sample distribution device into the reaction vessel in the sample distribution action and the third correction parameter. A fourth deviation value of the second calibrator distribution amount relative to the reference amount is calculated, a fourth correction parameter is obtained based on the fourth deviation value, and a corrected sample distribution amount of the second sample dispensing component is calculated based on the target distribution amount and the fourth correction parameter. The reference amount is the target distribution amount, or there is a preset difference between the reference amount and the target distribution amount.

As an implementation, the distribution amount detection device may be a weighing device.

The operation of controlling the distribution amount detection device to detect the first calibrator distribution amount distributed by the first sample dispensing component into the reaction vessel includes the following operations. The weighing device is controlled to weigh the sample addition calibrator distributed by the first sample dispensing component into the reaction vessel, and the first calibrator distribution amount distributed by the first sample dispensing component into the reaction vessel is obtained based on the weight information fed back by the weighing device.

The operation of controlling the distribution amount detection device to detect the second calibrator distribution amount distributed by the second sample dispensing component into the reaction vessel includes the following operations. The weighing device is controlled to weigh the sample addition calibrator distributed by the second sample dispensing component into the reaction vessel, and the second calibrator distribution amount distributed by the second sample dispensing component into the reaction vessel is obtained based on the weight information fed back by the weighing device.

As an implementation, the distribution amount detection device may be a first optical detection device, and the sample addition calibrator is a pigment solution. The operation of controlling the first sample dispensing component to aspirate the sample addition calibrator and distribute the sample addition calibrator into the reaction vessel and controlling the distribution amount detection device to detect the first calibrator distribution amount distributed by the first sample dispensing component into the reaction vessel includes the following operations. The first sample dispensing component is controlled to aspirate the pigment solution and distribute the pigment solution into the reaction vessel, and the first optical detection device is controlled to detect an absorbance of the pigment solution distributed by the first sample dispensing component into the reaction vessel, so as to obtain the first calibrator distribution amount distributed by the first sample dispensing component into the reaction vessel. The operation of controlling the second sample dispensing component to aspirate the sample addition calibrator and distribute the sample addition calibrator into the reaction vessel and controlling the distribution amount detection device to detect the second calibrator distribution amount distributed by the second sample dispensing component into the reaction vessel includes the following operations. The second sample dispensing component is controlled to aspirate the pigment solution and distribute the pigment solution into the reaction vessel, and the first optical detection device is controlled to detect an absorbance of the pigment solution distributed by the second sample dispensing component into the reaction vessel, so as to obtain the second calibrator distribution amount distributed by the second sample dispensing component into the reaction vessel.

Or, the distribution amount detection device is a first optical detection device, and the sample addition calibrator is a pigment solution. The operation of controlling the first sample dispensing component to aspirate the sample addition calibrator and distribute the sample addition calibrator into the reaction vessel and controlling the distribution amount detection device to detect the first calibrator distribution amount distributed by the first sample dispensing component into the reaction vessel includes the following operations. The first sample dispensing component is controlled to aspirate the pigment solution and distribute the pigment solution into the reaction vessel, the reagent distribution device is controlled to aspirate a diluent and distribute the diluent into the reaction vessel, and the first optical detection device is controlled to detect an absorbance of a first mixed solution formed by mixing at least the pigment solution distributed by the first sample dispensing component into the reaction vessel with the diluent distributed by the reagent distribution device into the reaction vessel, so as to obtain the first calibrator distribution amount distributed by the first sample dispensing component into the reaction vessel. The operation of controlling the second sample dispensing component to aspirate the sample addition calibrator and distribute the sample addition calibrator into the reaction vessel and controlling the distribution amount detection device to detect the second calibrator distribution amount distributed by the second sample dispensing component into the reaction vessel includes the following operations. The second sample dispensing component is controlled to aspirate the pigment solution and distribute the pigment solution into the reaction vessel, the reagent distribution device is controlled to aspirate a diluent and distribute the diluent into the reaction vessel, and the first optical detection device is controlled to detect an absorbance of a second mixed solution formed by mixing at least the pigment solution distributed by the second sample dispensing component into the reaction vessel with the diluent distributed by the reagent distribution device into the reaction vessel, so as to obtain the second calibrator distribution amount distributed by the second sample dispensing component into the reaction vessel.

Or, the distribution amount detection device is a first optical detection device, and the sample addition calibrator is a diluent. The operation of controlling the first sample dispensing component to aspirate the sample addition calibrator and distribute the sample addition calibrator into the reaction vessel and controlling the distribution amount detection device to detect the first calibrator distribution amount distributed by the first sample dispensing component into the reaction vessel includes the following operations. The first sample dispensing component is controlled to aspirate the diluent and distribute the diluent into the reaction vessel, the reagent distribution device is controlled to aspirate a pigment solution and distribute the pigment solution into the reaction vessel, and the first optical detection device is controlled to detect an absorbance of a third mixed solution formed by mixing at least the diluent distributed by the first sample dispensing component into the reaction vessel with the pigment solution distributed by the reagent distribution device into the reaction vessel, so as to obtain the first calibrator distribution amount distributed by the first sample dispensing component into the reaction vessel. The operation of controlling the second sample dispensing component to aspirate the sample addition calibrator and distribute the sample addition calibrator into the reaction vessel and controlling the distribution amount detection device to detect the second calibrator distribution amount distributed by the second sample dispensing component into the reaction vessel includes the following operations. The second sample dispensing component is controlled to aspirate the diluent and distribute the diluent into the reaction vessel, the reagent distribution device is controlled to aspirate the pigment solution and distribute the pigment solution into the reaction vessel, and the first optical detection device is controlled to detect an absorbance of a fourth mixed solution formed by mixing at least the diluent distributed by the second sample dispensing component into the reaction vessel with the pigment solution distributed by the reagent distribution device into the reaction vessel, so as to obtain the second calibrator distribution amount distributed by the second sample dispensing component into the reaction vessel.

As an implementation, the distribution amount detection device may be a second optical detection device, and the sample addition calibrator is a first marker reagent with a luminescent marker.

The sample analyzer further includes a substrate distribution device configured to distribute a luminescent substrate reagent into the reaction vessel.

The operation of controlling the first sample dispensing component to aspirate the sample addition calibrator and distribute the sample addition calibrator into the reaction vessel and controlling the distribution amount detection device to detect the first calibrator distribution amount distributed by the first sample dispensing component into the reaction vessel includes the following operations. The first sample dispensing component is controlled to aspirate the first marker reagent and distribute the first marker reagent into the reaction vessel, the substrate distribution device is controlled to distribute the luminescent substrate reagent into the reaction vessel, and the second optical detection device is controlled to detect a luminescent intensity of a first reaction solution prepared from at least the first marker reagent distributed by the first sample dispensing component into the reaction vessel and the luminescent substrate reagent distributed by the substrate distribution device into the reaction vessel, so as to obtain the first calibrator distribution amount distributed by the first sample dispensing component into the reaction vessel.

The operation of controlling the second sample dispensing component to aspirate the sample addition calibrator and distribute the sample addition calibrator into the reaction vessel and controlling the distribution amount detection device to detect the second calibrator distribution amount distributed by the second sample dispensing component into the reaction vessel includes the following operations. The second sample dispensing component is controlled to aspirate the first marker reagent and distribute the first marker reagent into the reaction vessel, the substrate distribution device is controlled to distribute the luminescent substrate reagent into the reaction vessel, and the second optical detection device is controlled to detect a luminescent intensity of a second reaction solution prepared from at least the first marker reagent distributed by the second sample dispensing component into the reaction vessel and the luminescent substrate reagent distributed by the substrate distribution device into the reaction vessel, so as to obtain the second calibrator distribution amount distributed by the second sample dispensing component into the reaction vessel.

As an implementation, the operation of performing, by the reagent distribution device, the reagent distribution action may include the following operations. A magnetic bead reagent with magnetic beads is aspirated from a first reagent vessel, and the magnetic bead reagent is distributed into the reaction vessel. A second marker reagent with a luminescent marker is aspirated from a second reagent vessel, and the second marker reagent is distributed into the reaction vessel.

The reaction vessel is carried by a reaction device to incubate a liquid containing at least the sample, the magnetic bead reagent and the second marker reagent, to prepare a third reaction solution.

The sample analyzer further includes a magnetic separation device configured to perform a magnetic separation cleaning operation on the third reaction solution, to prepare a fourth reaction solution.

The substrate distribution device is further configured to dispense the luminescent substrate reagent into the fourth reaction solution, to prepare the to-be-detected solution from the fourth reaction solution and the luminescent substrate reagent.

The sample detection device is configured to detect a luminescent intensity of the to-be-detected solution.

The sample addition calibration process differs from the first detection process and the second detection process in at least one of: a component of the first marker reagent differing from a component of the second marker reagent, a concentration of the first marker reagent differing from a concentration of the second marker reagent, a distribution amount of the first marker reagent differing from a distribution amount of the second marker reagent, different distribution amounts of the luminescent substrate reagent, different incubation durations, or different incubation temperatures.

As an implementation, the sample analyzer may be pre-stored with a first preset condition, and the first preset condition may include at least one of: reaching a first preset duration since a last execution of the sample addition calibration process; acquiring information indicating a completion of troubleshooting of the first sample dispensing component and/or the second sample dispensing component; acquiring information indicating a completion of assembling of the first sample dispensing component and/or the second sample dispensing component; or reaching a first preset time point of a first preset maintenance period.

The controller is further configured to perform the sample addition calibration process when the first preset condition is satisfied.

As an implementation, the first sample dispensing component and the second sample dispensing component may share at least a portion of their parts.

As an implementation, the first sample dispensing component may further include a first aspirating and dispensing power part configured to provide a driving force for the first sample needle to perform aspirating and dispensing actions.

The second sample dispensing component may further include a second aspirating and dispensing power part configured to provide a driving force for the second sample needle to perform aspirating and dispensing actions.

The first aspirating and dispensing power part and the second aspirating and dispensing power part are the same aspirating and dispensing power part.

As an implementation, the first sample needle may be configured with a first identification code associated with a sample addition correction parameter of the first sample needle, and the sample analyzer further includes a first information acquisition part configured to identify the first identification code. The controller is further configured to: acquire the sample addition correction parameter of the first sample needle based on information fed back by the first information acquisition part by identifying the first identification code; and correct, based on at least the sample addition correction parameter of the first sample needle, a sample distribution amount of the first sample dispensing component upon performing the sample distribution action, such that a deviation between a sample distribution accuracy of the first sample dispensing component and a sample distribution accuracy of the second sample dispensing component is less than or equal to a first preset value.

And/or, the second sample needle may be configured with a second identification code associated with a sample addition correction parameter of the second sample needle, and the sample analyzer further includes a first information acquisition part configured to identify the second identification code. The controller is further configured to: acquire the sample addition correction parameter of the second sample needle based on information fed back by the first information acquisition part by identifying the second identification code; and correct, based on at least the sample addition correction parameter of the second sample needle, a sample distribution amount of the second sample dispensing component upon performing the sample distribution action, such that a deviation between a sample distribution accuracy of the first sample dispensing component and a sample distribution accuracy of the second sample dispensing component is less than or equal to a first preset value.

As an implementation, the controller may be further configured to acquire the sample addition correction parameter of the first sample needle based on the information fed back by the first information acquisition part by identifying the first identification code, before controlling the first sample needle to perform the sample distribution action in the sample analyzer for the first time.

And/or, the controller may be further configured to acquire the sample addition correction parameter of the second sample needle based on the information fed back by the first information acquisition part by identifying the second identification code, before controlling the second sample needle to perform the sample distribution action in the sample analyzer for the first time.

As an implementation, the first sample dispensing component may further include a first aspirating and dispensing power part configured to provide a driving force for the first sample needle to perform aspirating and dispensing actions, the first aspirating and dispensing power part is configured with a third identification code associated with a sample addition correction parameter of the first aspirating and dispensing power part, and the sample analyzer further includes a first information acquisition part configured to identify the third identification code. The controller is further configured to: acquire the sample addition correction parameter of the first aspirating and dispensing power part based on information fed back by the first information acquisition part by identifying the third identification code; and correct, based on the sample addition correction parameter of the first aspirating and dispensing power part, a sample distribution amount of the first sample dispensing component upon performing the sample distribution action, such that a deviation between a sample distribution accuracy of the first sample dispensing component and a sample distribution accuracy of the second sample dispensing component is less than or equal to a first preset value.

And/or, the second sample dispensing component further includes a second aspirating and dispensing power part configured to provide a driving force for the second sample needle to perform aspirating and dispensing actions, the second aspirating and dispensing power part is configured with a fourth identification code associated with a sample addition correction parameter of the second aspirating and dispensing power part, and the sample analyzer further includes a first information acquisition part configured to identify the fourth identification code. The controller is further configured to: acquire the sample addition correction parameter of the second aspirating and dispensing power part based on information fed back by the first information acquisition part by identifying the fourth identification code; and correct, based on the sample addition correction parameter of the second aspirating and dispensing power part, a sample distribution amount of the second sample dispensing component upon performing the sample distribution action, such that a deviation between a sample distribution accuracy of the first sample dispensing component and a sample distribution accuracy of the second sample dispensing component is less than or equal to a first preset value.

As an implementation, the controller may be further configured to acquire the sample addition correction parameter of the first aspirating and dispensing power part based on the information fed back by the first information acquisition part by identifying the third identification code, before controlling the first aspirating and dispensing power part to perform the sample distribution action in the sample analyzer for the first time.

And/or, the controller may be further configured to acquire the sample addition correction parameter of the second aspirating and dispensing power part based on the information fed back by the first information acquisition part by identifying the fourth identification code, before controlling the second aspirating and dispensing power part to perform the sample distribution action in the sample analyzer for the first time.

As an implementation, the sample analyzer may further include a reaction device configured to carry the reaction vessel to incubate the sample and the reagent in the reaction vessel.

The controller is further configured to: control the reagent distribution device to perform both the reagent distribution action in the first detection process and the reagent distribution action in the second detection process; control the reaction device to incubate both the sample and the reagent in the first detection process and the sample and the reagent in the second detection process; and control the sample detection device to detect both the to-be-detected solution in the first detection process and the to-be-detected solution in the second detection process.

As an implementation, the operation of performing, by the reagent distribution device, the reagent distribution action may include the following operations. A magnetic bead reagent is aspirated from a first reagent vessel, and the magnetic bead reagent is distributed into the reaction vessel. A second marker reagent is aspirated from a second reagent vessel, and the second marker reagent is distributed into the reaction vessel.

The reaction device is configured to carry the reaction vessel to incubate a liquid containing at least the sample, the magnetic bead reagent and the second marker reagent, to prepare a third reaction solution.

The sample analyzer further includes a magnetic separation device and a substrate distribution device, the magnetic separation device is configured to perform a magnetic separation cleaning operation on the third reaction solution, to prepare a fourth reaction solution.

The substrate distribution device is configured to perform a substrate distribution action including aspirating a luminescent substrate reagent from a substrate reagent vessel and dispensing at least a portion of the aspirated luminescent substrate reagent into the reaction vessel, to prepare the to-be-detected solution from the fourth reaction solution and the luminescent substrate reagent.

The sample detection device is configured to detect a luminescent intensity of the to-be-detected solution.

The controller is further configured to: control the magnetic separation device to perform both the magnetic separation cleaning operation in the first detection process and the magnetic separation cleaning operation in the second detection process; and control the same substrate distribution device to perform both the substrate distribution action in the first detection process and the substrate distribution action in the second detection process.

As an implementation, the controller may be further configured to perform an item calibration process for a first detection item, including: controlling the first sample dispensing component to aspirate an item calibrator from a second calibrator vessel and distribute the item calibrator into the reaction vessel, controlling the reagent distribution device to aspirate the reagent from the reagent vessel and distribute the reagent into the reaction vessel; controlling the sample detection device to detect a calibration solution prepared from at least the item calibrator and the reagent in the reaction vessel; and obtaining the first calibration data corresponding to the first detection item based on the detection information fed back by the sample detection device.

The controller may be further configured to perform a second detection process for the first detection item, including: controlling the second sample dispensing component to perform the sample distribution action, controlling the reagent distribution device to perform the reagent distribution action, controlling the sample detection device to detect the to-be-detected solution prepared from at least the sample distributed by the second sample dispensing component and the reagent distributed by the reagent distribution device, obtaining the second detection data based on the detection information fed back by the sample detection device, and obtaining the second detection result based on the second detection data and the first calibration data corresponding to the first detection item.

A second object of the invention is to provide a sample analyzer, and the sample analyzer includes a sample distribution device, a reagent distribution device, a sample detection device, and a controller.

The sample distribution device includes a first sample dispensing component and a second sample dispensing component. Each of the first sample dispensing component and the second sample dispensing component is configured to perform a sample distribution action including aspirating a sample from a sample vessel and dispensing at least a portion of the aspirated sample into a reaction vessel. The first sample dispensing component includes a first sample needle, the second sample dispensing component includes a second sample needle, and the first sample needle and the second sample needle are two sample needles capable of performing the sample distribution action independently of each other.

The reagent distribution device is configured to perform a reagent distribution action including aspirating a reagent from a reagent vessel and dispensing at least a portion of the aspirated reagent into the reaction vessel.

The sample detection device is configured to detect a to-be-detected solution prepared from at least the sample distributed by the sample distribution device and the reagent distributed by the reagent distribution device.

The controller is configured to perform an item calibration process for a first detection item, including: controlling the first sample dispensing component to aspirate an item calibrator from a second calibrator vessel and distribute the item calibrator into the reaction vessel, controlling the reagent distribution device to aspirate the reagent from the reagent vessel and distribute the reagent into the reaction vessel; controlling the sample detection device to detect a calibration solution prepared from at least the item calibrator and the reagent in the reaction vessel; and obtaining first calibration data corresponding to the first detection item based on detection information fed back by the sample detection device.

The controller is further configured to perform a second detection process for the first detection item, including: controlling the second sample dispensing component to perform the sample distribution action, controlling the reagent distribution device to perform the reagent distribution action, controlling the sample detection device to detect the to-be-detected solution prepared from at least the sample distributed by the second sample dispensing component and the reagent distributed by the reagent distribution device, obtaining second detection data based on the detection information fed back by the sample detection device, and obtaining a second detection result based on the second detection data and the first calibration data corresponding to the first detection item.

As an implementation, the sample analyzer may further include a distribution amount detection device.

The controller is further configured to perform a sample addition calibration process including: controlling the first sample dispensing component to aspirate a sample addition calibrator and distribute the sample addition calibrator into the reaction vessel; controlling the distribution amount detection device to detect a first calibrator distribution amount distributed by the first sample dispensing component into the reaction vessel; controlling the second sample dispensing component to aspirate the sample addition calibrator and distribute the sample addition calibrator into the reaction vessel; controlling the distribution amount detection device to detect a second calibrator distribution amount distributed by the second sample dispensing component into the reaction vessel; and correcting, based on the first calibrator distribution amount and the second calibrator distribution amount, a sample distribution amount of the first sample dispensing component upon performing the sample distribution action and/or a sample distribution amount of the second sample dispensing component upon performing the sample distribution action, such that a deviation between a sample distribution accuracy of the first sample dispensing component and a sample distribution accuracy of the second sample dispensing component is less than or equal to a first preset value.

As an implementation, the first sample dispensing component may further include a first aspirating and dispensing power part configured to provide a driving force for the first sample needle to perform aspirating and dispensing actions.

The second sample dispensing component may further include a second aspirating and dispensing power part configured to provide a driving force for the second sample needle to perform aspirating and dispensing actions.

The first aspirating and dispensing power part and the second aspirating and dispensing power part are the same aspirating and dispensing power part.

As an implementation, the first sample needle may be configured with a first identification code associated with a sample addition correction parameter of the first sample needle, and the sample analyzer further includes a first information acquisition part configured to identify the first identification code. The controller is further configured to: acquire the sample addition correction parameter of the first sample needle based on information fed back by the first information acquisition part by identifying the first identification code; and correct, based on at least the sample addition correction parameter of the first sample needle, a sample distribution amount of the first sample dispensing component upon performing the sample distribution action, such that a deviation between a sample distribution accuracy of the first sample dispensing component and a sample distribution accuracy of the second sample dispensing component is less than or equal to a first preset value.

And/or, the second sample needle may be configured with a second identification code associated with a sample addition correction parameter of the second sample needle, and the sample analyzer further includes a first information acquisition part configured to identify the second identification code. The controller is further configured to: acquire the sample addition correction parameter of the second sample needle based on information fed back by the first information acquisition part by identifying the second identification code; and correct, based on at least the sample addition correction parameter of the second sample needle, a sample distribution amount of the second sample dispensing component upon performing the sample distribution action, such that a deviation between a sample distribution accuracy of the first sample dispensing component and a sample distribution accuracy of the second sample dispensing component is less than or equal to a first preset value.

A third object of the invention is to provide a sample analyzer, and the sample analyzer includes a sample distribution device, a reagent distribution device, a sample detection device, and a controller.

The sample distribution device includes a first sample dispensing component and a second sample dispensing component. Each of the first sample dispensing component and the second sample dispensing component is configured to perform a sample distribution action including aspirating a sample from a sample vessel and dispensing at least a portion of the aspirated sample into a reaction vessel. The first sample dispensing component includes a first sample needle, the second sample dispensing component includes a second sample needle, and the first sample needle and the second sample needle are two sample needles capable of performing the sample distribution action independently of each other.

The reagent distribution device is configured to perform a reagent distribution action including aspirating a reagent from a reagent vessel and dispensing at least a portion of the aspirated reagent into the reaction vessel.

The sample detection device is configured to detect a to-be-detected solution prepared from at least the sample distributed by the sample distribution device and the reagent distributed by the reagent distribution device.

The controller is configured to perform a first detection process including: controlling the first sample dispensing component to perform the sample distribution action, controlling the reagent distribution device to perform the reagent distribution action, controlling the sample detection device to detect the to-be-detected solution prepared from at least the sample distributed by the first sample dispensing component and the reagent distributed by the reagent distribution device, obtaining first detection data based on detection information fed back by the sample detection device, and obtaining a first detection result based on the first detection data and first calibration data.

The controller is further configured to perform a second detection process including: controlling the second sample dispensing component to perform the sample distribution action, controlling the reagent distribution device to perform the reagent distribution action, controlling the sample detection device to detect the to-be-detected solution prepared from at least the sample distributed by the second sample dispensing component and the reagent distributed by the reagent distribution device, obtaining second detection data based on the detection information fed back by the sample detection device, and obtaining a second detection result based on the second detection data and second calibration data.

The sample analyzer is configured with a first operation mode and a second operation mode.

In the first operation mode, the controller is configured to set the first calibration data and the second calibration data to be the same calibration data, when a detection item performed by the first detection process and a detection item performed by the second detection process are the same detection item.

In the second operation mode, the controller is configured to set the first calibration data and the second calibration data to be two different calibration data, when the detection item performed by the first detection process and the detection item performed by the second detection process are the same detection item.

As an implementation, the controller may be configured to perform an item calibration process for a first detection item, including: controlling the first sample dispensing component to aspirate an item calibrator from a second calibrator vessel and distribute the item calibrator into the reaction vessel, controlling the reagent distribution device to aspirate the reagent from the reagent vessel and distribute the reagent into the reaction vessel; controlling the sample detection device to detect a calibration solution prepared from at least the item calibrator and the reagent in the reaction vessel; and obtaining the first calibration data corresponding to the first detection item based on the detection information fed back by the sample detection device.

In the first operation mode, the controller is configured to perform a second detection process for the first detection item, including: controlling the second sample dispensing component to perform the sample distribution action, controlling the reagent distribution device to perform the reagent distribution action, controlling the sample detection device to detect the to-be-detected solution prepared from at least the sample distributed by the second sample dispensing component and the reagent distributed by the reagent distribution device, obtaining second detection data based on the detection information fed back by the sample detection device, and obtaining a second detection result based on the second detection data and the first calibration data corresponding to the first detection item.

A fourth object of the invention is to provide a sample analyzer, and the sample analyzer includes a sample distribution device, a reagent distribution device, a sample detection device, and a controller.

The sample distribution device includes a first sample dispensing component and a second sample dispensing component. Each of the first sample dispensing component and the second sample dispensing component is configured to perform a sample distribution action including aspirating a sample from a sample vessel and dispensing at least a portion of the aspirated sample into a reaction vessel. The first sample dispensing component includes a first sample needle, the second sample dispensing component includes a second sample needle, and the first sample needle and the second sample needle are two sample needles capable of performing the sample distribution action independently of each other.

The reagent distribution device is configured to perform a reagent distribution action including aspirating a reagent from a reagent vessel and dispensing at least a portion of the aspirated reagent into the reaction vessel.

The sample detection device is configured to detect a to-be-detected solution prepared from at least the sample distributed by the sample distribution device and the reagent distributed by the reagent distribution device.

The controller is configured to perform a first detection process including: controlling the first sample dispensing component to perform the sample distribution action, controlling the reagent distribution device to perform the reagent distribution action, controlling the sample detection device to detect a to-be-detected solution prepared from at least the sample distributed by the first sample dispensing component and the reagent distributed by the reagent distribution device, obtaining first detection data based on detection information fed back by the sample detection device, and obtaining a first detection result based on the first detection data and first calibration data.

The controller is further configured to perform a second detection process including: controlling the second sample dispensing component to perform the sample distribution action, controlling the reagent distribution device to perform the reagent distribution action, controlling the sample detection device to detect the to-be-detected solution prepared from at least the sample distributed by the second sample dispensing component and the reagent distributed by the reagent distribution device, obtaining second detection data based on the detection information fed back by the sample detection device, and obtaining a second detection result based on the second detection data and second calibration data.

The controller is further configured to: set the first calibration data and the second calibration data to be the same calibration data, when a detection item performed by the first detection process and a detection item performed by the second detection process are both a first detection item; and set the first calibration data and the second calibration data to be two different calibration data, when the detection item performed by the first detection process and the detection item performed by the second detection process are both a second detection item. The first detection item and the second detection item are two different detection items.

As an implementation, the controller may be further configured to perform an item calibration process for the first detection item, including: controlling the first sample dispensing component to aspirate an item calibrator from a second calibrator vessel and distribute the item calibrator into the reaction vessel, controlling the reagent distribution device to aspirate the reagent from the reagent vessel and distribute the reagent into the reaction vessel, controlling the sample detection device to detect a calibration solution prepared from at least the item calibrator and the reagent in the reaction vessel, and obtaining the first calibration data corresponding to the first detection item based on the detection information fed back by the sample detection device.

The controller is further configured to perform the second detection process for the first detection item, including: controlling the second sample dispensing component to perform the sample distribution action, controlling the reagent distribution device to perform the reagent distribution action, controlling the sample detection device to detect the to-be-detected solution prepared from at least the sample distributed by the second sample dispensing component and the reagent distributed by the reagent distribution device, obtaining the second detection data based on the detection information fed back by the sample detection device, and obtaining the second detection result based on the second detection data and the first calibration data corresponding to the first detection item.

A fifth object of the invention is to provide a sample analyzer, and the sample analyzer includes a sample distribution device, a reagent distribution device, a sample detection device, and a controller.

The sample distribution device is configured to perform a sample distribution action including aspirating a sample from a sample vessel and dispensing at least a portion of the aspirated sample into a reaction vessel.

The reagent distribution device includes a first reagent dispensing component and a second reagent dispensing component. Each of the first reagent dispensing component and the second reagent dispensing component is configured to perform a reagent distribution action including aspirating a reagent from a reagent vessel and dispensing at least a portion of the aspirated reagent into the reaction vessel. The first reagent dispensing component includes a first reagent needle, the second reagent dispensing component includes a second reagent needle, and the first reagent needle and the second reagent needle are two reagent needles capable of performing the reagent distribution action independently of each other.

The sample detection device is configured to detect a to-be-detected solution prepared from at least the sample distributed by the sample distribution device and the reagent distributed by the reagent distribution device.

The controller is configured to perform a third detection process including: controlling the sample distribution device to perform the sample distribution action, controlling the first reagent dispensing component to perform the reagent distribution action, controlling the sample detection device to detect the to-be-detected solution prepared from at least the sample distributed by the sample distribution device and the reagent distributed by the first reagent dispensing component, obtaining third detection data based on detection information fed back by the sample detection device, and obtaining a third detection result based on the third detection data and third calibration data.

The controller is further configured to perform a fourth detection process including: controlling the sample distribution device to perform the sample distribution action, controlling the second reagent dispensing component to perform the reagent distribution action, controlling the sample detection device to detect the to-be-detected solution prepared from at least the sample distributed by the sample distribution device and the reagent distributed by the second reagent dispensing component, obtaining fourth detection data based on the detection information fed back by the sample detection device, and obtaining a fourth detection result based on the fourth detection data and fourth calibration data.

When a detection item performed by the third detection process and a detection item performed by the fourth detection process are the same detection item, the third calibration data and the fourth calibration data are the same calibration data.

As an implementation, the controller may be further configured to perform an item calibration process for a first detection item, including: controlling the sample distribution device to aspirate an item calibrator from a second calibrator vessel and distribute the item calibrator into the reaction vessel, controlling the first reagent dispensing component to aspirate the reagent from the reagent vessel and distribute the reagent into the reaction vessel, controlling the sample detection device to detect a calibration solution prepared from at least the item calibrator and the reagent in the reaction vessel, and obtaining the third calibration data corresponding to the first detection item based on the detection information fed back by the sample detection device.

The controller is further configured to perform the fourth detection process for the first detection item, including: controlling the sample distribution device to perform the sample distribution action, controlling the second reagent dispensing component to perform the reagent distribution action, controlling the sample detection device to detect the to-be-detected solution prepared from at least the sample distributed by the sample distribution device and the reagent distributed by the second reagent dispensing component, obtaining the fourth detection data based on the detection information fed back by the sample detection device, and obtaining the fourth detection result based on the fourth detection data and the third calibration data corresponding to the first detection item.

A sixth object of the invention is to provide a sample analyzer, and the sample analyzer includes a pipetting device, a sample detection device, and a controller.

The pipetting device includes a first pipetting component and a second pipetting component. Each of the first pipetting component and the second pipetting component is configured to perform a liquid distribution action including: aspirating a sample from a sample vessel and dispensing at least a portion of the aspirated sample into a reaction vessel; and aspirating a reagent from a reagent vessel and dispensing at least a portion of the aspirated reagent into the reaction vessel. The first pipetting component includes a first pipetting needle, the second pipetting component includes a second pipetting needle, and the first pipetting needle and the second pipetting needle are two pipetting needles capable of performing the liquid distribution action independently of each other.

The sample detection device is configured to detect a to-be-detected solution prepared from at least the sample and the reagent distributed by the pipetting device.

The controller is configured to perform a fifth detection process including: controlling the first pipetting component to perform the liquid distribution action, controlling the sample detection device to detect the to-be-detected solution prepared from at least the sample and the reagent distributed by the first pipetting component, obtaining fifth detection data based on detection information fed back by the sample detection device, and obtaining a fifth detection result based on the fifth detection data and fifth calibration data

The controller is further configured to perform a sixth detection process including: controlling the second pipetting component to perform the liquid distribution action, controlling the sample detection device to detect the to-be-detected solution prepared from at least the sample and the reagent distributed by the second pipetting component, obtaining sixth detection data based on the detection information fed back by the sample detection device, and obtaining a sixth detection result based on the sixth detection data and sixth calibration data.

When a detection item performed by the fifth detection process and a detection item performed by the sixth detection process are the same detection item, the fifth calibration data and the sixth calibration data are the same calibration data.

As an implementation, the controller may be further configured to perform an item calibration process for a first detection item, including: controlling the first pipetting component to aspirate an item calibrator from a second calibrator vessel and distribute the item calibrator into the reaction vessel, controlling the first pipetting component to aspirate the reagent from the reagent vessel and distribute the reagent into the reaction vessel, controlling the sample detection device to detect a calibration solution prepared from at least the item calibrator and the reagent in the reaction vessel, and obtaining the fifth calibration data corresponding to the first detection item based on the detection information fed back by the sample detection device.

The controller may be configured to perform the sixth detection process for the first detection item, including: controlling the second pipetting component to perform the liquid distribution action, controlling the sample detection device to detect the to-be-detected solution prepared from at least the sample and the reagent distributed by the second pipetting component, obtaining the sixth detection data based on the detection information fed back by the sample detection device, and obtaining the sixth detection result based on the sixth detection data and the fifth calibration data corresponding to the first detection item.

According to the sample analyzer provided in the invention, the sample distribution device is configured to include the first sample needle and the second sample needle capable of performing the sample distribution action independently of each other, and when the detection item corresponding to the sample distribution action performed by the first sample needle and the detection item corresponding to the sample distribution action performed by the second sample needle are the same detection item, the same calibration data is used to calibrate the detection data obtained by detecting the sample distributed by the first sample needle and the detection data obtained by detecting the sample distributed by the second sample needle. In this way, on one hand, since the first sample needle and the second sample needle may be configured to perform the sample distribution action for the same detection item, a purpose of fully utilizing each sample needle to improve detection efficiency of the sample analyzer is achieved, and an undesirable phenomenon that a certain sample needle is too busy while another sample needle is idle can be avoided. On the other hand, since the detection data obtained by the first sample needle and the detection data obtained by the second sample needle are calibrated by using the same calibration data when the first sample needle and the second sample needle perform the sample distribution action for the same detection item, it is unnecessary to perform the item calibration for each needle, which is beneficial for reducing the calibration cost and improving the calibration efficiency, so that the detection efficiency, the calibration cost and the calibration efficiency can be balanced well.

### BRIEF DESCRIPTION OF THE DRAWINGS

In order to explain technical solutions in the related art or embodiments of the invention more clearly, drawings required to be used in descriptions of the related art or the embodiments will be briefly introduced below. It is apparent that the drawings in the following descriptions are only some embodiments of the invention, and other drawings may also be obtained by those of ordinary skill in the art based on structures shown in these drawings without paying any creative work.
FIG. 1 is a schematic composition diagram of a sample analyzer provided in a first embodiment of the invention.
FIG. 2 is a schematic structural diagram of the sample analyzer provided in the first embodiment of the invention.
FIG. 3 is a schematic diagram of a liquid path of a first sample dispensing component provided in the first embodiment of the invention.
FIG. 4 is a schematic diagram of a liquid path of a second sample dispensing component provided in the first embodiment of the invention.
FIG. 5 is a schematic diagram of a liquid path of a sample distribution device provided in a sixth embodiment of the invention.
FIG. 6 is a schematic structural diagram of a sample analyzer provided in a twelfth embodiment of the invention.

List of reference numerals:
10, sample analyzer; 100, sample distribution device; 110, first sample dispensing component; 111, first sample needle; 112, first aspirating and dispensing power part; 113, first cleaning driving part; 114, first cleaning control valve; 115, first liquid path; 116, third cleaning control valve; 117, first sample addition control valve; 118, third liquid path; 119, fourth liquid path; 120, second sample dispensing component; 121, second sample needle; 122, second aspirating and dispensing power part; 123, second cleaning driving part; 124, second cleaning control valve; 125, second liquid path; 126, fourth cleaning control valve; 127, second sample addition control valve; 128, fifth liquid path; 129, sixth liquid path; 200, reagent distribution device; 210, first reagent dispensing component; 220, second reagent dispensing component; 300, sample detection device; 400, controller; 500, magnetic separation device; 600, sample management device; 700 sample delivery device; 800, reagent storage device; 900, reaction device; 101, substrate distribution device; 102, reaction vessel supply device; 103, reaction vessel recovery device; 104, transfer device; 20, cleaning liquid supply device.

### DETAILED DESCRIPTION

Technical solutions in the embodiments of the invention will be clearly and completely described below with reference to the drawings in the embodiments of the invention. It is apparent that the described embodiments are only a part of the embodiments of the invention, rather than all of the embodiments. All other embodiments obtained by those of ordinary skill in the art based on the embodiments of the invention without paying any creative work shall fall within the scope of protection of the invention.

Furthermore, the technical solutions in the various embodiments may be combined with each other. However, such combination must be on the basis that those of ordinary skill in the art may implement it. When the technical solutions conflict with each other or a combination of the technical solutions cannot be implemented, it should be considered that the combination of the technical solutions is not present and does not fall within the scope of protection of the invention.

The embodiments of the invention are applicable to a sample analyzer in which the same target liquid needs to be pipetted through at least two pipettes, and the target liquid includes, but is not limited to, a sample, a reagent, etc.

### First embodiment

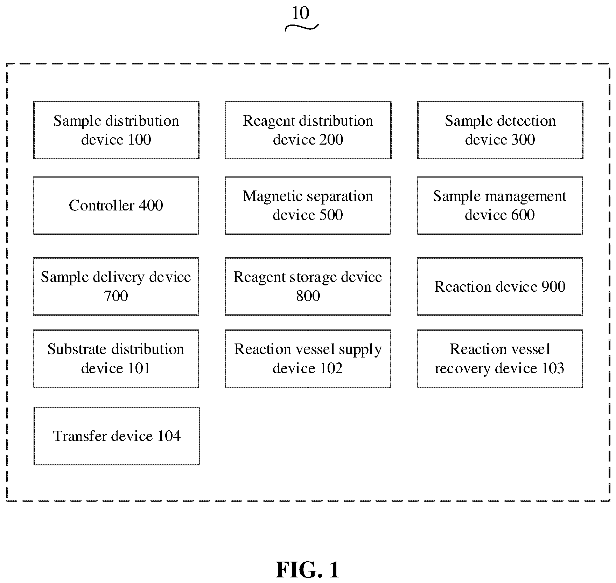

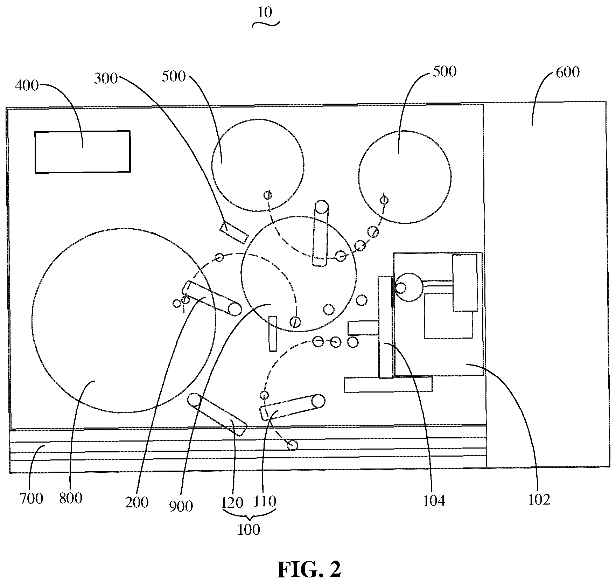

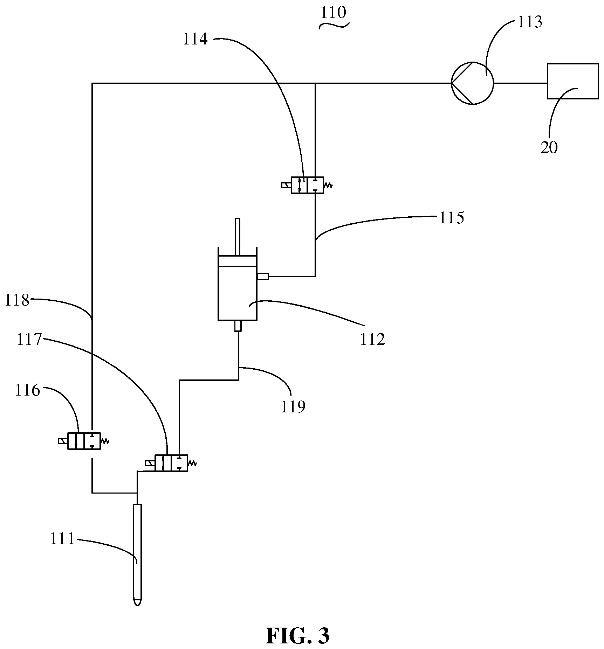

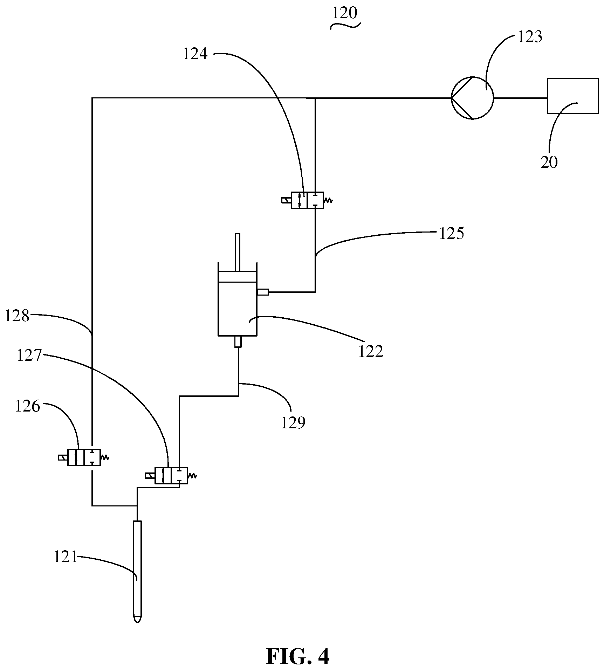

As shown in FIG. 1 to FIG. 4, a sample analyzer 10 provided in the first embodiment of the invention includes a sample distribution device 100 and a sample detection device 300. The sample distribution device 100 is configured to perform a sample distribution action including aspirating a sample from a sample vessel and dispensing at least a portion of the aspirated sample into a reaction vessel. The reaction vessel provides a reaction site for the sample. The sample detection device 300 is configured to detect a to-be-detected solution prepared from at least the sample.

As an implementation, the sample distribution device 100 includes a first sample dispensing component 110 and a second sample dispensing component 120. Each of the first sample dispensing component 110 and the second sample dispensing component 120 is configured to perform the sample distribution action including: aspirating the sample from the sample vessel and dispensing at least a portion of the aspirated sample into the reaction vessel. The first sample dispensing component 110 and the second sample dispensing component 120 are two dispensing components of which at least a portion of their parts are capable of performing the sample distribution action independently of each other, that is, at least a portion of the parts having the same function in the first sample dispensing component 110 and the second sample dispensing component 120 are not shared. For example, the first sample dispensing component 110 and the second sample dispensing component 120 may share a portion of their parts and may not share at least a portion of their parts, or the first sample dispensing component 110 and the second sample dispensing component 120 may not share any of their parts. In the implementation, each of the first sample dispensing component 110 and the second sample dispensing component 120 may be configured to perform the sample distribution action, such that when a batch of samples need to be detected by the sample analyzer 10, the first sample dispensing component 110 may perform the sample distribution action for one part of the samples, and the second sample dispensing component 120 may perform the sample distribution action for another part of the samples. Therefore, it is beneficial for improving a distribution efficiency of the batch of samples and is further beneficial for improving a detection efficiency of the whole analyzer.

As an implementation, the first sample dispensing component 110 includes a first sample needle 111, the second sample dispensing component 120 includes a second sample needle 121, and the first sample needle 111 and the second sample needle 121 are two sample needles capable of performing the sample distribution action independently of each other. The first sample needle 111 and the second sample needle 121 are two different sample needles. Here, different sample needles mainly mean that they are not the same needle, and do not mean that shapes and sizes of two needles are different. On the contrary, the shapes and sizes of the two needles may be the same. In the implementation, the first sample dispensing component 110 and the second sample dispensing component 120 do not share the sample needle, such that at least two sample needles of the sample distribution device 100 may operate simultaneously (here simultaneous operation may mean that the two sample needles perform the same action simultaneously; or, one of the sample needles may perform an action, and the other one may perform another action), which is beneficial for improving the distribution efficiency of the batch of samples.

As an implementation, the sample analyzer 10 further includes a reagent distribution device 200 configured to perform a reagent distribution action including: aspirating a reagent from a reagent vessel and dispensing at least a portion of the aspirated reagent into the reaction vessel. The sample detection device 300 is configured to detect a to-be-detected solution prepared from at least the sample distributed by the sample distribution device 100 and the reagent distributed by the reagent distribution device 200. The sample analyzer 10 in the embodiment is applicable to a scenario where the reagent is distributed by the reagent distribution device 200 into the reaction vessel. In a specific application, as an alternative embodiment, the sample analyzer 10 may not be provided with the reagent distribution device 200, and this alternative embodiment is applicable to a scenario where the reagent is pre-stored in the reaction vessel.

As an implementation, the sample analyzer 10 further includes a controller 400 configured to control operations of at least the first sample dispensing component 110, the second sample dispensing component 120, the reagent distribution device 200 and the sample detection device 300.

As an implementation, the controller 400 is configured to perform a first detection process including: controlling the first sample dispensing component 110 to perform the sample distribution action, controlling the reagent distribution device 200 to perform the reagent distribution action, controlling the sample detection device 300 to detect the to-be-detected solution prepared from at least the sample distributed by the first sample dispensing component 110 and the reagent distributed by the reagent distribution device 200, obtaining first detection data based on detection information fed back by the sample detection device 300, and obtaining a first detection result based on the first detection data and first calibration data. The controller 400 is further configured to perform a second detection process including: controlling the second sample dispensing component 120 to perform the sample distribution action, controlling the reagent distribution device 200 to perform the reagent distribution action, controlling the sample detection device 300 to detect the to-be-detected solution prepared from at least the sample distributed by the second sample dispensing component 120 and the reagent distributed by the reagent distribution device 200, obtaining second detection data based on the detection information fed back by the sample detection device 300, and obtaining a second detection result based on the second detection data and second calibration data. Difference between the first detection process and the second detection process mainly lies in that their sample dispensing components configured to perform the sample distribution action are different. Specifically, the sample distribution action in the first detection process is performed by the first sample dispensing component 110, and the sample distribution action in the second detection process is performed by the second sample dispensing component 120. Both the first detection process and the second detection process need to calibrate the detection data by using the calibration data, to obtain a final detection result.

As an implementation, when a detection item performed by the first detection process and a detection item performed by the second detection process are the same detection item, the first calibration data and the second calibration data are the same calibration data. The same detection item mentioned here means that the same target parameter is detected by using the same detection method in the two detection items. The same detection method specifically means that the same detection principle and detection steps are used, but parts for performing the same step may be different. In the implementation, the first sample needle 111 and the second sample needle 121 may be configured to perform the sample distribution action for the same detection item, that is, the first detection process and the second detection process may be configured to perform the same detection item on two samples respectively. In this way, when a certain detection item needs to be performed in batch, the first sample needle 111 may be controlled to perform the sample distribution action for one part of the detection item, the second sample needle 121 may be controlled to perform the sample distribution action for another part of the detection item, and the first sample needle 111 and the second sample needle 121 may be controlled to operate simultaneously or alternately, such that the first sample needle 111 and the second sample needle 121 may be fully utilized to achieve a purpose of improving the detection efficiency of the sample analyzer 10. Furthermore, since the same calibration data is used for calibration when the first sample needle 111 and the second sample needle 121 perform the sample distribution action for the same detection item, it is unnecessary to perform an item calibration on each of the first sample needle 111 and the second sample needle 121, which is beneficial for reducing the calibration cost and improving the calibration efficiency, and the detection efficiency, the calibration cost and the calibration efficiency can be balanced well.

As an implementation, the first sample dispensing component 110 further includes a first aspirating and dispensing power part 112 configured to provide a driving force for the first sample needle 111 to perform aspirating and dispensing actions. The second sample dispensing component 120 further includes a second aspirating and dispensing power part 122 configured to provide a driving force for the second sample needle 121 to perform aspirating and dispensing actions. The first aspirating and dispensing power part 112 is a power source for aspirating and dispensing of the first sample dispensing component 110, and the second aspirating and dispensing power part 122 is a power source for aspirating and dispensing of the second sample dispensing component 120. Each of the first aspirating and dispensing power part 112 and the second aspirating and dispensing power part 122 may be a syringe or a plunger pump.

As an implementation, the first sample dispensing component 110 further includes a first movement power part configured to drive the first sample needle 111 to move spatially, such that the first sample needle 111 is moved to different working positions respectively, such as a standby position, a sample aspirating position, a dispensing position, a cleaning position, etc.

As an implementation, the second sample dispensing component 120 further includes a second movement power part configured to drive the second sample needle 121 to move spatially, such that the second sample needle 121 is moved to different working positions respectively, such as the standby position, the sample aspirating position, the dispensing position, the cleaning position, etc.

As an implementation, the first sample dispensing component 110 further includes a first cleaning driving part 113 configured to drive at least a cleaning liquid provided by a cleaning liquid supply device 20 to rinse the first sample needle 111. The second sample dispensing component 120 further includes a second cleaning driving part 123 configured to drive at least the cleaning liquid provided by the cleaning liquid supply device 20 to rinse the second sample needle 121.

As an implementation, the first sample dispensing component 110 further includes a first cleaning control valve 114 and a first liquid path 115. The first liquid path 115 is connected between the first cleaning driving part 113 and the first aspirating and dispensing power part 112, the first cleaning driving part 113 is configured to drive at least the cleaning liquid provided by the cleaning liquid supply device 20 to flow toward the first liquid path 115, and the first cleaning control valve 114 is arranged on the first liquid path 115 to control on/off of the first liquid path 115. The second sample dispensing component 120 further includes a second cleaning control valve 124 and a second liquid path 125. The second liquid path 125 is connected between the second cleaning driving part 123 and the second aspirating and dispensing power part 122, the second cleaning driving part 123 is configured to drive at least the cleaning liquid provided by the cleaning liquid supply device 20 to flow toward the second liquid path 125, and the second cleaning control valve 124 is arranged on the second liquid path 125 to control on/off of the second liquid path 125.

As an implementation, the first cleaning driving part 113 and the second cleaning driving part 123 are the same part, the first cleaning control valve 114 and the second cleaning control valve 124 are the same part, and the first liquid path 115 and the second liquid path 125 are the same liquid path. Or, the first cleaning driving part 113 and the second cleaning driving part 123 may be two different parts, the first cleaning control valve 114 and the second cleaning control valve 124 may be two different parts, and the first liquid path 115 and the second liquid path 125 may be two different liquid paths.

As an implementation, the first sample dispensing component 110 further includes a third cleaning control valve 116, a first sample addition control valve 117, a third liquid path 118, and a fourth liquid path 119. The third liquid path 118 is connected between the first cleaning driving part 113 and the first sample needle 111, the fourth liquid path 119 is connected between the first aspirating and dispensing power part 112 and the first sample needle 111, the third cleaning control valve 116 is arranged on the third liquid path 118 to control on/off of the third liquid path 118, and the first sample addition control valve 117 is arranged on the fourth liquid path 119 to control on/off of the fourth liquid path 119. The second sample dispensing component 120 further includes a fourth cleaning control valve 126, a second sample addition control valve 127, a fifth liquid path 128, and a sixth liquid path 129. The fifth liquid path 128 is connected between the second cleaning driving part 123 and the second sample needle 121, the sixth liquid path 129 is connected between the second aspirating and dispensing power part 122 and the second sample needle 121, the fourth cleaning control valve 126 is arranged on the fifth liquid path 128 to control on/off of the fifth liquid path 128, and the second sample addition control valve 127 is arranged on the sixth liquid path 129 to control on/off of the sixth liquid path 129.

As an implementation, a deviation between a sample distribution accuracy of the first sample dispensing component 110 and a sample distribution accuracy of the second sample dispensing component 120 is less than or equal to a first preset value, and the first preset value is equal to or greater than zero and less than or equal to 5%. In this way, a sample distribution amount of the first sample dispensing component 110 upon performing the sample distribution action may be substantially the same as a sample distribution amount of the second sample dispensing component 120 upon performing the sample distribution action, thereby reducing impact on a sample detection result when the sample distribution actions are performed by using the first sample dispensing component 110 and the second sample dispensing component 120 respectively, and improving accuracy of the detection result obtained by using the same calibration data when the sample distribution action for the same detection item is performed by the first sample needle 111 and the second sample needle 121 respectively.

As an implementation, the first preset value is less than or equal to 2%, so as to be more beneficial for reducing a difference between the sample distribution amount of the first sample dispensing component 110 upon performing the sample distribution action and the sample distribution amount of the second sample dispensing component 120 upon performing the sample distribution action. Therefore, consistency of the sample distribution amount of the first sample dispensing component 110 with that of the second sample dispensing component 120 can be ensured, and it is beneficial for further improving the accuracy of the detection result obtained by using the same calibration data when the sample distribution action for the same detection item is performed by the first sample needle 111 and the second sample needle 121 respectively.

As an implementation, the sample analyzer 10 further includes a reaction device 900 configured to carry the reaction vessel to incubate the sample and the reagent in the reaction vessel. The controller 400 is further configured to: control the reagent distribution device 200 to perform both the reagent distribution action in the first detection process and the reagent distribution action in the second detection process; control the reaction device 900 to incubate both the sample and the reagent in the first detection process and the sample and the reagent in the second detection process; and control the sample detection device 300 to detect both the to-be-detected solution in the first detection process and the to-be-detected solution in the second detection process. In the implementation, the first detection process and the second detection process share the reagent distribution device 200, the reaction device 900 and the sample detection device 300, which is beneficial for ensuring consistency of reagent, reaction and detection systems in the first detection process and the second detection process. In this way, when a difference between sample distribution amounts of different sample distribution systems (i.e., the first sample dispensing component 110 and the second sample dispensing component 120) is reduced, consistency of the detection result may be ensured.

As an implementation, the reagent distribution device 200 includes a first reagent dispensing component, the first reagent dispensing component includes a first reagent needle and a third aspirating and dispensing power part, and the third aspirating and dispensing power part is configured to drive the first reagent needle to aspirate the reagent from the reagent vessel and drive the first reagent needle to dispense at least a portion of the aspirated reagent into the reaction vessel. The reaction device 900 includes a first reaction tray configured to carry the reaction vessel to incubate the sample and the reagent. The detection device includes a first optical receiving part configured to perform an optical detection on the to-be-detected solution in the reaction vessel. The controller 400 is further configured to: control the third aspirating and dispensing power part to drive the first reagent needle to perform both the reagent distribution action in the first detection process and the reagent distribution action in the second detection process; control the first reaction tray to incubate both the sample and the reagent in the first detection process and the sample and the reagent in the second detection process; and control the first optical receiving part to perform both the optical detection in the first detection process and the optical detection in the second detection process. In the implementation, the first detection process and the second detection process share the reagent needle, the reagent aspirating and dispensing power part, the first reaction tray and the first optical receiving part, which is beneficial for ensuring the consistency of the reagent, reaction and detection systems in the first detection process and the second detection process.

As an implementation, the sample analyzer 10 further includes a reagent storage device 800 configured to store the reagent vessel, and the reagent distribution device 200 is configured to aspirate the reagent from the reagent vessel located in the reagent storage device 800 and at a reagent aspiration position. In a specific application, as an alternative implementation, the reagent storage device 800 may not be provided in the sample analyzer 10, for example, the reagent vessel is placed at the reagent aspiration position by an operator.

As an implementation, the above sample analyzer 10 is an immunoassay analyzer. The immunoassay analyzer is configured to detect a blood sample for immunity-related parameters. Prior to the invention, the immunoassay analyzer in the related art either distributes all samples in the immunoassay analyzer by using a single-needle system, or distributes the samples for different detection items by using a multi-needle system respectively, or distributes different samples by using a multi-needle system for which the clinical item calibration needs to be performed separately, and none of these solutions can balance design requirements of the immunoassay analyzer on the high detection efficiency, the low calibration cost and the high calibration efficiency. In the immunoassay analyzer provided in this embodiment, the first sample needle 111 and the second sample needle 121 may be used for the same detection item and may share the same calibration data when they are used for the same detection item. In this way, on one hand, a purpose of improving an immunodetection efficiency may be achieved by parallel operation of the first sample needle 111 and the second sample needle 121; on the other hand, since it is unnecessary to perform the clinical item calibration on both the first sample needle 111 and the second sample needle 121, a multi-needle calibration cost of the immunoassay analyzer is reduced, and the calibration efficiency is improved. In a specific application, types of the sample analyzer 10 are not limited thereto, for example, as an alternative implementation, the sample analyzer 10 may be a biochemical analyzer, a blood routine cell analyzer, a blood coagulation analyzer, or the like, that is, the multi-sample needle system with the high-efficiency and low-cost in this embodiment may be used in other analyzers such as the biochemical analyzer, the blood routine cell analyzer, the blood coagulation analyzer, or the like, in addition to the immunoassay analyzer.

As an implementation, detection items performed by the immunoassay analyzer include at least an immunoluminescence detection item. An object of the immunoluminescence detection is to detect a content of a specific antigen or antibody in the sample. The reaction vessel is configured to carry at least the sample and the reagent, to generate an antigen-antibody conjugation reaction. The sample detection device 300 is configured to detect an optical signal of the to-be-detected solution. There are various impurities in the sample, and some impurities such as endogenous enzymes contained in the blood sample itself may affect a final detection system (i.e., a final to-be-detected solution), thereby affecting the accuracy of the detection result. Therefore, an execution process of the immunoluminescence detection needs to purify a target antigen or a target antibody, and then obtain a level (i.e., content) of the target antigen or the target antibody in the sample through a luminescence detection of a marker. To detect the level of the target antigen or the target antibody in the sample, in the implementation, a concentration of the target antigen or the target antibody is converted into a luminescent physical quantity. Since the antigen or the antibody itself does not have an ability of luminescence, conversion of luminescence may be performed by the antibody with a luminescent marker or the antigen with a luminescent marker.

As an implementation, the reaction vessel provides at least a reaction site for the sample and the reagent, so that a third reaction solution containing at least a first antigen-antibody conjugate is prepared by generating an antigen-antibody conjugation reaction between the target antigen in the sample and an antibody in the reagent or between the target antibody in the sample and an antigen in the reagent. In the implementation, an object of at least one sample detection item is to detect a content of the target antigen (a specific antigen) or the target antibody (a specific antibody) in the sample. When the object of one sample detection item is to detect the target antigen in the sample, the sample contains the target antigen, the reagent contains an antibody, and the first antigen-antibody conjugate is formed by generating an antigen-antibody conjugation reaction between the target antigen in the sample and the antibody in the reagent. When the object of one sample detection item is to detect the target antibody in the sample, the sample contains the target antibody, the reagent contains an antigen, and the first antigen-antibody conjugate is formed by generating an antigen-antibody conjugation reaction between the target antibody in the sample and the antigen in the reagent.

As an implementation, the sample analyzer 10 further includes a magnetic separation device 500 and a substrate distribution device 101. The above operation of performing, by the reagent distribution device 200, the reagent distribution action includes the following operations. A magnetic bead reagent is aspirated from a first reagent vessel, and the magnetic bead reagent is distributed into the reaction vessel. A second marker reagent is aspirated from a second reagent vessel, and the second marker reagent is distributed into the reaction vessel. The reaction device 900 is configured to carry the reaction vessel to incubate a liquid containing at least the sample, the magnetic bead reagent and the second marker reagent, to prepare a third reaction solution. The magnetic separation device 500 is configured to perform a magnetic separation cleaning operation on the third reaction solution, to prepare a fourth reaction solution. The substrate distribution device 101 is configured to perform a substrate distribution action including: aspirating a luminescent substrate reagent from a substrate reagent vessel and dispensing at least a portion of the aspirated luminescent substrate reagent into the reaction vessel, to prepare the to-be-detected solution from the fourth reaction solution and the luminescent substrate reagent. The sample detection device 300 is configured to detect a luminescent intensity of the to-be-detected solution. The magnetic bead reagent is a reagent containing magnetic beads. The second marker reagent is an antibody reagent with a luminescent marker or an antigen reagent with a luminescent marker. Before the magnetic separation cleaning operation is performed, the antigen-antibody conjugation reaction is generated between the sample and the reagent. In a magnetic separation cleaning process, operations of a magnetic adsorption, a liquid aspiration, an addition of a separation liquid, mixing and incubation may be performed. The magnetic separation cleaning operation is mainly intended to clean away impurities in the third reaction solution while remaining a to-be-detected portion, to obtain a purified fourth reaction solution. The liquid treated by the magnetic separation device 500 includes a clear liquid and a magnetic bead liquid, and in an implementation, the clear liquid is treated as a waste liquid, and the magnetic bead liquid forms the fourth reaction solution. In the implementation, the magnetic bead reagent and the second marker reagent are two reagents packaged in two reagent vessels respectively. In a specific application, as an alternative implementation, the magnetic bead reagent and the second marker reagent may also be integrated into a reagent to be packaged in the same reagent vessel.

As an implementation, the substrate distribution device 101 is configured to perform the substrate distribution action on the reaction vessel located in the magnetic separation device 500, and the substrate distribution device 101 and the reagent distribution device 200 are two different distribution devices. In a specific application, as an alternative implementation, the substrate distribution action may be performed by the reagent distribution device 200 on the reaction vessel located in the reaction device 900, that is, the substrate distribution device 101 and the reagent distribution device 200 may be the same distribution device.

As an implementation, the controller 400 is further configured to: control the magnetic separation device 500 to perform both the magnetic separation cleaning operation in the first detection process and the magnetic separation cleaning operation in the second detection process; and control the substrate distribution device 101 to perform both the substrate distribution action in the first detection process and the substrate distribution action in the second detection process. In the implementation, the first detection process and the second detection process share the magnetic separation device 500 and the substrate distribution device 101 in addition to the reagent distribution device 200, the reaction device 900 and the sample detection device 300, which is beneficial for ensuring the consistency of the reagent, reaction, magnetic separation, substrate and detection systems in the first detection process and the second detection process, and effectively avoiding influence of the reagent, reaction, magnetic separation, substrate and detection systems on the detection result. In this way, consistency of the detection result may be ensured by keeping the sample distribution system as consistent as possible.

As an implementation, the third aspirating and dispensing power part is configured to drive the first reagent needle to aspirate the magnetic bead reagent from the first reagent vessel and distribute the magnetic bead reagent into the reaction vessel, and drive the first reagent needle to aspirate the second marker reagent from the second reagent vessel and distribute the second marker reagent into the reaction vessel. The magnetic bead reagent contains magnetic beads, and the second marker reagent contains enzymes. The first reaction tray is configured to carry the reaction vessel to incubate the sample, the magnetic bead reagent and the second marker reagent. The magnetic separation device 500 is configured to perform the magnetic separation cleaning operation on a liquid obtained by incubating at least the sample, the magnetic bead reagent and the second marker reagent in the reaction vessel. The substrate distribution device 101 includes a substrate needle and a fourth aspirating and dispensing power part, and the fourth aspirating and dispensing power part is configured to drive the substrate needle to perform a substrate distribution action including: aspirating a luminescent substrate reagent from a substrate vessel and dispensing at least a portion of the aspirated luminescent substrate reagent into the reaction vessel, to prepare the to-be-detected solution. The controller 400 is further configured to: control the third aspirating and dispensing power part to drive the first reagent needle to perform both the reagent distribution action for the magnetic bead reagent in the first detection process and the reagent distribution action for the magnetic bead reagent in the second detection process; control the third aspirating and dispensing power part to drive the first reagent needle to perform both the reagent distribution action for the second marker reagent in the first detection process and the reagent distribution action for the second marker reagent in the second detection process; control the first reaction tray to incubate both the sample, the magnetic bead reagent and the second marker reagent in the first detection process and the sample, the magnetic bead reagent and the second marker reagent in the second detection process; control the magnetic separation device 500 to perform the magnetic separation cleaning operation on the liquid obtained by incubating at least the sample, the magnetic bead reagent and the second marker reagent in the reaction vessel in both the first detection process and the second detection process; control the fourth aspirating and dispensing power part to drive the substrate needle to perform both the substrate distribution action in the first detection process and the substrate distribution action in the second detection process; and control the first optical receiving part to perform both the optical detection in the first detection process and the optical detection in the second detection process.

As an implementation, the first antigen-antibody conjugate contained in the third reaction solution is formed by binding the antigen with the antibody by a sandwich method. For example, if the content of the target antigen in the sample will be detected, the magnetic bead reagent distributed by the reagent distribution device 200 contains an antibody, the second marker reagent is an antibody reagent with a luminescent marker, and the target antigen in the sample is sandwiched between the antibody of the magnetic bead reagent and the antibody of the second marker reagent. In this solution, a cell surface of the sample contains an antigen, a surface of the magnetic bead contains an antibody, and the second marker reagent contains an antibody. The target antigen in the sample may be specifically bound to the magnetic bead with a specific antibody and the antibody with a second luminescent marker respectively, thereby forming the first antigen-antibody conjugate of the magnetic bead-target antigen-luminescent marker antibody. If the content of the target antibody in the sample will be detected, the magnetic bead reagent distributed by the reagent distribution device 200 contains an antigen, the second marker reagent is an antigen reagent with a luminescent marker, and the target antibody in the sample is sandwiched between the antigen of the magnetic bead reagent and the antigen of the second marker reagent.

As an implementation, when the target antigen in the sample needs to be detected, a process of immunoluminescence detection by the sandwich method includes the following operations. In an initial mixing process of the sample with the reagent, the target antigen is bound to the magnetic bead with a specific antibody, and then the target antigen is specifically bound to the antibody with a luminescent marker in the reagent. At this time, a system of magnetic bead antibody-target antigen-luminescent marker antibody (i.e., the above first antigen-antibody conjugate) is generated. After the system of magnetic bead antibody-target antigen-luminescent marker antibody is generated, it enters a magnetic separation cleaning operation. Before the magnetic separation cleaning operation, the reaction system contains impurities, and the magnetic separation cleaning operation may clean away these impurities by way of liquid exchange and re-dispersion, while the to-be-detected target antigen remains in the reaction vessel, thereby achieving purification of the reaction solution. Finally, the purified fourth reaction solution is mixed with the luminescent substrate reagent, and a second luminescent substrate reagent emits light with a catalytic action of the second luminescent marker, and is collected and counted by the sample detection device 300 (such as a photometer, etc.). The controller 400 calculates a concentration value corresponding to the target antigen based on data fed back by the sample detection device 300, and obtains a level of the target antigen in the corresponding sample, to help a clinical judgment.

In a specific application, the antigen-antibody conjugate contained in the third reaction solution is not limited to being formed by binding the antigen with the antibody by the sandwich method, and in an alternative implementation, the antigen-antibody conjugate contained in the third reaction solution may be formed by binding the antigen with the antibody by a competitive method. In the alternative implementation, the antigen-antibody conjugate contained in the third reaction solution includes a first antigen-antibody conjugate formed by binding the target antigen in the sample with the antibody on the surface of the magnetic bead in the magnetic bead reagent, and a second antigen-antibody conjugate formed by binding the antigen in the second marker reagent with the antibody on the surface of the magnetic bead in the magnetic bead reagent. Since there is a limited number of antibodies on the magnetic beads, the target antigen in the sample and the antigen in the second marker reagent form a competitive relationship, that is, a luminescence value is inversely proportional to a concentration of a target antigen in the sample, and the concentration of the target antigen in the sample may be reversely calculated through the measured luminescence value.

As an implementation, an execution process of one detection item in the immunoassay analyzer includes the following operations. The sample, the magnetic bead reagent and the second marker reagent are added, to form a first mixed solution. The first mixed solution is uniformly mixed and incubated, to obtain the third reaction solution. Magnetic separation cleaning is performed on the third reaction solution, to obtain the fourth reaction solution. The luminescent substrate reagent is added into the fourth reaction solution, to obtain a second mixed solution. The second mixed solution is uniformly mixed and incubated, to obtain a to-be-detected solution. The to-be-detected solution is optically detected, to obtain a detection result.

As an implementation, the sample analyzer 10 further includes a distribution amount detection device. The controller 400 is further configured to perform a sample addition calibration process including: controlling the first sample dispensing component 110 to aspirate a sample addition calibrator and distribute the sample addition calibrator into the reaction vessel, and controlling the distribution amount detection device to detect a first calibrator distribution amount distributed by the first sample dispensing component 110 into the reaction vessel; controlling the second sample dispensing component 120 to aspirate the sample addition calibrator and distribute the sample addition calibrator into the reaction vessel, and controlling the distribution amount detection device to detect a second calibrator distribution amount distributed by the second sample dispensing component 120 into the reaction vessel; and correcting, based on the first calibrator distribution amount and the second calibrator distribution amount, a sample distribution amount of the first sample dispensing component 110 upon performing the sample distribution action and/or a sample distribution amount of the second sample dispensing component 120 upon performing the sample distribution action, such that a deviation between a sample distribution accuracy of the first sample dispensing component 110 and a sample distribution accuracy of the second sample dispensing component 120 is less than or equal to a first preset value. In the implementation, the sample distribution amount of the first sample dispensing component 110 upon performing the sample distribution action and/or the sample distribution amount of the second sample dispensing component 120 upon performing the sample distribution action are corrected through the sample addition calibration process, such that a difference in accuracy between the sample distribution amount of the first sample dispensing component 110 upon performing the sample distribution action and the sample distribution amount of the second sample dispensing component 120 upon performing the sample distribution action may be effectively reduced, and it is beneficial for ensuring consistency between the sample distribution amount of the first sample dispensing component 110 and the sample distribution amount of the second sample dispensing component 120. According to the implementation, the consistency between the sample distribution amount of the first sample dispensing component 110 and the sample distribution amount of the second sample dispensing component 120 is ensured through the sample addition calibration process, and it is mainly applicable to a high-end sample analyzer 10 requiring a high accuracy. In a specific application, in an alternative implementation, for example, in a midrange or low-end sample analyzer 10, the sample addition calibration process may not be provided, a certain difference between distribution amounts of the first sample dispensing component 110 and the second sample dispensing component 120 is allowable, and a deviation in the detection result due to a deviation in the sample distribution amount is allowable. If the deviation is within a clinically allowable range, the deviation may be left alone, as long as the midrange or low-end sample analyzer 10 may accept it.

In the implementation, a sample addition calibration and correction solution is designed for a difference in distribution accuracy of multi-sample needle channels. The sample addition calibration process is a calibration solution different from the related art in which each needle is separately calibrated in each clinical item. In the sample addition calibration process, the sample addition calibration and correction is performed on the first sample dispensing component 110 and/or the second sample dispensing component 120 after a corresponding sample addition calibrator and a calibration consumable are prepared, to complete a sample addition calibration test, a correction parameter calculation and configuration, and a sample addition calibration and verification. After the sample addition calibration is successful, it is unnecessary to perform multiple separate calibrations on multiple sample needles with respect to the clinical item.

As an implementation, the above operation of correcting, based on the first calibrator distribution amount and the second calibrator distribution amount, the sample distribution amount of the first sample dispensing component 110 upon performing the sample distribution action and/or the sample distribution amount of the second sample dispensing component 120 upon performing the sample distribution action may include the following operations. A first deviation value of the second calibrator distribution amount relative to the first calibrator distribution amount is calculated, and the sample distribution amount of the second sample dispensing component 120 upon performing the sample distribution action is corrected based on the first deviation value. According to the implementation, in the sample addition calibration process, the sample distribution amount of the second sample dispensing component 120 upon performing the sample distribution action is calibrated based on the first calibrator distribution amount of the first sample dispensing component 110, and the sample distribution amount of the first sample dispensing component 110 upon performing the sample distribution action is kept unchanged. In the implementation, the sample distribution amount of one of the first sample dispensing component 110 and the second sample dispensing component 120 upon performing the sample distribution action is calibrated based on a sample addition calibrator distribution amount of another one of the first sample dispensing component 110 and the second sample dispensing component 120. A purpose of reducing a difference in accuracy between distribution amounts of the first sample dispensing component 110 and the second sample dispensing component 120 may be achieved through the sample addition calibration process, and it is also beneficial for reducing a calculation amount in the calibration process because only one of the sample distribution amounts needs to be calculated.

As an implementation, the above operation of correcting, based on the first deviation value, the sample distribution amount of the second sample dispensing component 120 upon performing the sample distribution action includes the following operations. A first correction parameter is obtained based on the first deviation value, and a corrected sample distribution amount of the second sample dispensing component 120 is calculated based on a target distribution amount of the sample actually required to be distributed by the sample distribution device 100 into the reaction vessel in the sample distribution action and the first correction parameter. That is, the above operation of correcting, based on the first calibrator distribution amount and the second calibrator distribution amount, the sample distribution amount of the first sample dispensing component 110 upon performing the sample distribution action and/or the sample distribution amount of the second sample dispensing component 120 upon performing the sample distribution action includes the following operations. A first deviation value of the second calibrator distribution amount relative to the first calibrator distribution amount is calculated, a first correction parameter is obtained based on the first deviation value, a corrected sample distribution amount of the second sample dispensing component 120 is calculated based on a target distribution amount of the sample actually required to be distributed by the sample distribution device 100 into the reaction vessel in the sample distribution action and the first correction parameter, and the sample distribution amount of the first sample dispensing component 110 is kept unchanged. Specifically, it is assumed that the target distribution amount of the sample distribution device 100 upon performing the sample distribution action is V0, the first calibrator distribution amount of the first sample dispensing component 110 in the sample addition calibration process is V1, and the second calibrator distribution amount of the second sample dispensing component 120 in the sample addition calibration process is V2. After the sample addition calibration process, the sample distribution amount of the first sample dispensing component 110 upon performing the sample distribution action is unchanged, and the sample distribution amount of the second sample dispensing component 120 upon performing the sample distribution action is modified to V0 + (V2-V1) K, here K is a sample addition transfer coefficient for a specific volume, and is affected by an instrument, the sample addition calibrator, a sample addition volume, and a sample addition deviation between respective sample needles. The sample addition transfer coefficient K may be regarded as a constant in a certain range of the sample distribution amount.

In the above solution, the sample distribution amount of the second sample dispensing component 120 upon performing the sample distribution action is calibrated based on the first calibrator distribution amount of the first sample dispensing component 110, to control a difference in accuracy between the sample distribution amounts of the first sample dispensing component 110 and the second sample dispensing component 120 upon performing the sample distribution action to be in a small range.

In a specific application, the operation of correcting, based on the first calibrator distribution amount and the second calibrator distribution amount, the sample distribution amount of the first sample dispensing component 110 upon performing the sample distribution action and/or the sample distribution amount of the second sample dispensing component 120 upon performing the sample distribution action, is not limited to the above solution in which calibration is performed based on the first calibrator distribution amount of the first sample dispensing component 110. For example, as a first alternative implementation of calibrating the sample distribution amount of the second sample dispensing component 120 based on the first calibrator distribution amount, the above operation of correcting, based on the first calibrator distribution amount and the second calibrator distribution amount, the sample distribution amount of the first sample dispensing component 110 upon performing the sample distribution action and/or the sample distribution amount of the second sample dispensing component 120 upon performing the sample distribution action may also include the following operations. A second deviation value of the first calibrator distribution amount relative to the second calibrator distribution amount is calculated, and the sample distribution amount of the first sample dispensing component 110 upon performing the sample distribution action is corrected based on the second deviation value. In this alternative implementation, the sample distribution amount of the first sample dispensing component 110 upon performing the sample distribution action is calibrated based on the second calibrator distribution amount of the second sample dispensing component 120, and the sample distribution amount of the second sample dispensing component 120 upon performing the sample distribution action is kept unchanged. In this way, the purpose of reducing the difference in accuracy between the distribution amounts of the first sample dispensing component 110 and the second sample dispensing component 120 may also be achieved through the sample addition calibration process.

As a further implementation of the first alternative implementation of calibrating the sample distribution amount of the second sample dispensing component 120 based on the first calibrator distribution amount, the above operation of correcting, based on the first calibrator distribution amount and the second calibrator distribution amount, the sample distribution amount of the first sample dispensing component 110 upon performing the sample distribution action and/or the sample distribution amount of the second sample dispensing component 120 upon performing the sample distribution action includes the following operations. A second deviation value of the first calibrator distribution amount relative to the second calibrator distribution amount is calculated, a second correction parameter is obtained based on the second deviation value, a corrected sample distribution amount of the first sample dispensing component 110 is calculated based on a target distribution amount of the sample actually required to be distributed by the sample distribution device 100 into the reaction vessel in the sample distribution action and the second correction parameter, and the sample distribution amount of the second sample dispensing component 120 is kept unchanged. Specifically, it is assumed that the target distribution amount of the sample distribution device 100 upon performing the sample distribution action is V0, the first calibrator distribution amount of the first sample dispensing component 110 in the sample addition calibration process is V1, and the second calibrator distribution amount of the second sample dispensing component 120 in the sample addition calibration process is V2. After the sample addition calibration process, the sample distribution amount of the second sample dispensing component 120 upon performing the sample distribution action is unchanged, and the sample distribution amount of the first sample dispensing component 110 upon performing the sample distribution action is modified to V0 + (V1-V2) K, here K is a sample addition transfer coefficient for a specific volume.

Or, as a second alternative implementation of calibrating the sample distribution amount of the second sample dispensing component 120 based on the first calibrator distribution amount, the above operation of correcting, based on the first calibrator distribution amount and the second calibrator distribution amount, the sample distribution amount of the first sample dispensing component 110 upon performing the sample distribution action and/or the sample distribution amount of the second sample dispensing component 120 upon performing the sample distribution action includes the following operations. A third deviation value of the first calibrator distribution amount relative to a reference amount is calculated, a fourth deviation value of the second calibrator distribution amount relative to the reference amount is calculated, the sample distribution amount of the first sample dispensing component 110 upon performing the sample distribution action is corrected based on the third deviation value, and the sample distribution amount of the second sample dispensing component 120 upon performing the sample distribution action is corrected based on the fourth deviation value. The reference amount is a target distribution amount of the sample actually required to be distributed by the sample distribution device 100 into the reaction vessel in the sample distribution action, or there is a preset difference between the reference amount and the target distribution amount of the sample actually required to be distributed by the sample distribution device 100 into the reaction vessel in the sample distribution action. In this alternative implementation, the sample distribution amount of the first sample dispensing component 110 upon performing the sample distribution action and the sample distribution amount of the second sample dispensing component 120 upon performing the sample distribution action are calibrated based on the reference amount respectively, and the purpose of reducing the difference in accuracy between the distribution amounts of the first sample dispensing component 110 and the second sample dispensing component 120 may also be achieved.

As a further implementation of the second alternative implementation of calibrating the sample distribution amount of the second sample dispensing component 120 based on the first calibrator distribution amount, the above operation of correcting, based on the first calibrator distribution amount and the second calibrator distribution amount, the sample distribution amount of the first sample dispensing component 110 upon performing the sample distribution action and/or the sample distribution amount of the second sample dispensing component 120 upon performing the sample distribution action includes the following operations. A third deviation value of the first calibrator distribution amount relative to a reference amount is calculated, a third correction parameter is obtained based on the third deviation value, and a corrected sample distribution amount of the first sample dispensing component 110 is calculated based on a target distribution amount of the sample actually required to be distributed by the sample distribution device 100 into the reaction vessel in the sample distribution action and the third correction parameter. A fourth deviation value of the second calibrator distribution amount relative to the reference amount is calculated, a fourth correction parameter is obtained based on the fourth deviation value, and a corrected sample distribution amount of the second sample dispensing component 120 is calculated based on the target distribution amount and the fourth correction parameter. The reference amount is the target distribution amount, or there is a preset difference between the reference amount and the target distribution amount. It is assumed that the target distribution amount of the sample distribution device 100 upon performing the sample distribution action is V0, the first calibrator distribution amount of the first sample dispensing component 110 in the sample addition calibration process is V1, and the second calibrator distribution amount of the second sample dispensing component 120 in the sample addition calibration process is V2. After the sample addition calibration process, the sample distribution amount of the first sample dispensing component 110 upon performing the sample distribution action is modified to V0 + (V1-V0) K, and the sample distribution amount of the second sample dispensing component 120 upon performing the sample distribution action is modified to V0 + (V2-V0) K, here K is a sample addition transfer coefficient for a specific volume.

As an implementation, the distribution amount detection device is a second optical detection device, and the sample addition calibrator is a first marker reagent with a luminescent marker. The sample analyzer 10 further includes a substrate distribution device 101 configured to distribute a luminescent substrate reagent into the reaction vessel. The above operation of controlling the first sample dispensing component 110 to aspirate the sample addition calibrator and distribute the sample addition calibrator into the reaction vessel and controlling the distribution amount detection device to detect the first calibrator distribution amount distributed by the first sample dispensing component 110 into the reaction vessel includes the following operations. The first sample dispensing component 110 is controlled to aspirate the first marker reagent and distribute the first marker reagent into the reaction vessel, the substrate distribution device 101 is controlled to distribute the luminescent substrate reagent into the reaction vessel, and the second optical detection device is controlled to detect a luminescent intensity of a first reaction solution prepared from at least the first marker reagent distributed by the first sample dispensing component 110 into the reaction vessel and the luminescent substrate reagent distributed by the substrate distribution device 101 into the reaction vessel, so as to obtain the first calibrator distribution amount distributed by the first sample dispensing component 110 into the reaction vessel. The above operation of controlling the second sample dispensing component 120 to aspirate the sample addition calibrator and distribute the sample addition calibrator into the reaction vessel and controlling the distribution amount detection device to detect the second calibrator distribution amount distributed by the second sample dispensing component 120 into the reaction vessel includes the following operations. The second sample dispensing component 120 is controlled to aspirate the first marker reagent and distribute the first marker reagent into the reaction vessel, the substrate distribution device 101 is controlled to distribute the luminescent substrate reagent into the reaction vessel, and the second optical detection device is controlled to detect a luminescent intensity of a second reaction solution prepared from at least the first marker reagent distributed by the second sample dispensing component 120 into the reaction vessel and the luminescent substrate reagent distributed by the substrate distribution device 101 into the reaction vessel, so as to obtain the second calibrator distribution amount distributed by the second sample dispensing component 120 into the reaction vessel. After the first calibrator distribution amount and the second calibrator distribution amount are obtained, the sample distribution amount of the first sample dispensing component 110 upon performing the sample distribution action and/or the sample distribution amount of the second sample dispensing component 120 upon performing the sample distribution action are corrected based on the first calibrator distribution amount and the second calibrator distribution amount, such that the deviation between the sample distribution accuracy of the first sample dispensing component 110 and the sample distribution accuracy of the second sample dispensing component 120 may be less than or equal to the first preset value. According to the implementation, the sample distribution amount of the first sample dispensing component 110 and/or the sample distribution amount of the second sample dispensing component 120 are calibrated by using an immunoluminescence method, so that the sample addition calibration process can be performed by fully utilizing the reaction and detection systems in the immunoassay analyzer, without the need for an additional new system to perform the sample addition calibration process, and it is beneficial for reducing an execution cost of the sample addition calibration process.

As an implementation, the second optical detection device used for the distribution amount detection device and the sample detection device 300 are the same detection device, that is, the sample detection device 300 within the immunoassay analyzer is directly used as the distribution amount detection device, such that it is unnecessary to separately set an additional optical detection device as the distribution amount detection device to perform the sample addition calibration process. According to the implementation, quantification of a difference between double sample needles may be completed by using the detection system of the immunoassay analyzer itself without using other devices, and the sample addition calibration process may be executed in a fully automated manner. In a specific application, as an alternative implementation, the second optical detection device used for the distribution amount detection device and the sample detection device 300 may be set as two different detection devices. For example, an optical detection device may be built in the sample analyzer 10 or externally connected to the sample analyzer 10, to be used as the distribution amount detection device.

As an implementation, the sample addition calibration process differs from the first detection process and the second detection process in at least one of: a component of the first marker reagent differing from a component of the second marker reagent, a concentration of the first marker reagent differing from a concentration of the second marker reagent, a distribution amount of the first marker reagent differing from a distribution amount of the second marker reagent, different distribution amounts of the luminescent substrate reagent, different incubation durations, or different incubation temperatures. In a luminescence immunoreaction system, factors affecting an intensity of a final luminescence value include not only the distribution amount of the sample needle, but also are related to the component of the marker reagent, the concentration of the marker reagent, the distribution amount of the marker reagent, the incubation temperature, the incubation duration, an injection amount of the luminescent substrate reagent, or other factors. To ensure that the luminescence value may reflect a distribution amount deviation of the sample needle without introducing interference from other links, a solution that highlights the distribution amount deviation of the sample needle and weakens the influence of other factors may be used. For example, the component of the marker reagent, the concentration of the marker reagent, the distribution amount of the marker reagent, the incubation temperature, the incubation duration and the injection amount of the luminescent substrate reagent in the sample addition calibration process are not related to the component of the marker reagent, the concentration of the marker reagent, the distribution amount of the marker reagent, the incubation temperature, the incubation duration and the injection amount of the luminescent substrate reagent in the first detection process or the second detection process. Therefore, the component of the marker reagent, the concentration of the marker reagent and the distribution amount of the marker reagent in the sample addition calibration process may be designed with a goal of a large transfer coefficient, and the incubation temperature, the incubation duration and the injection amount of the luminescent substrate reagent in the sample addition calibration process may be designed with a goal of a small transfer coefficient.

As an implementation, to ensure that the luminescence value may reflect a distribution amount deviation of the sample needle without introducing interference from other links, a following solution that highlights the distribution amount deviation of the sample needle and removes the influence of other factors may be used. (1) A formula and concentration of the first marker reagent in the sample addition calibration process are specially designed to make the sample addition transfer coefficient large, for example, at least 0.7 or more. The second marker reagent used in the sample addition calibration process and the second marker reagent used in the sample detection process (such as the first detection process, the second detection process) are not the same marker reagent, their formulas and concentrations are different, that is, a new marker reagent is separately designed for this method. (2) Transfer coefficients of other factors are designed as small as possible, and are not more than 0.1 at most. The injection amount of the luminescent substrate reagent is used as an example, since the injection amount of the luminescent substrate reagent used in the sample addition calibration process is not related to an injection amount of the luminescent substrate reagent used in an immunodetection item, the injection amount of the luminescent substrate reagent as used is re-designed with a goal of a small transfer coefficient. For example, the design method may include: performing a gradient experiment of the injection amount of the luminescent substrate reagent when other factors are fixed, analyzing luminescence values and transfer coefficients of the injection amounts of the luminescent substrate reagent under different injection amounts of the luminescent substrate reagent, and selecting an injection amount of the luminescent substrate reagent which meets requirements. In the experiment, luminescent intensities under different injection amounts of the luminescent substrate reagent are shown in the figure. It may be known from the figure that when the injection amount of the luminescent substrate reagent is in a range of 130ul to 150ul, the luminescent intensity is large and the curve is gentle, that is, the luminescence value does not change with the change of the injection amount of the luminescent substrate reagent (the transfer coefficient is close to 0). Therefore, the injection amount of the luminescent substrate reagent as 140ul is selected in this method. Parameters of other affecting factors (the incubation temperature, the incubation duration, etc.) may also be designed and validated based on the same principle and method. After using these solutions, a difference between sample addition amounts of double sample needles may be accurately reflected by detecting the marker reagent and the luminescent substrate reagent, which is not affected by other factors, such that calibration of the difference between the double sample needles may be reliably performed.

In a fully automatic immunoassay analyzer, the sample needle is responsible for completing an operation of dispensing a to-be-detected sample. For the fully automatic immunoassay analyzer containing two sample needles, it needs to keep a consistent sample addition performance between the two sample needles. Measuring and evaluating a difference between the sample addition performance of the double sample needles is a basis for controlling the consistency of the double sample needles. In a double-sample needle system, controlling the consistency of the two sample needles means that when the two sample needles are controlled to dispense the same volume of liquid, a difference between the volumes of the liquids actually dispensed by the two sample needles is as small as possible.

As an implementation, both the first marker reagent and the second marker reagent are alkaline phosphatase solutions. However, the alkaline phosphatase solution used in the first marker reagent and the alkaline phosphatase solution used in the second marker reagent are not the same alkaline phosphatase solution, their formulas and concentrations are different, that is, a new alkaline phosphatase solution is separately designed for the sample addition calibration process. The implementation proposes a method for measuring and evaluating the consistency of the sample addition performance of the two sample needles by using the alkaline phosphatase solution as the sample addition calibrator, which reacts with an equal amount and excess amount of the luminescent substrate reagent respectively and then luminesces in the double-sample needle system. In an enzyme immunoluminescence system, a final luminescence is a chemical luminescence generated by an antigen or antibody marked with an alkaline phosphatase and the luminescent substrate reagent catalyzed by a magnetic bead envelope, and its essence is that the alkaline phosphatase catalyzes the luminescent substrate reagent to luminescence. Therefore, when the alkaline phosphatase is directly mixed and reacted with the excess amount of the luminescent substrate reagent, a final luminescent intensity is positively correlated with an addition amount of the alkaline phosphatase, and when a certain concentration of the alkaline phosphatase solution is used, the final luminescent intensity is positively correlated with a volume of the alkaline phosphatase solution.

As an implementation, a difference between the volumes of the liquids dispensed by the two sample needles is evaluated as follows. In the immunoassay analyzer, two sample needles are controlled to dispense the same volume of alkaline phosphatase solution into an excess amount and equal amount of the luminescent substrate reagent respectively in the same working condition. After incubation in a certain duration (to ensure that the alkaline phosphatase solutions fully react with the luminescent substrate reagent), the two reaction solutions are measured by the photometer of the immunoassay analyzer, to obtain luminescent intensities of the two reaction solutions obtained by reacting between the alkaline phosphatase solutions distributed by the two sample needles with the luminescent substrate reagent. A difference between the volumes of the liquids actually distributed by the two sample needles is calculated in combination with a quantitative relationship between an amount of the liquid distributed by the sample needle and an luminescence value in an enzyme + substrate luminescence system. The quantitative relationship between the amount of the liquid distributed by the sample needle and the luminescence value is the key of this method. In the enzyme + substrate reaction system, a quantitative relationship between a deviation of the amounts of the liquids distributed by the sample needles and a deviation of final luminescence values may be reflected by defining a sample addition transfer coefficient: the sample addition transfer coefficient = a relative deviation of the luminescence values / a relative deviation of the amounts of the liquids distributed by the sample needles. The relative deviation of the amounts of the liquids distributed by the sample needles is a difference between liquid distribution amounts when the same volume of liquid is distributed by the two sample needles (i.e., the first sample needle 111 and the second sample needle 121), and the relative deviation of the luminescence values is a difference between luminescent intensities of two reaction solutions obtained by reacting between the liquids distributed by the two sample needles with the luminescent substrate reagent, respectively. The sample addition transfer coefficient is an inherent property reflecting the quantitative relationship between the amount of the liquid distributed by the sample needle and the luminescence value, and the sample addition transfer coefficient may be regarded as a constant in a certain range of the distributed amount of the liquid. The relative deviation of the amounts of the liquids distributed by the sample needles may be calculated as follows. The relative deviation of the amounts of the liquids distributed by the sample needles = the relative deviation of the luminescence values / the sample addition transfer coefficient.

Multiple sample addition volume specifications are present in an immunoassay scenario of the sample, a deviation between the sample distribution amounts of the two sample needles is not the same for different sample addition volumes, and the sample addition transfer coefficient is also different. Therefore, when the difference between the two sample needles is quantified to calibrate the sample distribution amount, the sample addition calibration process needs to be performed in different calibrator volume ranges respectively.

The sample addition calibration process for the sample distribution system with the double-sample needle according to the implementation is performed by the immunoassay analyzer. The sample addition calibrator for calibration enters the immunoassay analyzer through a sample injection device, is distributed by the double-sample needle system of the sample distribution device 100, and then is sequentially subject to operations such as distributing the reagent by the reagent distribution device 200, incubating by the reaction device 900, detecting by the sample detection device 300, treating a waste liquid, or throwing a cup, to complete the entire test process. The detection result of the sample detection device 300 is brought into a calibration compensation calculation module, to calculate a calibration correction amount of each needle according to a specific calibration algorithm and based on a specific sample needle accuracy or the target distribution amount. The calibration correction amount is brought into a parameter configuration module to configure sample distribution correction amounts for different sample distribution volumes and different sample distribution channels.

As an implementation, the sample analyzer 10 is pre-stored with a first preset condition, and the first preset condition includes at least one of: reaching a first preset duration since a last execution of the sample addition calibration process; acquiring information indicating a completion of troubleshooting of the first sample dispensing component 110 and/or the second sample dispensing component 120; acquiring information indicating a completion of assembling of the first sample dispensing component 110 and/or the second sample dispensing component 120; or reaching a first preset time point of a first preset maintenance period. The controller 400 is further configured to perform the sample addition calibration process when the first preset condition is satisfied. When the sample analyzer 10 is pre-stored with at least two of the above first preset conditions, the sample addition calibration process is performed if any one of the first preset conditions is satisfied. Reaching a first preset duration since a last execution of the sample addition calibration process, specifically means that after the execution of the sample addition calibration process is completed, the sample addition calibration process is performed again for every interval time that reaches the first preset duration. For example, the sample addition calibration process is performed every half a year, one year, three months, two months or one month. Reaching a first preset time point of a first preset maintenance period, specifically means that the sample addition calibration process is performed upon reaching a fixed time point, and it is not associated with an interval time from a last execution of the sample addition calibration process. For example, the sample addition calibration process is performed at 7:00 a.m. (or 7:30 a.m., or 8:00 a.m., etc.) on the 30th of June, the 31st of December, etc. of each year (or the 1st of January, the 1st of July of each year, etc.) respectively. Completion of troubleshooting of the first sample dispensing component 110 and/or the second sample dispensing component 120, mainly means that after at least a portion of parts of the first sample dispensing component 110 and/or the second sample dispensing component 120 fail and troubleshooting thereof is completed, the sample addition calibration process is performed. Completion of assembling of the first sample dispensing component 110 and/or the second sample dispensing component 120 may mean that after a first assembling of the sample analyzer 10 in a specific application scenario is completed, or after replacement of at least a portion of the parts of the first sample dispensing component 110 and/or the second sample dispensing component 120 is completed after the sample analyzer 10 has been used for a period of time, the sample addition calibration process is performed. In the implementation, the sample addition calibration process is not performed during execution of the sample detection item, does not occupy a normal sample detection time of the sample analyzer 10, and is automatically performed according to a preset procedure when the first preset condition is satisfied. Thus, the operator is substantially insensitive to the execution of the sample addition calibration process, which greatly reduces interference of the sample addition calibration process to the operator.

As an implementation, the controller 400 is further configured to perform an item calibration process including: controlling one of the first sample dispensing component 110 and the second sample dispensing component 120 to aspirate an item calibrator from a second calibrator vessel and distribute the item calibrator into the reaction vessel; controlling the reagent distribution device 200 to aspirate the reagent from the reagent vessel and distribute the reagent into the reaction vessel; controlling the sample detection device 300 to detect a calibration solution prepared from at least the item calibrator and the reagent in the reaction vessel; and obtaining the calibration data corresponding to the sample detection item based on the detection information fed back by the sample detection device 300. The item calibration process is mainly intended to obtain the calibration data corresponding to the sample detection item, and the calibration data is used to calibrate the detection information obtained in the first detection process and the second detection process, to obtain the detection result. The sample analyzer 10 may be configured to perform different kinds of detection items, each of which corresponds to a calibration data. In the implementation, since the first sample dispensing component 110 and the second sample dispensing component 120 share the same calibration data when they perform the same detection item, the calibration data for each sample detection item may be obtained only once by one of the first sample dispensing component 110 and the second sample dispensing component 120, instead of having to be obtained by both the first sample dispensing component 110 and the second sample dispensing component 120, and it is also unnecessary to calibrate the first sample dispensing component 110 and the second sample dispensing component 120 respectively for each clinical item, thereby effectively reducing the calibration cost of the sample analyzer 10.

As an implementation, the controller 400 is further configured to perform an item calibration process for a first detection item, including: controlling the first sample dispensing component 110 to aspirate an item calibrator from a second calibrator vessel and distribute the item calibrator into the reaction vessel; controlling the reagent distribution device 200 to aspirate the reagent from the reagent vessel and distribute the reagent into the reaction vessel; controlling the sample detection device 300 to detect a calibration solution prepared from at least the item calibrator and the reagent in the reaction vessel; and obtaining the first calibration data corresponding to the first detection item based on the detection information fed back by the sample detection device 300. The controller 400 is further configured to perform a second detection process for the first detection item, including: controlling the second sample dispensing component 120 to perform the sample distribution action, controlling the reagent distribution device 200 to perform the reagent distribution action, controlling the sample detection device 300 to detect the to-be-detected solution prepared from at least the sample distributed by the second sample dispensing component 120 and the reagent distributed by the reagent distribution device 200, obtaining the second detection data based on the detection information fed back by the sample detection device 300, and obtaining the second detection result based on the second detection data and the first calibration data corresponding to the first detection item. In the implementation, when the second sample dispensing component 120 performs the second detection process, the calibration data obtained by the first sample dispensing component 110 when performing the item calibration process may be used, such that it is unnecessary to perform the item calibration process by both the first sample dispensing component 110 and the second sample dispensing component 120 with respect to one sample detection item, instead, the item calibration process is required to be performed by only one of the first sample dispensing component 110 and the second sample dispensing component 120.

As an implementation, the sample analyzer 10 is pre-stored with a second preset condition, and the second preset condition includes at least one of: reaching a second preset duration since a last execution of the item calibration process; reaching a second preset time point of a second preset maintenance period; acquiring information indicating a newly loaded reagent vessel; or acquiring information indicating a wrong quality control detection result. The controller 400 is further configured to perform the item calibration process when the second preset condition is satisfied. When the sample analyzer 10 is pre-stored with at least two of the above second preset conditions, the item calibration process is performed if any one of the second preset conditions is satisfied. Reaching a second preset duration since a last execution of the item calibration process, specifically means that after the execution of the item calibration process is completed, the item calibration process is performed again for every interval time that reaches the second preset duration. Reaching a second preset time point of a second preset maintenance period, specifically means that the item calibration process is performed upon reaching a fixed time point, and it is not associated with an interval time from a last execution of the item calibration process. The information indicating a newly loaded reagent vessel may be obtained after a first assembling of the sample analyzer 10 in a specific application scenario is completed, or after replacement of the reagent vessel is completed after the sample analyzer 10 has been used for a period of time. In the implementation, the item calibration process is not performed during execution of the sample detection item, does not occupy a normal sample detection time of the sample analyzer 10, and is automatically performed according to a preset procedure when the second preset condition is satisfied. Thus, the operator is substantially insensitive to the execution of the item calibration process, which greatly reduces interference of the item calibration process to the operator.

As an implementation, an execution period of the item calibration process is 28 days, that is, the second preset maintenance period or the second preset duration is 28 days. When a reagent for a certain detection item is replaced, the item calibration process for the detection item is performed. When a quality control detection result of a certain detection item is wrong, the item calibration process for the detection item is performed.

As an implementation, the controller 400 is further configured to perform a quality control detection process, and the quality control detection process may be performed once a day, for example, the quality control detection process may be performed every morning before the sample detection is performed. Optionally, the quality control detection process may be performed twice a day, for example, the quality control detection process may be performed every morning before the sample detection is performed and every afternoon before the sample detection is performed.

As an implementation, the calibration data (including but not limited to the above first calibration data and second calibration data) includes correspondences between multiple sets of different known detection information and different calibration parameters. The calibration data may be a parameter of a linear function, or a calibration curve of the linear function, or include a calibration database or table formed of multiple sets of known detection information and the calibration parameters.

As an implementation, the sample analyzer 10 further includes a sample management device 600 and a sample delivery device 700. The sample management device 600 is configured to place a sample vessel to achieve at least a loading of the sample. The sample delivery device 700 is configured to deliver the sample vessel output from the sample management device 600 to a sample aspiration position, such that the sample distribution device 100 aspirates the sample. The sample management device 600 may achieve a batch sample loading function of the sample vessel. Specifically, the operator or an operating robot may place the sample vessel loaded with the sample into the sample management device 600, and the sample management device 600 is configured to store the sample vessel and dispatch the sample vessel loaded with the sample to the sample delivery device 700. In a specific application, the sample analyzer 10 may not be provided with the sample management device 600 and the sample delivery device 700, for example, as an alternative implementation, the sample vessel loaded with the sample is placed at the sample aspiration position by the operator, such that the sample distribution device 100 aspirates the sample.

As an implementation, the sample analyzer 10 further includes a transfer device 104 configured to transfer the reaction vessel. The transfer device 104 is configured to perform at least one of the following transfer operations, including: transferring the reaction vessel of which the sample loading is completed to the reaction device 900, and transferring the reaction vessel of which the incubation is completed from the reaction device 900 to the magnetic separation device 500; transferring the reaction vessel of which the magnetic separation cleaning is completed from the magnetic separation device 500 to a detection position for detection; or transferring the reaction vessel of which the detection is completed to a cup throwing position, to throw and recover the reaction vessel.

As an implementation, the sample analyzer 10 further includes a reaction vessel supply device 102 and a reaction vessel recovery device 103. The reaction vessel supply device 102 is configured to supply the reaction vessel. The reaction vessel recovery device 103 is configured to recover the reaction vessel. The sample analyzer 10 is also provided with a recovery position, and the reaction vessel recovery device 103 is located below the recovery position. The transfer device 104 is configured to transfer at least the reaction vessel from the detection position to the recovery position, to release and recover the reaction vessel. In the implementation, the reaction vessel is a disposable vessel, that is, the reaction vessel is recovered after one detection item thereof is completed. In a specific application, the reaction vessel may also be a recyclable vessel, that is, after one detection item for the reaction vessel is completed, the reaction vessel may be cleaned in the sample analyzer 10 and then may be reused for other detection items.

The embodiment further provides a method for controlling the sample analyzer 10, and the method includes a first detection process and a second detection process. The first detection process includes: controlling the first sample dispensing component 110 to perform the sample distribution action, controlling the reagent distribution device 200 to perform the reagent distribution action, controlling the sample detection device 300 to detect the to-be-detected solution prepared from at least the sample distributed by the first sample dispensing component 110 and the reagent distributed by the reagent distribution device 200, obtaining first detection data based on detection information fed back by the sample detection device 300, and obtaining a first detection result based on the first detection data and first calibration data. The second detection process includes: controlling the second sample dispensing component 120 to perform the sample distribution action, controlling the reagent distribution device 200 to perform the reagent distribution action, controlling the sample detection device 300 to detect the to-be-detected solution prepared from at least the sample distributed by the second sample dispensing component 120 and the reagent distributed by the reagent distribution device 200, obtaining second detection data based on the detection information fed back by the sample detection device 300, and obtaining a second detection result based on the second detection data and second calibration data. When a detection item performed by the first detection process and a detection item performed by the second detection process are the same detection item, the first calibration data and the second calibration data are the same calibration data.

Specific principles and implementations of the method for controlling the sample analyzer 10 provided in the embodiment are similar to those described with respect to the above sample analyzer 10, and are not described in detail here.

The embodiment further provides a computer-readable storage medium storing a computer program that, when executed by a processor (e.g., the controller 400 described above), causes the processor to implement operations of the above method for controlling the sample analyzer 10. The computer-readable storage medium may be an internal storage unit of the above sample analyzer 10, such as a hard disk or a memory of the sample analyzer 10. Alternatively, the computer-readable storage medium may be a storage device external to the sample analyzer 10, such as a plug-in hard disk, a Smart Media Card (SMC), a Secure Digital (SD) card, a Flash Card, or the like equipped on the sample analyzer 10.

In the embodiment, the sample distribution device 100 is a double-sample needle system, that is, the sample distribution device 100 includes only two sample needles, i.e., the first sample needle 111 and the second sample needle 121, which ensures efficiency while also avoiding an undesirable phenomenon where the sample distribution device 100 has a too complicated structure and a too high cost due to too many sample needles. In a specific application, the sample distribution device 100 is not limited to a double-sample needle system, for example, the sample distribution device 100 may include a third sample dispensing component including a third sample needle, in addition to the above first sample dispensing component 110 and the second sample dispensing component 120. The third sample needle, the first sample needle 111 and the second sample needle 121 are three sample needles capable of performing the sample distribution action independently of each other.

In the embodiment, when the sample is distributed by using the multi-sample needle system, the item calibration process may be performed only once for the multi-sample needle system before detecting the same detection item, to obtain a calibration data corresponding to the detection item, and the multi-sample needle system may share the same calibration data obtained by the item calibration process (such as a calibration curve or a parameter of a linear function of the calibration curve) when the detection item is performed on different samples by using multiple sample needles respectively. Accuracy of the multiple sample needles in the multi-sample needle system is ensured to be consistent through the sample addition calibration process of the whole analyzer, which in turn ensures that the item detection results from multiple sample addition systems in the multi-sample needle system are consistent. Calibration may be performed only once, and the calibration data may be shared.

### Second embodiment

A sample analyzer 10 provided in this embodiment differs from the sample analyzer in the first embodiment mainly in that methods for detecting and obtaining the calibrator distribution amount in the sample addition calibration process are different. Specifically, in the first embodiment, the calibrator distribution amount in the sample addition calibration process is detected by a chemical luminescence method; whereas in this embodiment, the calibrator distribution amount in the sample addition calibration process is detected by a weighing method.

Specifically, in this embodiment, the distribution amount detection device is a weighing device. The above operation of controlling the distribution amount detection device to detect the first calibrator distribution amount distributed by the first sample dispensing component 110 into the reaction vessel includes the following operations. The weighing device is controlled to weigh the sample addition calibrator distributed by the first sample dispensing component 110 into the reaction vessel, and the first calibrator distribution amount distributed by the first sample dispensing component 110 into the reaction vessel is obtained based on weight information fed back by the weighing device. The above operation of controlling the distribution amount detection device to detect the second calibrator distribution amount distributed by the second sample dispensing component 120 into the reaction vessel includes the following operations. The weighing device is controlled to weigh the sample addition calibrator distributed by the second sample dispensing component 120 into the reaction vessel, and the second calibrator distribution amount distributed by the second sample dispensing component 120 into the reaction vessel is obtained based on the weight information fed back by the weighing device. In a specific application, after the first sample dispensing component 110 distributes the sample addition calibrator into the reaction vessel, the reaction vessel is placed on the weighing device and weighed, to obtain the first calibrator distribution amount. After the second sample dispensing component 120 distributes the sample addition calibrator into the reaction vessel, the reaction vessel is placed on the weighing device and weighed, to obtain the second calibrator distribution amount. In the embodiment, the first calibrator distribution amount and the second calibrator distribution amount in the sample addition calibration process are detected by using the weighing method, and the sample addition calibrator may be water, a diluent, or other liquids, etc. The weighing device may be a device externally connected to the sample analyzer 10, or may be a device built in the sample analyzer 10. The weighing device may be an electronic scale, a balance, etc.

In addition to the above differences, other portions of the sample analyzer 10 provided in this embodiment may refer to the first embodiment, and are not described in detail here.

### Third embodiment

A sample analyzer 10 provided in this embodiment differs from the sample analyzer in the first embodiment mainly in that methods for detecting and obtaining the calibrator distribution amount in the sample addition calibration process are different. Specifically, in the first embodiment, the calibrator distribution amount in the sample addition calibration process is detected and obtained by a chemical luminescence method; whereas in this embodiment, the calibrator distribution amount in the sample addition calibration process is detected and obtained by a pigment absorbance detection method.

Specifically, in this embodiment, the distribution amount detection device is a first optical detection device, and the sample addition calibrator is a pigment solution. The above operation of controlling the first sample dispensing component 110 to aspirate the sample addition calibrator and distribute the sample addition calibrator into the reaction vessel and controlling the distribution amount detection device to detect the first calibrator distribution amount distributed by the first sample dispensing component 110 into the reaction vessel includes the following operations. The first sample dispensing component 110 is controlled to aspirate the pigment solution and distribute the pigment solution into the reaction vessel, and the first optical detection device is controlled to detect an absorbance of the pigment solution distributed by the first sample dispensing component 110 into the reaction vessel, so as to obtain the first calibrator distribution amount distributed by the first sample dispensing component 110 into the reaction vessel. The operation of controlling the second sample dispensing component 120 to aspirate the sample addition calibrator and distribute the sample addition calibrator into the reaction vessel and controlling the distribution amount detection device to detect the second calibrator distribution amount distributed by the second sample dispensing component 120 into the reaction vessel includes the following operations. The second sample dispensing component 120 is controlled to aspirate the pigment solution and distribute the pigment solution into the reaction vessel, and the first optical detection device is controlled to detect an absorbance of the pigment solution distributed by the second sample dispensing component 120 into the reaction vessel, so as to obtain the second calibrator distribution amount distributed by the second sample dispensing component 120 into the reaction vessel. In the pigment absorbance method according to the embodiment, the sample addition calibrator is a pigment solution, and in the sample addition calibration process, it is unnecessary for the pigment solution to be mixed or reacted with other solutions, and the absorbance of the pigment solution is directly detected. That is, after the first sample dispensing component 110 distributes the pigment solution into the reaction vessel, the first optical detection device is controlled to directly detect the absorbance of the pigment solution in the reaction vessel, so as to obtain the first calibrator distribution amount; after the second sample dispensing component 120 distributes the pigment solution into the reaction vessel, the first optical detection device is controlled to directly detect the absorbance of the pigment solution in the reaction vessel, so as to obtain the second calibrator distribution amount.

As an implementation, the first optical detection device used for the distribution amount detection device and the sample detection device 300 are the same detection device, that is, the sample detection device 300 within the immunoassay analyzer is directly used as the distribution amount detection device, such that it is unnecessary to separately set an additional optical detection device as the distribution amount detection device to perform the sample addition calibration process. In a specific application, as an alternative implementation, the first optical detection device used for the distribution amount detection device and the sample detection device 300 may be set as two different detection devices. For example, an optical detection device may be built in the sample analyzer 10 or externally connected to the sample analyzer 10, to be used as the first optical detection device.

In addition to the above differences, other portions of the sample analyzer 10 provided in this embodiment may refer to the first embodiment, and are not described in detail here.

### Fourth embodiment

A sample analyzer 10 provided in this embodiment differs from the sample analyzer in the third embodiment mainly in that different pigment absorbance detection methods are used in the sample addition calibration process. Specifically, in the sample addition calibration process of the third embodiment, it is unnecessary for the pigment solution to be mixed or reacted with other solutions, and the absorbance of the pigment solution added into the reaction vessel is directly detected; whereas in the sample addition calibration process of this embodiment, the pigment solution needs to be mixed with a diluent, and then an absorbance of a mixed solution prepared by mixing the pigment solution with the diluent in the reaction vessel is detected.

Specifically, in this embodiment, the distribution amount detection device is a first optical detection device, and the sample addition calibrator is a pigment solution. The above operation of controlling the first sample dispensing component 110 to aspirate the sample addition calibrator and distribute the sample addition calibrator into the reaction vessel and controlling the distribution amount detection device to detect the first calibrator distribution amount distributed by the first sample dispensing component 110 into the reaction vessel includes the following operations. The first sample dispensing component 110 is controlled to aspirate the pigment solution and distribute the pigment solution into the reaction vessel, the reagent distribution device 200 is controlled to aspirate a diluent and distribute the diluent into the reaction vessel, and the first optical detection device is controlled to detect an absorbance of a first mixed solution formed by mixing at least the pigment solution distributed by the first sample dispensing component 110 into the reaction vessel with the diluent distributed by the reagent distribution device 200 into the reaction vessel, so as to obtain the first calibrator distribution amount distributed by the first sample dispensing component 110 into the reaction vessel. The above operation of controlling the second sample dispensing component 120 to aspirate the sample addition calibrator and distribute the sample addition calibrator into the reaction vessel and controlling the distribution amount detection device to detect the second calibrator distribution amount distributed by the second sample dispensing component 120 into the reaction vessel includes the following operations. The second sample dispensing component 120 is controlled to aspirate the pigment solution and distribute the pigment solution into the reaction vessel, the reagent distribution device 200 is controlled to aspirate a diluent and distribute the diluent into the reaction vessel, and the first optical detection device is controlled to detect an absorbance of a second mixed solution formed by mixing at least the pigment solution distributed by the second sample dispensing component 120 into the reaction vessel with the diluent distributed by the reagent distribution device 200 into the reaction vessel, so as to obtain the second calibrator distribution amount distributed by the second sample dispensing component 120 into the reaction vessel. In the pigment absorbance method according to the embodiment, the sample addition calibrator is a pigment solution, and in the sample addition calibration process, the pigment solution needs to be mixed with the diluent, and then the absorbance is detected. That is, after the first sample dispensing component 110 distributes the pigment solution into the reaction vessel, the diluent needs to be distributed by the reagent distribution device 200, and then the first optical detection device is controlled to detect the absorbance of the mixed solution in the reaction vessel, so as to obtain the first calibrator distribution amount; after the second sample dispensing component 120 distributes the pigment solution into the reaction vessel, the diluent needs to be distributed by the reagent distribution device 200, and then the first optical detection device is controlled to detect the absorbance of the mixed solution in the reaction vessel, so as to obtain the second calibrator distribution amount. In a specific application, the diluent may not be distributed by the reagent distribution device 200, instead, may be distributed by a special diluent distribution device.

As an implementation, the diluent is water (preferably, purified water, deionized water), which is low in cost and is easily available. In a specific application, the diluent is not limited thereto, for example, as an alternative implementation, the diluent may also be a sodium chloride solution or other liquids that may be used to dilute the pigment solution.

Setting of the first optical detection device may refer to the third embodiment, and is not described in detail here.

In addition to the above differences, other portions of the sample analyzer 10 provided in this embodiment may refer to the first embodiment, and are not described in detail here.

### Fifth embodiment

A sample analyzer 10 provided in this embodiment differs from the sample analyzer in the fourth embodiment mainly in that their sample addition calibrators in the sample addition calibration process are different. Specifically, in the sample addition calibration process of the fourth embodiment, the sample addition calibrator is a pigment solution, the diluent is added as a reagent, and the absorbance of the mixed solution prepared by mixing the pigment solution with the diluent in the reaction vessel is detected; whereas in the sample addition calibration process of this embodiment, the sample addition calibrator is a diluent, the pigment solution is added as a reagent, and an absorbance of a mixed solution prepared by mixing the pigment solution with the diluent in the reaction vessel is detected.

Specifically, in this embodiment, the distribution amount detection device is a first optical detection device, and the sample addition calibrator is a diluent. The above operation of controlling the first sample dispensing component 110 to aspirate the sample addition calibrator and distribute the sample addition calibrator into the reaction vessel and controlling the distribution amount detection device to detect the first calibrator distribution amount distributed by the first sample dispensing component 110 into the reaction vessel includes the following operations. The first sample dispensing component 110 is controlled to aspirate the diluent and distribute the diluent into the reaction vessel, the reagent distribution device 200 is controlled to aspirate a pigment solution and distribute the pigment solution into the reaction vessel, and the first optical detection device is controlled to detect an absorbance of a third mixed solution formed by mixing at least the diluent distributed by the first sample dispensing component 110 into the reaction vessel with the pigment solution distributed by the reagent distribution device 200 into the reaction vessel, so as to obtain the first calibrator distribution amount distributed by the first sample dispensing component 110 into the reaction vessel. The above operation of controlling the second sample dispensing component 120 to aspirate the sample addition calibrator and distribute the sample addition calibrator into the reaction vessel and controlling the distribution amount detection device to detect the second calibrator distribution amount distributed by the second sample dispensing component 120 into the reaction vessel includes the following operations. The second sample dispensing component 120 is controlled to aspirate the diluent and distribute the diluent into the reaction vessel, the reagent distribution device 200 is controlled to aspirate the pigment solution and distribute the pigment solution into the reaction vessel, and the first optical detection device is controlled to detect an absorbance of a fourth mixed solution formed by mixing at least the diluent distributed by the second sample dispensing component 120 into the reaction vessel with the pigment solution distributed by the reagent distribution device 200 into the reaction vessel, so as to obtain the second calibrator distribution amount distributed by the second sample dispensing component 120 into the reaction vessel. In the pigment absorbance method according to the embodiment, the sample addition calibrator is a diluent, the pigment solution is added as an auxiliary liquid, and the absorbance of the mixed solution formed of the diluent and the pigment solution is detected in the sample addition calibration process. On a premise that a fixed volume of pigment solution is added, different addition amounts of the diluent may directly affect the absorbance of the mixed solution. After the first sample dispensing component 110 distributes the diluent into the reaction vessel, the pigment solution needs to be distributed by the reagent distribution device 200, and then the first optical detection device is controlled to detect the absorbance of the mixed solution in the reaction vessel, so as to obtain the first calibrator distribution amount; after the second sample dispensing component 120 distributes the diluent into the reaction vessel, the pigment solution needs to be distributed by the reagent distribution device 200, and then the first optical detection device is controlled to detect the absorbance of the mixed solution in the reaction vessel, so as to obtain the second calibrator distribution amount. In a specific application, the pigment solution may not be distributed by the reagent distribution device 200, instead, may be distributed by a special pigment solution distribution device.

As an implementation, the diluent is water (preferably, purified water, deionized water), which is low in cost and is easily available. In a specific application, the diluent is not limited thereto, for example, as an alternative implementation, the diluent may also be a sodium chloride solution or other liquids that may be used to dilute the pigment solution.

Setting of the first optical detection device may refer to the third embodiment, and is not described in detail here.

In addition to the above differences, other portions of the sample analyzer 10 provided in this embodiment may refer to the first embodiment, and are not described in detail here.

### Sixth embodiment

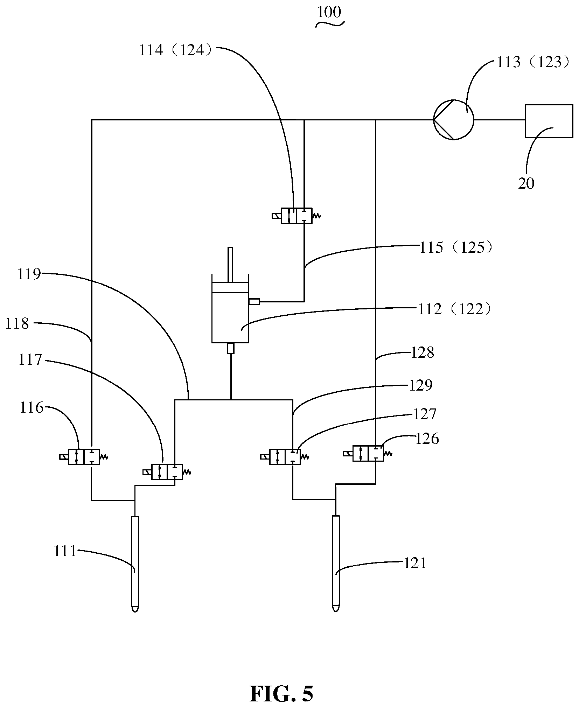

With reference to FIG. 1, FIG. 2 and FIG. 5, a sample analyzer 10 provided in this embodiment differs from the sample analyzer in the first embodiment mainly in that methods for reducing a difference in accuracy between the sample distribution amount of the first sample dispensing component 110 and the sample distribution amount of the second sample dispensing component 120 are different. Specifically, in the first embodiment, the sample distribution amount of the first sample dispensing component 110 and/or the second sample dispensing component 120 is corrected by the sample addition calibration process, to ensure consistency between the sample distribution amount of the first sample dispensing component 110 and the sample distribution amount of the second sample dispensing component 120; whereas in this embodiment, the consistency between the sample distribution amount of the first sample dispensing component 110 and the sample distribution amount of the second sample dispensing component 120 is ensured by sharing at least a portion of their parts.

Specifically, in this embodiment, the first sample dispensing component 110 and the second sample dispensing component 120 share at least a portion of their parts. According to the embodiment, the first sample dispensing component 110 and the second sample dispensing component 120 share at least a portion of their parts, such that a difference in hardware between the first sample dispensing component 110 and the second sample dispensing component 120 may be reduced, and it is beneficial for reducing the difference between the sample distribution amount of the first sample dispensing component 110 and the sample distribution amount of the second sample dispensing component 120, thereby meeting the requirement of the whole analyzer on the consistency between the sample distribution amounts of multiple sample needles without the sample addition calibration process.

As an implementation, the first sample dispensing component 110 further includes a first aspirating and dispensing power part 112 configured to provide a driving force for the first sample needle 111 to perform aspirating and dispensing actions. The second sample dispensing component 120 further includes a second aspirating and dispensing power part 122 configured to provide a driving force for the second sample needle 121 to perform aspirating and dispensing actions. The first aspirating and dispensing power part 112 and the second aspirating and dispensing power part 122 are the same aspirating and dispensing power part. After analysis, in the multi-sample needle system, a main factor affecting a difference in accuracy of the multi-sample needle system is an aspirating and dispensing power source, which accounts for more than 70%. To reduce a difference in sample distribution amount caused by the aspirating and dispensing power source, the embodiment designs a sample distribution device 100 with a single dispensing power source and multiple sample needle channels. The multi-sample needle system shares the dispensing power source to distribute samples, which may effectively reduce the difference of the multiple sample needle channels. The design of sharing the power source may reduce the difference in accuracy of the multi-sample needle system by more than 70%, and thus can meet, after calculation, precision requirements on the sample distribution and the detection of the clinical detection item. It is unnecessary to additionally perform calibration for the clinical detection items respectively or distribute different detection items to different sample needles, thereby may greatly saving the calibration cost and improving the detection efficiency.

As an implementation, the first sample dispensing component 110 and the second sample dispensing component 120 may share other parts in addition to the dispensing power source, to share as many parts as possible to ensure the consistency between the sample distribution amounts of the two dispensing components.

As an implementation, the first sample dispensing component 110 further includes a first cleaning driving part 113 configured to drive at least a cleaning liquid to rinse the first sample needle 111. The second sample dispensing component 120 further includes a second cleaning driving part 123 configured to drive at least the cleaning liquid to rinse the second sample needle 121. The controller 400 is configured to: control the second cleaning driving part 123 to drive the cleaning liquid to rinse the second sample needle 121 when controlling the first aspirating and dispensing power part 112 to drive the first sample needle 111 to perform the sample distribution action; and/or, control the first cleaning driving part 113 to drive the cleaning liquid to rinse the first sample needle 111 when controlling the second aspirating and dispensing power part 122 to drive the second sample needle 121 to perform the sample distribution action. In the implementation, the first sample dispensing component 110 and the second sample dispensing component 120 distribute samples and clean the sample needle alternately, that is, when one of the first sample dispensing component 110 and the second sample dispensing component 120 performs the sample distribution action, another one of the first sample dispensing component 110 and the second sample dispensing component 120 performs a cleaning action. Therefore, influence of the cleaning time on the sample detection efficiency may be reduced.

As an implementation, the first sample dispensing component 110 further includes a first cleaning control valve 114 and a first liquid path 115. The first liquid path 115 is connected between the first cleaning driving part 113 and the first aspirating and dispensing power part 112, the first cleaning driving part 113 is configured to drive at least the cleaning liquid provided by the cleaning liquid supply device 20 to flow toward the first liquid path 115, and the first cleaning control valve 114 is arranged on the first liquid path 115 to control on/off of the first liquid path 115. The second sample dispensing component 120 further includes a second cleaning control valve 124 and a second liquid path 125. The second liquid path 125 is connected between the second cleaning driving part 123 and the second aspirating and dispensing power part 122, the second cleaning driving part 123 is configured to drive at least the cleaning liquid provided by the cleaning liquid supply device 20 to flow toward the second liquid path 125, and the second cleaning control valve 124 is arranged on the second liquid path 125 to control on/off of the second liquid path 125. The first cleaning driving part 113 and the second cleaning driving part 123 are the same part, the first cleaning control valve 114 and the second cleaning control valve 124 are the same part, and the first liquid path 115 and the second liquid path 125 are the same liquid path. According to the implementation, the first sample dispensing component 110 and the second sample dispensing component 120 share a cleaning liquid power source and at least a portion of the cleaning control valves in addition to the dispensing power source, which is beneficial both for ensuring the consistency between the sample distribution amounts of the first sample dispensing component 110 and the second sample dispensing component 120 and for reducing cost of the sample distribution device 100. In a specific application, as an alternative implementation, the first sample dispensing component 110 and the second sample dispensing component 120 may not share the cleaning liquid power source and a portion of the cleaning control valves. That is, in an alternative implementation, the first cleaning driving part 113 and the second cleaning driving part 123 are two parts that drive the flow of the cleaning liquid independently of each other, the first cleaning control valve 114 and the second cleaning control valve 124 are two parts that control the on/off of respective liquid paths independently of each other, and the first liquid path 115 and the second liquid path 125 are two liquid paths arranged in parallel.

As an implementation, the first sample dispensing component 110 further includes a third cleaning control valve 116, a first sample addition control valve 117, a third liquid path 118, and a fourth liquid path 119. The third liquid path 118 is connected between the first cleaning driving part 113 and the first sample needle 111, the fourth liquid path 119 is connected between the first aspirating and dispensing power part 112 and the first sample needle 111, the third cleaning control valve 116 is arranged on the third liquid path 118 to control on/off of the third liquid path 118, and the first sample addition control valve 117 is arranged on the fourth liquid path 119 to control on/off of the fourth liquid path 119. The second sample dispensing component 120 further includes a fourth cleaning control valve 126, a second sample addition control valve 127, a fifth liquid path 128, and a sixth liquid path 129. The fifth liquid path 128 is connected between the second cleaning driving part 123 and the second sample needle 121, the sixth liquid path 129 is connected between the second aspirating and dispensing power part 122 and the second sample needle 121, the fourth cleaning control valve 126 is arranged on the fifth liquid path 128 to control on/off of the fifth liquid path 128, and the second sample addition control valve 127 is arranged on the sixth liquid path 129 to control on/off of the sixth liquid path 129. The controller 400 is configured to: when it is required to control the first sample dispensing component 110 to perform the sample distribution action, control the first cleaning control valve 114, the second cleaning control valve 124, the third cleaning control valve 116 and the second sample addition control valve 127 to be closed, control the first sample addition control valve 117 and the fourth cleaning control valve 126 to be opened, control the first aspirating and dispensing power part 112 to start operation to drive the first sample needle 111 to perform the sample distribution action, and control the second cleaning driving part 123 to start operation to drive the cleaning liquid to rinse the second sample needle 121; when it is required to control the second sample dispensing component 120 to perform the sample distribution action, control the first cleaning control valve 114, the second cleaning control valve 124, the fourth cleaning control valve 126 and the first sample addition control valve 117 to be closed, control the second sample addition control valve 127 and the third cleaning control valve 116 to be opened, control the second aspirating and dispensing power part 122 to start operation to drive the second sample needle 121 to perform the sample distribution action, and control the first cleaning driving part 113 to start operation to drive the cleaning liquid to rinse the first sample needle 111. With the implementation, a design requirement that one of the sample needles performs the sample distribution action and another of the sample needles performs the cleaning action may be met.

In addition to the above differences, other portions of the sample analyzer 10 provided in this embodiment may refer to the first to fifth embodiments, and are not described in detail here.

### Seventh embodiment

A sample analyzer 10 provided in this embodiment differs from the sample analyzer in the first embodiment mainly in that methods for reducing a difference in accuracy between the sample distribution amount of the first sample dispensing component 110 and the sample distribution amount of the second sample dispensing component 120 are different. Specifically, in the first embodiment, the sample distribution amount of the first sample dispensing component 110 and/or the second sample dispensing component 120 is corrected by the sample addition calibration process of whole analyzer, to ensure the consistency between the sample distribution amount of the first sample dispensing component 110 and the sample distribution amount of the second sample dispensing component 120; whereas in this embodiment, at least a portion of parts of the first sample dispensing component 110 and the second sample dispensing component 120 are calibrated in advance so as to obtain a sample addition correction parameter, and the sample addition correction parameter is associated with a corresponding part. When the part associated with the sample addition correction parameter is applied to the sample analyzer 10, the sample addition correction parameter may be directly acquired without performing calibration in the sample analyzer 10.

Specifically, in the embodiment, at least a portion of the parts of at least one of the first sample dispensing component 110 and the second sample dispensing component 120 are associated with a sample addition correction parameter. The sample analyzer 10 further includes a first information acquisition part and a controller 400, and the first information acquisition part is configured to acquire a sample addition compensation parameter of the first sample dispensing component 110 and/or the second sample dispensing component 120. The controller 400 is further configured to: acquire the sample addition correction parameter of the first sample dispensing component 110 and/or the second sample dispensing component 120 based on information fed back by the first information acquisition part; and correct, based on the sample addition correction parameter of the first sample dispensing component 110 and/or the second sample dispensing component 120, a sample distribution amount of the first sample dispensing component 110 upon performing the sample distribution action and/or a sample distribution amount of the second sample dispensing component 120 upon performing the sample distribution action. In the embodiment, at least a portion of the parts of at least one of the first sample dispensing component 110 and the second sample dispensing component 120 are calibrated in advance so as to obtain the sample addition correction parameter, and the sample addition correction parameter is associated with the corresponding part. In this way, when the part is loaded in the sample analyzer, the sample distribution amount of the first sample dispensing component 110 upon performing the sample distribution action and/or the sample distribution amount of the second sample dispensing component 120 upon performing the sample distribution action may be corrected by acquiring the sample addition correction parameter associated with the part directly, such that a design requirement for a target sample distribution amount is met. That is, calibration of the first sample dispensing component 110 and the second sample dispensing component 120 is performed in advance on parts, rather than being performed at the whole sample analyzer 10. In this way, it is unnecessary to perform the sample addition calibration process again after the first sample dispensing component 110 and the second sample dispensing component 120 are loaded, and it is unnecessary to additionally perform calibration for the clinical detection items respectively or distribute different detection items to different sample needles, which may save the calibration cost and improve the detection efficiency of the sample analyzer 10.

As an implementation, at least a portion of the parts of at least one of the first sample dispensing component 110 and the second sample dispensing component 120 are configured with an identification code associated with a sample addition correction parameter of the part. The first information acquisition part acquires the sample addition correction parameter of the first sample dispensing component 110 and/or the second sample dispensing component 120 by identifying the identification code. The identification code includes at least one of a bar code, a two-dimensional code, or a radio frequency code. In the implementation, the sample addition correction parameter of at least a portion of the parts of the first sample dispensing component 110 and the second sample dispensing component 120 are acquired by scanning the code, to correct the sample distribution amount of the first sample dispensing component 110 and/or the second sample dispensing component 120, such that a quick calibration of the first sample dispensing component 110 and/or the second sample dispensing component 120 may be achieved. Furthermore, the method for coding the sample addition correction parameter into the identification code greatly simplifies a complexity of human operations, and when a dispensing component or a dispensing part is replaced, the sample addition correction parameter may be configured by scanning the code directly, which greatly increases replaceability and convenience of calibration for the component and the part.

As an implementation, a label paper is pasted to at least a portion of the parts of at least one of the first sample dispensing component 110 and the second sample dispensing component 120, and the identification code is provided on the label paper. The identification code is fixed on the part by pasting to the part, which is convenient for operation.

As an implementation, the first sample needle 111 is configured with a first identification code associated with a sample addition correction parameter of the first sample needle 111. The first information acquisition part is configured to identify the first identification code. The controller 400 is further configured to: acquire the sample addition correction parameter of the first sample needle 111 based on information fed back by the first information acquisition part by identifying the first identification code; and correct, based on at least the sample addition correction parameter of the first sample needle 111, a sample distribution amount of the first sample dispensing component 110 upon performing the sample distribution action, such that a deviation between a sample distribution accuracy of the first sample dispensing component 110 and a sample distribution accuracy of the second sample dispensing component 120 is less than or equal to a first preset value. In the implementation, the first sample needle 111 is carried with the first identification code. When the first sample needle 111 is loaded in the sample analyzer 10, the sample addition correction parameter of the first sample needle 111 may be obtained by scanning the code, and the sample distribution amount of the first sample dispensing component 110 upon performing the sample distribution action is corrected based on the sample addition correction parameter of the first sample needle 111. Thus, it is unnecessary to perform the sample addition calibration process in the whole analyzer.

As an implementation, the second sample needle 121 is configured with a second identification code associated with a sample addition correction parameter of the second sample needle 121. The sample analyzer 10 further includes a first information acquisition part configured to identify the second identification code. The controller 400 is further configured to: acquire the sample addition correction parameter of the second sample needle 121 based on information fed back by the first information acquisition part by identifying the second identification code; and correct, based on at least the sample addition correction parameter of the second sample needle 121, a sample distribution amount of the second sample dispensing component 120 upon performing the sample distribution action, such that a deviation between a sample distribution accuracy of the first sample dispensing component 110 and a sample distribution accuracy of the second sample dispensing component 120 is less than or equal to a first preset value. In the implementation, the second sample needle 121 is carried with the second identification code. When the second sample needle 121 is loaded in the sample analyzer 10, the sample addition correction parameter of the second sample needle 121 may be obtained by scanning the code, and the sample distribution amount of the second sample dispensing component 120 upon performing the sample distribution action is corrected based on the sample addition correction parameter of the second sample needle 121. Thus, it is unnecessary to perform the sample addition calibration process in the whole analyzer.

As an implementation, the controller 400 is further configured to acquire the sample addition correction parameter of the first sample needle 111 based on the information fed back by the first information acquisition part by identifying the first identification code, before controlling the first sample needle 111 to perform the sample distribution action in the sample analyzer 10 for the first time. A time before the first sample needle 111 performs the sample distribution action in the sample analyzer 10 for the first time, may be a time after the sample analyzer 10 is assembled for the first time in an application scenario and before the first sample needle 111 performs the sample distribution action for the first time, or may be a time after the first sample needle 111 is replaced when the sample analyzer 10 has been used for a period of time and before the replaced first sample needle 111 performs the sample distribution action for the first time. In a specific application, when the first sample needle 111 fails or is damaged, a calibrated sample needle with an identification code may be re-taken as a new first sample needle 111 to replace an old first sample needle 111 on the sample analyzer 10. After the first sample needle 111 is replaced and loaded into the analyzer, the code is re-scanned and the sample distribution parameter of the first sample dispensing component 110 is configured, to continue to use multiple sample needles to jointly distribute samples.

As an implementation, the controller 400 is further configured to acquire the sample addition correction parameter of the second sample needle 121 based on the information fed back by the first information acquisition part by identifying the second identification code, before controlling the second sample needle 121 to perform the sample distribution action in the sample analyzer 10 for the first time. A time before the second sample needle 121 performs the sample distribution action in the sample analyzer 10 for the first time, may be a time after the sample analyzer 10 is assembled for the first time in an application scenario and before the second sample needle 121 performs the sample distribution action for the first time, or may be a time after the second sample needle 121 is replaced when the sample analyzer 10 has been used for a period of time and before the replaced second sample needle 121 performs the sample distribution action for the first time. In a specific application, when the second sample needle 121 fails or is damaged, a calibrated sample needle with an identification code may be re-taken as a new second sample needle 121 to replace an old second sample needle 121 on the sample analyzer 10. After the second sample needle is replaced and loaded into the analyzer, the code is re-scanned and the sample distribution parameter of the second sample dispensing component 120 is configured, to continue to use multiple sample needles to jointly distribute samples.

As an implementation, the first sample dispensing component 110 further includes a first aspirating and dispensing power part 112 configured to provide a driving force for the first sample needle 111 to perform aspirating and dispensing actions. The first aspirating and dispensing power part 112 is configured with a third identification code associated with a sample addition correction parameter of the first aspirating and dispensing power part 112, and the sample analyzer 10 further includes a first information acquisition part configured to identify the third identification code. The controller 400 is further configured to: acquire the sample addition correction parameter of the first aspirating and dispensing power part 112 based on information fed back by the first information acquisition part by identifying the third identification code; and correct, based on the sample addition correction parameter of the first aspirating and dispensing power part 112, a sample distribution amount of the first sample dispensing component 110 upon performing the sample distribution action, such that a deviation between a sample distribution accuracy of the first sample dispensing component 110 and a sample distribution accuracy of the second sample dispensing component 120 is less than or equal to a first preset value. In the implementation, the first aspirating and dispensing power part 112 is carried with the third identification code. When the first aspirating and dispensing power part 112 is loaded in the sample analyzer 10, the sample addition correction parameter of the first aspirating and dispensing power part 112 may be obtained by scanning the code, and the sample distribution amount of the first sample dispensing component 110 upon performing the sample distribution action is corrected based on the sample addition correction parameter of the first aspirating and dispensing power part 112. Thus, it is unnecessary to perform the sample addition calibration process in the whole analyzer.

As an implementation, the second sample dispensing component 120 further includes a second aspirating and dispensing power part 122 configured to provide a driving force for the second sample needle 121 to perform aspirating and dispensing actions, the second aspirating and dispensing power part 122 is configured with a fourth identification code associated with a sample addition correction parameter of the second aspirating and dispensing power part 122, and the sample analyzer 10 further includes a first information acquisition part configured to identify the fourth identification code. The controller 400 is further configured to: acquire the sample addition correction parameter of the second aspirating and dispensing power part 122 based on information fed back by the first information acquisition part by identifying the fourth identification code; and correct, based on the sample addition correction parameter of the second aspirating and dispensing power part 122, a sample distribution amount of the second sample dispensing component 120 upon performing the sample distribution action, such that a deviation between a sample distribution accuracy of the first sample dispensing component 110 and a sample distribution accuracy of the second sample dispensing component 120 is less than or equal to a first preset value. In the implementation, the second aspirating and dispensing power part 122 is carried with the fourth identification code. When the second aspirating and dispensing power part 122 is loaded in the sample analyzer 10, the sample addition correction parameter of the second aspirating and dispensing power part 122 may be obtained by scanning the code, and the sample distribution amount of the second sample dispensing component 120 upon performing the sample distribution action is corrected based on the sample addition correction parameter of the second aspirating and dispensing power part 122. Thus, it is unnecessary to perform the sample addition calibration process in the whole analyzer.

As an implementation, the controller 400 is further configured to acquire the sample addition correction parameter of the first aspirating and dispensing power part 112 based on the information fed back by the first information acquisition part by identifying the third identification code, before controlling the first aspirating and dispensing power part 112 to perform the sample distribution action in the sample analyzer 10 for the first time. A time before the first aspirating and dispensing power part 112 performs the sample distribution action in the sample analyzer 10 for the first time, may be a time after the sample analyzer 10 is assembled for the first time in an application scenario and before the first aspirating and dispensing power part 112 performs the sample distribution action for the first time, or may be a time after the first aspirating and dispensing power part 112 is replaced when the sample analyzer 10 has been used for a period of time and before the replaced first aspirating and dispensing power part 112 performs the sample distribution action for the first time. In a specific application, when the first aspirating and dispensing power part 112 fails or is damaged, a calibrated aspirating and dispensing power part with an identification code may be re-taken as a new first aspirating and dispensing power part 112 to replace an old first aspirating and dispensing power part 112 on the sample analyzer 10. After the first aspirating and dispensing power part 112 is replaced and loaded in the analyzer, the code is re-scanned and the sample distribution parameter of the first sample dispensing component 110 is configured, to continue to use multiple sample needles to jointly distribute samples.

As an implementation, the controller 400 is further configured to acquire the sample addition correction parameter of the second aspirating and dispensing power part 122 based on the information fed back by the first information acquisition part by identifying the fourth identification code, before controlling the second aspirating and dispensing power part 122 to perform the sample distribution action in the sample analyzer 10 for the first time. A time before the second aspirating and dispensing power part 122 performs the sample distribution action in the sample analyzer 10 for the first time, may be a time after the sample analyzer 10 is assembled for the first time in an application scenario and before the second aspirating and dispensing power part 122 performs the sample distribution action for the first time, or may be a time after the second aspirating and dispensing power part 122 is replaced when the sample analyzer 10 has been used for a period of time and before the replaced second aspirating and dispensing power part 122 performs the sample distribution action for the first time. In a specific application, when the second aspirating and dispensing power part 122 fails or is damaged, a calibrated aspirating and dispensing power part with an identification code may be re-taken as a new second aspirating and dispensing power part 122 to replace an old second aspirating and dispensing power part 122 in the sample analyzer 10. After the second aspirating and dispensing power part 122 is replaced and loaded in the analyzer, the code is re-scanned and the sample distribution parameter of the second sample dispensing component 120 is configured, to continue to use multiple sample needles to jointly distribute samples.

After analysis, in the multi-sample needle system, main factors affecting a difference in accuracy of the multi-sample needle system are the aspirating and dispensing power part and the sample needle, in which the influence of the aspirating and dispensing power part accounts for more than 70%, and the influence of the sample needle accounts for more than 25%. In order to reduce a difference in sample distribution amount caused by a difference between the aspirating and dispensing power parts and a difference between the sample needles, this embodiment designs a method for calibrating the aspirating and dispensing power part and the sample needle, such that a target sample distribution amount may be reached, and the sample distribution parameter may be configured by scanning the code. It is unnecessary to perform the sample addition calibration process on the multiple sample needles again after the first sample dispensing component 110 and the second sample dispensing component 120 and their parts are loaded. The method for calibrating the aspirating and dispensing power part and the sample needle may reduce the difference in accuracy of the multi-sample needle system by more than 95%, and thus can meet, after calculation, precision requirements on the sample distribution and the detection of the clinical detection item. It is unnecessary to additionally perform calibration for the clinical detection items respectively or distribute different detection items to different sample needles, which may save the calibration cost and improve the detection efficiency of the sample analyzer 10. In a specific application, it is not limited to calibration and generating the identification codes for the aspirating and dispensing power part and the sample needle in advance, and the other parts of the first sample dispensing component 110 and the second sample dispensing component 120 may also be calibrated and generated with the identification codes in advance.

As an implementation, the method for calibrating the first sample dispensing component 110 and the second sample dispensing component 120 and their parts in advance, such that it is unnecessary to perform the sample addition calibration on multiple sample needles after the first sample dispensing component 110 and the second sample dispensing component 120 and their parts are loaded, may include the following operations (1) to (4). (1) Various components and parts of the multi-sample needle system, such as aspirating and dispensing power parts, sample needles, or the like are prepared. (2) A precision measurement platform and corresponding algorithm are applied to the aspirating and dispensing power parts, such that each of the aspirating and dispensing power parts is calibrated to the same target sample distribution amount, a sample addition correction parameter related to each of the aspirating and dispensing power parts is recorded, the sample addition correction parameter is coded into the identification code, and the identification code is pasted on the corresponding aspirating and dispensing power part. (3) A structure measurement platform and corresponding algorithm are applied to the sample needles, such that each of the sample needles is calibrated to the same target sample distribution amount, a sample addition correction parameter related to each of the sample needles is recorded, the sample addition correction parameter is coded into the identification code, and the identification code is pasted on the corresponding sample needle. (4) After the aspirating and dispensing power parts and the sample needles are loaded and mounted on the analyzer, the corresponding sample addition correction parameter is configured by scanning the code. The difference in accuracy of the sample distribution amount of the multi-sample needle system may be substantially removed after the configuration is successful, and joint detection may be directly performed by multiple sample needles, such that it is unnecessary to perform the sample addition calibration process again after being mounted on the analyzer. The method for calibrating the aspirating and dispensing power part and the sample needle may reduce the difference in accuracy of the multi-sample needle system by more than 95%, and thus can meet, after calculation, precision requirements on the sample distribution and the detection of the clinical detection item.

According to this embodiment, the sample addition correction parameters of the first sample dispensing component 110 and the second sample dispensing component 120 are coded into identification codes, such that the parameters may be configured by scanning the codes directly. When a component or part of the multi-sample needle system fails or is damaged, especially the aspirating and dispensing power part and/or the sample needle fails or is damaged, a calibrated aspirating and dispensing power part and/or sample needle with an identification code may be re-taken, and after being loaded in the analyzer, the codes are re-scanned and the sample distribution parameters are configured, to continue to use multiple sample needles to jointly perform the sample distribution action.

According to this embodiment, a solution of separately calibrating the aspirating and dispensing power part and the sample needle is used, the consistency between the sample distribution amounts of the multiple sample needles in the multi-sample needle system is directly ensured from the root cause of the difference in the sample distribution amount, it is unnecessary to separately perform the sample addition calibration process, the clinical item calibration or other operations, and the precision requirements on the clinical item detection may be met. Furthermore, the method for coding the sample addition correction parameter into the identification code greatly simplifies the complexity of the human operations, and when a sample dispensing component and a part are replaced, the sample addition correction parameter may be configured by scanning the code directly, which greatly increases the replaceability and convenience of the multi-sample needle system.

In addition to the above differences, other portions of the sample analyzer 10 provided in this embodiment may refer to the first to sixth embodiments, and are not described in detail here.

### Eighth embodiment

A sample analyzer 10 provided in this embodiment differs from the sample analyzer in the first embodiment mainly in that their reagent, reaction and detection systems are set in different ways. Specifically, in the first embodiment, the first detection process and the second detection process share the reagent system, the reaction system and the detection system; whereas in this embodiment, the first detection process and the second detection process do not share at least one of the reagent system, the reaction system or the detection system.

Specifically, in this embodiment, at least one of the reagent distribution device 200, the reaction device 900, and the sample detection device 300 used in the first detection process and the second detection process are two devices of which at least a portion of parts may operate independently of each other. In this embodiment, the first detection process and the second detection process may not share at least a portion of parts in the reagent system, the reaction system and the detection system, in addition to not sharing at least a portion of parts in the sample system, as long as it is ensured that a final detection result deviation falls within an acceptable range.

As an implementation, at least one of the reagent distribution device 200, the reaction device 900, and the sample detection device 300 used in the first detection process and the second detection process are two devices of which at least a portion of parts may operate independently of each other and have calibration parameters for calibration. In the implementation, a calibration and correction method (such as a method similar to that in the seventh embodiment for coding the correction parameters of some parts in the sample system into the identification code) is used for parts which are inconsistent in the reagent system, the reaction system and the detection system, such that performance of the parts which are not shared in the reagent system, the reaction system and the detection system tends to be consistent. In the implementation, the sample system, the reagent system, the reaction system and the detection system are corrected respectively to meet consistency requirements. In a specific application, as an alternative implementation, the sample distribution amounts of the first sample dispensing component 110 and the second sample dispensing component 120 may be allowed to be inconsistent, while may be corrected by at least one of the reagent system, the reaction system or the detection system, to ensure the consistency of the detection result. For example, a detection result deviation caused by inconsistency of the sample distribution amounts may be corrected by synchronously correcting the reagent system and/or the reaction system, to ensure the consistency of the detection result.

As an implementation, the reagent distribution device 200 includes a second reagent dispensing component and a third reagent dispensing component. The second reagent dispensing component includes a second reagent needle and a fifth aspirating and dispensing power part, and the fifth aspirating and dispensing power part is configured to drive the second reagent needle to aspirate the reagent from the reagent vessel and drive the second reagent needle to dispense at least a portion of the aspirated reagent into the reaction vessel. The third reagent dispensing component includes a third reagent needle and a sixth aspirating and dispensing power part, and the sixth aspirating and dispensing power part is configured to drive the third reagent needle to aspirate the reagent from the reagent vessel and drive the third reagent needle to dispense at least a portion of the aspirated reagent into the reaction vessel. The reaction device 900 includes a second reaction tray and a third reaction tray, each of which is configured to carry the reaction vessel to incubate the sample and the reagent. The detection device includes a second optical receiving part configured to perform optical detection on the to-be-detected solution in the reaction vessel after incubation by the second reaction tray, and a third optical receiving part configured to perform optical detection on the to-be-detected solution in the reaction vessel after incubation by the third reaction tray. The controller 400 is further configured to: correct a reagent distribution amount of the second reagent dispensing component and/or a reagent distribution amount of the third reagent dispensing component, such that a deviation between a reagent distribution accuracy of the second reagent dispensing component and a reagent distribution accuracy of the third reagent dispensing component is less than or equal to a second preset value; correct an incubation condition of the second reaction tray and/or an incubation conditions of the third reaction tray, such that a deviation between an incubation accuracy of the second reaction tray and an incubation accuracy of the third reaction tray is less than or equal to a third preset value; and correct an optical detection accuracy of the second light receiving part and/or an optical detection accuracy of the third light receiving part, such that a deviation between the optical detection accuracy of the second light receiving part and the optical detection accuracy of the third light receiving part is less than or equal to a fourth preset value. In the implementation, the second reagent dispensing component and the third reagent dispensing component may operate in parallel, the second reaction tray and the third reaction tray may operate in parallel, and the second light receiving part and the third light receiving part may operate in parallel.

As an implementation, at least one of the magnetic separation device 500 and the substrate distribution device 101 used in the first detection process and the second detection process are two devices of which at least a portion of parts may operate independently of each other and have calibration parameters for calibration. That is, the first detection process and the second detection process may not share a magnetic separation system and/or a substrate distribution system.

As an implementation, a calibration and correction method (such as a method similar to that in the seventh embodiment for coding the correction parameters of a portion of parts in the sample system into the identification code) may be used for parts which are inconsistent in the magnetic separation system and the substrate distribution system, such that performance of the parts which are not shared in the magnetic separation system and the substrate distribution system tends to be consistent.

In addition to the above differences, other portions of the sample analyzer 10 provided in this embodiment may refer to the first to seventh embodiments, and are not described in detail here.

### Ninth embodiment

A sample analyzer 10 provided in this embodiment differs from the sample analyzer in the first embodiment mainly in that their focuses for protection are different. Specifically, the first embodiment focuses on protecting that the first sample dispensing component 110 and the second sample dispensing component 120 may share the calibration data when they are used to detect the same detection item for different samples; whereas this embodiment focuses on protecting that the calibration data obtained by performing the item calibration process by using the first sample dispensing component 110 may be used in the detection process of the second sample dispensing component 120.

Specifically, the sample analyzer 10 provided in this embodiment includes a sample distribution device 100, a reagent distribution device 200, a sample detection device 300, and a controller 400. The sample distribution device 100 includes a first sample dispensing component 110 and a second sample dispensing component 120. Each of the first sample dispensing component 110 and the second sample dispensing component 120 is configured to perform a sample distribution action including: aspirating a sample from a sample vessel and dispensing at least a portion of the aspirated sample into a reaction vessel. The first sample dispensing component 110 includes a first sample needle 111, the second sample dispensing component 120 includes a second sample needle 121, and the first sample needle 111 and the second sample needle 121 are two sample needles capable of performing the sample distribution action independently of each other. The reagent distribution device 200 is configured to perform a reagent distribution action including: aspirating a reagent from a reagent vessel and dispensing at least a portion of the aspirated reagent into the reaction vessel. The sample detection device 300 is configured to detect a to-be-detected solution prepared from at least the sample distributed by the sample distribution device 100 and the reagent distributed by the reagent distribution device 200. The controller 400 is configured to perform an item calibration process for a first detection item, including: controlling the first sample dispensing component 110 to aspirate an item calibrator from a second calibrator vessel and distribute the item calibrator into the reaction vessel, controlling the reagent distribution device 200 to aspirate the reagent from the reagent vessel and distribute the reagent into the reaction vessel; controlling the sample detection device 300 to detect a calibration solution prepared from at least the item calibrator and the reagent in the reaction vessel; and obtaining first calibration data corresponding to the first detection item based on detection information fed back by the sample detection device 300. The controller 400 is further configured to perform a second detection process for the first detection item, including: controlling the second sample dispensing component 120 to perform the sample distribution action, controlling the reagent distribution device 200 to perform the reagent distribution action, controlling the sample detection device 300 to detect the to-be-detected solution prepared from at least the sample distributed by the second sample dispensing component 120 and the reagent distributed by the reagent distribution device 200, obtaining second detection data based on the detection information fed back by the sample detection device 300, and obtaining a second detection result based on the second detection data and the first calibration data corresponding to the first detection item. In this embodiment, when the second sample dispensing component 120 performs the sample detection process, it may directly use the calibration data obtained by the first sample dispensing component 110 when performing the item calibration process, and thus it is unnecessary to perform the item calibration process on both the first sample dispensing component 110 and the second sample dispensing component 120 with respect to the same detection item, which is beneficial for improving calibration efficiency and reducing calibration cost.

As an implementation of ensuring consistency between the sample distribution amounts of the first sample dispensing component 110 and the second sample dispensing component 120, the sample analyzer 10 further includes a distribution amount detection device. The controller 400 is further configured to perform a sample addition calibration process including: controlling the first sample dispensing component 110 to aspirate a sample addition calibrator and distribute the sample addition calibrator into the reaction vessel; controlling the distribution amount detection device to detect a first calibrator distribution amount distributed by the first sample dispensing component 110 into the reaction vessel; controlling the second sample dispensing component 120 to aspirate the sample addition calibrator and distribute the sample addition calibrator into the reaction vessel; controlling the distribution amount detection device to detect a second calibrator distribution amount distributed by the second sample dispensing component 120 into the reaction vessel; and correcting, based on the first calibrator distribution amount and the second calibrator distribution amount, a sample distribution amount of the first sample dispensing component 110 upon performing the sample distribution action and/or a sample distribution amount of the second sample dispensing component 120 upon performing the sample distribution action, such that a deviation between a sample distribution accuracy of the first sample dispensing component 110 and a sample distribution accuracy of the second sample dispensing component 120 is less than or equal to a first preset value. According to the implementation, the difference in accuracy between the sample distribution amounts of the first sample dispensing component 110 and the second sample dispensing component 120 is reduced by performing the sample addition calibration process by the whole analyzer.

As another implementation of ensuring the consistency between the sample distribution amounts of the first sample dispensing component 110 and the second sample dispensing component 120, the first sample dispensing component 110 further includes a first aspirating and dispensing power part 112 configured to provide a driving force for the first sample needle 111 to perform aspirating and dispensing actions. The second sample dispensing component 120 further includes a second aspirating and dispensing power part 122 configured to provide a driving force for the second sample needle 121 to perform aspirating and dispensing actions. The first aspirating and dispensing power part 112 and the second aspirating and dispensing power part 122 are the same aspirating and dispensing power part. According to the implementation, the difference in accuracy between the sample distribution amounts of the first sample dispensing component 110 and the second sample dispensing component 120 is reduced by sharing a sample dispensing power source.

As another implementation of ensuring the consistency between the sample distribution amounts of the first sample dispensing component 110 and the second sample dispensing component 120, the first sample needle 111 is configured with a first identification code associated with a sample addition correction parameter of the first sample needle 111, and the sample analyzer 10 further includes a first information acquisition part configured to identify the first identification code. The controller 400 is further configured to: acquire the sample addition correction parameter of the first sample needle 111 based on information fed back by the first information acquisition part by identifying the first identification code; and correct, based on at least the sample addition correction parameter of the first sample needle 111, a sample distribution amount of the first sample dispensing component 110 upon performing the sample distribution action, such that a deviation between a sample distribution accuracy of the first sample dispensing component 110 and a sample distribution accuracy of the second sample dispensing component 120 is less than or equal to a first preset value. Additionally or alternatively, the second sample needle 121 is configured with a second identification code associated with a sample addition correction parameter of the second sample needle 121, and the sample analyzer 10 further includes a first information acquisition part configured to identify the second identification code. The controller 400 is further configured to: acquire the sample addition correction parameter of the second sample needle 121 based on information fed back by the first information acquisition part by identifying the second identification code; and correct, based on at least the sample addition correction parameter of the second sample needle 121, a sample distribution amount of the second sample dispensing component 120 upon performing the sample distribution action, such that a deviation between a sample distribution accuracy of the first sample dispensing component 110 and a sample distribution accuracy of the second sample dispensing component 120 is less than or equal to a first preset value. According to the implementation, the difference in accuracy between the sample distribution amounts of the first sample dispensing component 110 and the second sample dispensing component 120 is reduced by coding the correction parameter into the identification code.

In addition to the above differences, other portions of the sample analyzer 10 provided in this embodiment may refer to the first to eighth embodiments, and are not described in detail here.

### Tenth embodiment

A sample analyzer 10 provided in this embodiment differs from the sample analyzer in the first embodiment mainly in different conditions for the first detection process and the second detection process to share the calibration data. Specifically, in the first embodiment, the first detection process and the second detection process share the calibration data when they are used to detect the same detection item for different samples; whereas in this embodiment, the first detection process and the second detection process share the calibration data only in a first operation mode and when a detection item performed by the first detection process and a detection item performed by the second detection process are the same detection item, and the first detection process and the second detection process use different calibration data in a second operation mode and when the detection item performed by the first detection process and the detection item performed by the second detection process are the same detection item.

Specifically, the sample analyzer 10 provided in this embodiment includes a sample distribution device 100, a reagent distribution device 200, a sample detection device 300, and a controller 400. The sample distribution device 100 includes a first sample dispensing component 110 and a second sample dispensing component 120. Each of the first sample dispensing component 110 and the second sample dispensing component 120 is configured to perform a sample distribution action including: aspirating a sample from a sample vessel and dispensing at least a portion of the aspirated sample into a reaction vessel. The first sample dispensing component 110 includes a first sample needle 111, the second sample dispensing component 120 includes a second sample needle 121, and the first sample needle 111 and the second sample needle 121 are two sample needles capable of performing the sample distribution action independently of each other. The reagent distribution device 200 is configured to perform a reagent distribution action including: aspirating a reagent from a reagent vessel and dispensing at least a portion of the aspirated reagent into the reaction vessel. The sample detection device 300 is configured to detect a to-be-detected solution prepared from at least the sample distributed by the sample distribution device 100 and the reagent distributed by the reagent distribution device 200. The controller 400 is configured to perform a first detection process including: controlling the first sample dispensing component 110 to perform the sample distribution action, controlling the reagent distribution device 200 to perform the reagent distribution action, controlling the sample detection device 300 to detect the to-be-detected solution prepared from at least the sample distributed by the first sample dispensing component 110 and the reagent distributed by the reagent distribution device 200, obtaining first detection data based on detection information fed back by the sample detection device 300, and obtaining a first detection result based on the first detection data and first calibration data. The controller 400 is further configured to perform a second detection process including: controlling the second sample dispensing component 120 to perform the sample distribution action, controlling the reagent distribution device 200 to perform the reagent distribution action, controlling the sample detection device 300 to detect the to-be-detected solution prepared from at least the sample distributed by the second sample dispensing component 120 and the reagent distributed by the reagent distribution device 200, obtaining second detection data based on the detection information fed back by the sample detection device 300, and obtaining a second detection result based on the second detection data and second calibration data. The sample analyzer 10 is configured with a first operation mode and a second operation mode. In the first operation mode, the controller 400 is configured to set the first calibration data and the second calibration data to be the same calibration data, when a detection item performed by the first detection process and a detection item performed by the second detection process are the same detection item. In the second operation mode, the controller 400 is configured to set the first calibration data and the second calibration data to be two different calibration data, when the detection item performed by the first detection process and the detection item performed by the second detection process are the same detection item. In this embodiment, the sample analyzer 10 is configured with two operation modes, in one of the operation modes, the first sample dispensing component 110 and the second sample dispensing component 120 may share the calibration data when they are configured to detect the same detection item, and in another operation mode, the first sample dispensing component 110 and the second sample dispensing component 120 may not share the calibration data even when they are configured to detect the same detection item. In this way, it is convenient for a user to select different operation modes according to actual requirements, to meet requirements of different application scenarios and different users.

As an implementation, the controller 400 is configured to perform an item calibration process for a first detection item, including: controlling the first sample dispensing component 110 to aspirate an item calibrator from a second calibrator vessel and distribute the item calibrator into the reaction vessel; controlling the reagent distribution device 200 to aspirate the reagent from the reagent vessel and distribute the reagent into the reaction vessel; controlling the sample detection device 300 to detect a calibration solution prepared from at least the item calibrator and the reagent in the reaction vessel; and obtaining the first calibration data corresponding to the first detection item based on the detection information fed back by the sample detection device 300. In the first operation mode, the controller 400 is configured to perform a second detection process for the first detection item, including: controlling the second sample dispensing component 120 to perform the sample distribution action, controlling the reagent distribution device 200 to perform the reagent distribution action, controlling the sample detection device 300 to detect the to-be-detected solution prepared from at least the sample distributed by the second sample dispensing component 120 and the reagent distributed by the reagent distribution device 200, obtaining second detection data based on the detection information fed back by the sample detection device 300, and obtaining a second detection result based on the second detection data and the first calibration data corresponding to the first detection item. In the implementation, with respect to the same detection item, it is unnecessary to perform the item calibration process on both the first sample dispensing component 110 and the second sample dispensing component 120. When the second sample dispensing component 120 performs the sample detection process, the calibration data obtained by the first sample dispensing component 110 when performing the item calibration process may be directly used, which is beneficial for improving calibration efficiency and reducing calibration cost.

In addition to the above differences, other portions of the sample analyzer 10 provided in this embodiment may refer to the first to ninth embodiments, and are not described in detail here.

### Eleventh embodiment

A sample analyzer 10 provided in this embodiment differs from the sample analyzer in the first embodiment mainly in different conditions for the first detection process and the second detection process to share the calibration data. Specifically, in the first embodiment, the first detection process and the second detection process share the calibration data when they are used to detect the same detection item for different samples; whereas in this embodiment, when a detection item performed by the first detection process and a detection item performed by the second detection process are the same detection item, the first detection process and the second detection process share the calibration data only in a portion of the detection items, and the first detection process and the second detection process use different calibration data in another portion of the detection items.

Specifically, the sample analyzer 10 provided in this embodiment includes a sample distribution device 100, a reagent distribution device 200, a sample detection device 300, and a controller 400. The sample distribution device 100 includes a first sample dispensing component 110 and a second sample dispensing component 120. Each of the first sample dispensing component 110 and the second sample dispensing component 120 is configured to perform a sample distribution action including: aspirating a sample from a sample vessel and dispensing at least a portion of the aspirated sample into a reaction vessel. The first sample dispensing component 110 includes a first sample needle 111, the second sample dispensing component 120 includes a second sample needle 121, and the first sample needle 111 and the second sample needle 121 are two sample needles capable of performing the sample distribution action independently of each other. The reagent distribution device 200 is configured to perform a reagent distribution action including: aspirating a reagent from a reagent vessel and dispensing at least a portion of the aspirated reagent into the reaction vessel. The sample detection device 300 is configured to detect a to-be-detected solution prepared from at least the sample distributed by the sample distribution device 100 and the reagent distributed by the reagent distribution device 200. The controller 400 is configured to perform a first detection process including: controlling the first sample dispensing component 110 to perform the sample distribution action, controlling the reagent distribution device 200 to perform the reagent distribution action, controlling the sample detection device 300 to detect the to-be-detected solution prepared from at least the sample distributed by the first sample dispensing component 110 and the reagent distributed by the reagent distribution device 200, obtaining first detection data based on detection information fed back by the sample detection device 300, and obtaining a first detection result based on the first detection data and first calibration data. The controller 400 is further configured to perform a second detection process including: controlling the second sample dispensing component 120 to perform the sample distribution action, controlling the reagent distribution device 200 to perform the reagent distribution action, controlling the sample detection device 300 to detect the to-be-detected solution prepared from at least the sample distributed by the second sample dispensing component 120 and the reagent distributed by the reagent distribution device 200, obtaining second detection data based on the detection information fed back by the sample detection device 300, and obtaining a second detection result based on the second detection data and second calibration data. The controller 400 is further configured to: set the first calibration data and the second calibration data to be the same calibration data, when a detection item performed by the first detection process and a detection item performed by the second detection process are both a first detection item; and set the first calibration data and the second calibration data to be two different calibration data, when the detection item performed by the first detection process and the detection item performed by the second detection process are both a second detection item. The first detection item and the second detection item are two different detection items. The second detection item is mainly a detection item with a particularly high requirement on consistency. In this embodiment, when the first detection process and the second detection process are configured to detect the same detection item, the calibration data may be shared only in a portion of the detection items; whereas in another portion of the detection items, the calibration data may not be shared even when the first detection process and the second detection process are configured to detect the same detection item.

As an implementation, the controller 400 is further configured to perform an item calibration process for the first detection item, including: controlling the first sample dispensing component 110 to aspirate an item calibrator from a second calibrator vessel and distribute the item calibrator into the reaction vessel, controlling the reagent distribution device 200 to aspirate the reagent from the reagent vessel and distribute the reagent into the reaction vessel, controlling the sample detection device 300 to detect a calibration solution prepared from at least the item calibrator and the reagent in the reaction vessel, and obtaining the first calibration data corresponding to the first detection item based on the detection information fed back by the sample detection device 300. The controller 400 is configured to perform the second detection process for the first detection item, including: controlling the second sample dispensing component 120 to perform the sample distribution action, controlling the reagent distribution device 200 to perform the reagent distribution action, controlling the sample detection device 300 to detect the to-be-detected solution prepared from at least the sample distributed by the second sample dispensing component 120 and the reagent distributed by the reagent distribution device 200, obtaining the second detection data based on the detection information fed back by the sample detection device 300, and obtaining the second detection result based on the second detection data and the first calibration data corresponding to the first detection item.

In addition to the above differences, other portions of the sample analyzer 10 provided in this embodiment may refer to the first to tenth embodiments, and are not described in detail here.

### Twelfth embodiment

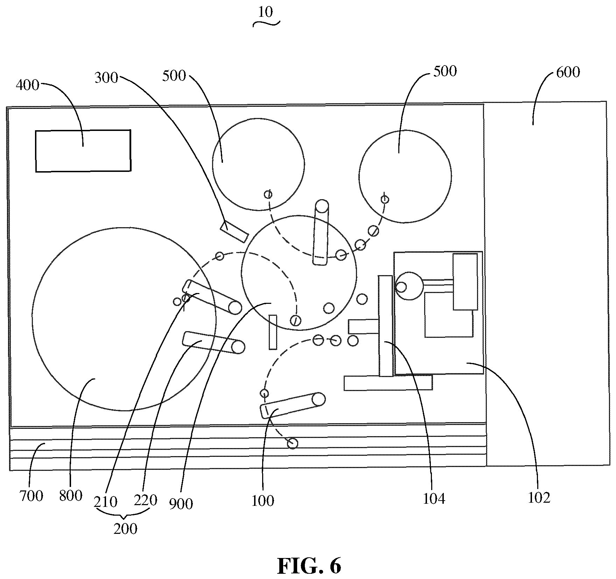

With reference to FIG. 1 to FIG. 4 and FIG. 6, a sample analyzer 10 provided in this embodiment differs from the sample analyzer in the first embodiment mainly in that objects distributed by the multi-needle system are different. Specifically, in the first embodiment, the multi-needle system is configured to distribute the sample; whereas in this embodiment, the multi-needle system is configured to distribute the reagent.

Specifically, the sample analyzer 10 provided in this embodiment includes a sample distribution device 100, a reagent distribution device 200, a sample detection device 300, and a controller 400. The sample distribution device 100 is configured to perform a sample distribution action including: aspirating a sample from a sample vessel and dispensing at least a portion of the aspirated sample into a reaction vessel. The reagent distribution device 200 includes a first reagent dispensing component 210 and a second reagent dispensing component 220. Each of the first reagent dispensing component 210 and the second reagent dispensing component 220 is configured to perform a reagent distribution action including: aspirating a reagent from a reagent vessel and dispensing at least a portion of the aspirated reagent into the reaction vessel. The first reagent dispensing component 210 includes a first reagent needle, the second reagent dispensing component 220 includes a second reagent needle, and the first reagent needle and the second reagent needle are two reagent needles capable of performing the reagent distribution action independently of each other. The sample detection device 300 is configured to detect a to-be-detected solution prepared from at least the sample distributed by the sample distribution device 100 and the reagent distributed by the reagent distribution device 200. The controller 400 is configured to perform a third detection process including: controlling the sample distribution device 100 to perform the sample distribution action, controlling the first reagent dispensing component 210 to perform the reagent distribution action, controlling the sample detection device 300 to detect the to-be-detected solution prepared from at least the sample distributed by the sample distribution device 100 and the reagent distributed by the first reagent dispensing component 210, obtaining third detection data based on detection information fed back by the sample detection device 300, and obtaining a third detection result based on the third detection data and third calibration data. The controller 400 is further configured to perform a fourth detection process including: controlling the sample distribution device 100 to perform the sample distribution action, controlling the second reagent dispensing component 120 to perform the reagent distribution action, controlling the sample detection device 300 to detect the to-be-detected solution prepared from at least the sample distributed by the sample distribution device 100 and the reagent distributed by the second reagent dispensing component 220, obtaining fourth detection data based on the detection information fed back by the sample detection device 300, and obtaining a fourth detection result based on the fourth detection data and fourth calibration data. When a detection item performed by the third detection process and a detection item performed by the fourth detection process are the same detection item, the third calibration data and the fourth calibration data are the same calibration data. In the implementation, the first reagent needle and the second reagent needle may be configured to perform the reagent distribution action for the same detection item, and when a certain detection item needs to be performed in batch, the first reagent needle may be controlled to perform a reagent distribution action for a portion of the detection items, the second reagent needle may be controlled to perform a reagent distribution action for another portion of the detection items, and the first reagent needle and the second reagent needle may be controlled to operate simultaneously or alternately, such that a purpose of improving the detection efficiency of the sample analyzer 10 may be achieved by fully utilizing the first reagent needle and the second reagent needle. Furthermore, since the first reagent needle and the second reagent needle are calibrated by using the same calibration data when they perform the reagent distribution action of the same reagent for the same detection item, it is unnecessary to perform item calibration on each of the first reagent needle and the second reagent needle, which is beneficial for reducing calibration cost and improving calibration efficiency, and the detection efficiency, the calibration cost and the calibration efficiency can be balanced well.

As an implementation, the controller 400 is further configured to perform an item calibration process for a first detection item, including: controlling the sample distribution device 100 to aspirate an item calibrator from a second calibrator vessel and distribute the item calibrator into the reaction vessel, controlling the first reagent dispensing component 210 to aspirate the reagent from the reagent vessel and distribute the reagent into the reaction vessel, controlling the sample detection device 300 to detect a calibration solution prepared from at least the item calibrator and the reagent in the reaction vessel, and obtaining the third calibration data corresponding to the first detection item based on the detection information fed back by the sample detection device 300. The controller 400 is further configured to perform the fourth detection process for the first detection item, including: controlling the sample distribution device 100 to perform the sample distribution action, controlling the second reagent dispensing component 220 to perform the reagent distribution action, controlling the sample detection device 300 to detect the to-be-detected solution prepared from at least the sample distributed by the sample distribution device 100 and the reagent distributed by the second reagent dispensing component 220, obtaining the fourth detection data based on the detection information fed back by the sample detection device 300, and obtaining the fourth detection result based on the fourth detection data and the third calibration data corresponding to the first detection item.

As an implementation, the sample needle system according to this embodiment is a single-sample needle system, that is, the sample distribution device 100 includes a single sample needle and a single sample dispensing power part. In a specific application, as an alternative implementation, the sample distribution device 100 may also be arranged according to the first embodiment. That is, the sample distribution device 100 includes a first sample dispensing component 110 and a second sample dispensing component 120. Each of the first sample dispensing component 110 and the second sample dispensing component 120 is configured to perform a sample distribution action including aspirating a sample from a sample vessel and dispensing at least a portion of the aspirated sample into a reaction vessel. The first sample dispensing component 110 and the second sample dispensing component 120 are two dispensing components of which at least a portion of their parts are capable of performing the sample distribution action independently of each other. The first sample dispensing component 110 includes a first sample needle 111, the second sample dispensing component 120 includes a second sample needle 121, and the first sample needle 111 and the second sample needle 121 are two sample needles capable of performing the sample distribution action independently of each other. The controller 400 is configured to perform a first detection process including: controlling the first sample dispensing component 110 to perform the sample distribution action, controlling the reagent distribution device 200 to perform the reagent distribution action, controlling the sample detection device 300 to detect the to-be-detected solution prepared from at least the sample distributed by the first sample dispensing component 110 and the reagent distributed by the reagent distribution device 200, obtaining first detection data based on detection information fed back by the sample detection device 300, and obtaining a first detection result based on the first detection data and first calibration data. The controller 400 is further configured to perform a second detection process including: controlling the second sample dispensing component 120 to perform the sample distribution action, controlling the reagent distribution device 200 to perform the reagent distribution action, controlling the sample detection device 300 to detect the to-be-detected solution prepared from at least the sample distributed by the second sample dispensing component 120 and the reagent distributed by the reagent distribution device 200, obtaining second detection data based on the detection information fed back by the sample detection device 300, and obtaining a second detection result based on the second detection data and second calibration data. When a detection item performed by the first detection process and a detection item performed by the second detection process are the same detection item, the first calibration data and the second calibration data are the same calibration data. The multi-needle system in this alternative implementation includes a multi-reagent needle system and a multi-sample needle system, and when the multi-reagent needle system is configured to perform the reagent distribution action for the same detection item, the calibration data of the detection item may be shared, and when the multi-sample needle system is configured to perform the sample distribution action for the same detection item, the calibration data may also be shared.

In addition to the above differences, other portions of the sample analyzer 10 provided in this embodiment may refer to the first to eleventh embodiments, and are not described in detail here.

### Thirteenth embodiment

A sample analyzer 10 provided in this embodiment differs from the sample analyzer in the first embodiment mainly in that objects distributed by the multi-needle system are different. Specifically, in the first embodiment, the multi-needle system is configured to distribute the sample; whereas in this embodiment, the multi-needle system is configured to distribute the sample and the reagent.

Specifically, the sample analyzer 10 provided in this embodiment includes a pipetting device, a sample detection device 300, and a controller 400. The pipetting device includes a first pipetting component and a second pipetting component. Each of the first pipetting component and the second pipetting component is configured to perform a liquid distribution action including: aspirating a sample from a sample vessel and dispensing at least a portion of the aspirated sample into a reaction vessel; and aspirating a reagent from a reagent vessel and dispensing at least a portion of the aspirated reagent into the reaction vessel. The first pipetting component includes a first pipetting needle, the second pipetting component includes a second pipetting needle, and the first pipetting needle and the second pipetting needle are two pipetting needles capable of performing the liquid distribution action independently of each other. The sample detection device 300 is configured to detect a to-be-detected solution prepared from at least the sample and the reagent distributed by the pipetting device. The controller 400 is configured to perform a fifth detection process including: controlling the first pipetting component to perform the liquid distribution action, controlling the sample detection device 300 to detect the to-be-detected solution prepared from at least the sample and the reagent distributed by the first pipetting component, obtaining fifth detection data based on detection information fed back by the sample detection device 300, and obtaining a fifth detection result based on the fifth detection data and fifth calibration data. The controller 400 is further configured to perform a sixth detection process including: controlling the second pipetting component to perform the liquid distribution action, controlling the sample detection device 300 to detect the to-be-detected solution prepared from at least the sample and the reagent distributed by the second pipetting component, obtaining sixth detection data based on the detection information fed back by the sample detection device 300, and obtaining a sixth detection result based on the sixth detection data and sixth calibration data. When a detection item performed by the fifth detection process and a detection item performed by the sixth detection process are the same detection item, the fifth calibration data and the sixth calibration data are the same calibration data. In the implementation, the first pipetting needle is configured to distribute both the sample and the reagent, the second pipetting needle is configured to distribute both the sample and the reagent, and the first pipetting needle and the second pipetting needle may be configured to perform the sample distribution action and reagent distribution action for the same detection item. When a certain detection item needs to be performed in batch, the first pipetting needle may be controlled to perform the sample distribution action and the reagent distribution action for a portion of the detection items, the second pipetting needle may be controlled to perform the sample distribution action and the reagent distribution action for another portion of the detection items, such that a purpose of improving the detection efficiency of the sample analyzer 10 may be achieved by fully utilizing the first pipetting needle and the second pipetting needle. Furthermore, since the first pipetting needle and the second pipetting needle are calibrated by using the same calibration data when they perform the sample distribution action for the same detection item and the reagent distribution action of the same reagent, it is unnecessary to perform item calibration on each of the first pipetting needle and the second pipetting needle, which is beneficial for reducing calibration cost and improving calibration efficiency, and the detection efficiency, the calibration cost and the calibration efficiency can be balanced well.

As an implementation, the controller 400 is further configured to perform an item calibration process for a first detection item, including: controlling the first pipetting component to aspirate an item calibrator from a second calibrator vessel and distribute the item calibrator into the reaction vessel, controlling the first pipetting component to aspirate the reagent from the reagent vessel and distribute the reagent into the reaction vessel, controlling the sample detection device 300 to detect a calibration solution prepared from at least the item calibrator and the reagent in the reaction vessel, and obtaining the fifth calibration data corresponding to the first detection item based on the detection information fed back by the sample detection device 300. The controller 400 is configured to perform the sixth detection process for the first detection item, including: controlling the second pipetting component to perform the liquid distribution action, controlling the sample detection device 300 to detect the to-be-detected solution prepared from at least the sample and the reagent distributed by the second pipetting component, obtaining the sixth detection data based on the detection information fed back by the sample detection device 300, and obtaining the sixth detection result based on the sixth detection data and the fifth calibration data corresponding to the first detection item.

In addition to the above differences, other portions of the sample analyzer 10 provided in this embodiment may refer to the first to twelfth embodiments, and are not described in detail here.

The above descriptions are only preferred embodiments of the invention, and are not intended to limit the patent scope of the invention. Any equivalent structural transformation made by using contents in the specification and drawings of the invention with the inventive concept of the invention, or its direct/indirect application to other relevant technical fields, shall fall within the scope of protection of the invention.

## Claims

1. A sample analyzer, comprising:
a sample distribution device, comprising a first sample dispensing component and a second sample dispensing component, wherein each of the first sample dispensing component and the second sample dispensing component is configured to perform a sample distribution action comprising aspirating a sample from a sample vessel and dispensing at least a portion of the aspirated sample into a reaction vessel, wherein the first sample dispensing component comprises a first sample needle, the second sample dispensing component comprises a second sample needle, and the first sample needle and the second sample needle are two sample needles capable of performing the sample distribution action independently of each other;
a reagent distribution device, configured to perform a reagent distribution action comprising aspirating a reagent from a reagent vessel and dispensing at least a portion of the aspirated reagent into the reaction vessel;
a sample detection device, configured to detect a to-be-detected solution prepared from at least the sample distributed by the sample distribution device and the reagent distributed by the reagent distribution device; and
a controller, configured to perform a first detection process comprising: controlling the first sample dispensing component to perform the sample distribution action, controlling the reagent distribution device to perform the reagent distribution action, controlling the sample detection device to detect the to-be-detected solution prepared from at least the sample distributed by the first sample dispensing component and the reagent distributed by the reagent distribution device, obtaining first detection data based on detection information fed back by the sample detection device, and obtaining a first detection result based on the first detection data and first calibration data; wherein
the controller is further configured to perform a second detection process comprising: controlling the second sample dispensing component to perform the sample distribution action, controlling the reagent distribution device to perform the reagent distribution action, controlling the sample detection device to detect the to-be-detected solution prepared from at least the sample distributed by the second sample dispensing component and the reagent distributed by the reagent distribution device, obtaining second detection data based on the detection information fed back by the sample detection device, and obtaining a second detection result based on the second detection data and second calibration data,
wherein when a detection item performed by the first detection process and a detection item performed by the second detection process are the same detection item, the first calibration data and the second calibration data are the same calibration data.

2. The sample analyzer of claim 1, wherein a deviation between a sample distribution accuracy of the first sample dispensing component and a sample distribution accuracy of the second sample dispensing component is less than or equal to a first preset value, and the first preset value is equal to or greater than zero and less than or equal to 5%,
wherein the first preset value is preferably less than or equal to 2%.

3. The sample analyzer of claim 1 or 2, further comprising a distribution amount detection device, wherein
the controller is further configured to perform a sample addition calibration process comprising: controlling the first sample dispensing component to aspirate a sample addition calibrator and distribute the sample addition calibrator into the reaction vessel, and controlling the distribution amount detection device to detect a first calibrator distribution amount distributed by the first sample dispensing component into the reaction vessel; controlling the second sample dispensing component to aspirate the sample addition calibrator and distribute the sample addition calibrator into the reaction vessel, and controlling the distribution amount detection device to detect a second calibrator distribution amount distributed by the second sample dispensing component into the reaction vessel; correcting, based on the first calibrator distribution amount and the second calibrator distribution amount, a sample distribution amount of the first sample dispensing component upon performing the sample distribution action and/or a sample distribution amount of the second sample dispensing component upon performing the sample distribution action, such that a deviation between a sample distribution accuracy of the first sample dispensing component and a sample distribution accuracy of the second sample dispensing component is less than or equal to a first preset value.

4. The sample analyzer of claim 3, wherein the correcting, based on the first calibrator distribution amount and the second calibrator distribution amount, a sample distribution amount of the first sample dispensing component upon performing the sample distribution action and/or a sample distribution amount of the second sample dispensing component upon performing the sample distribution action, comprises:
calculating a first deviation value of the second calibrator distribution amount relative to the first calibrator distribution amount, and correcting, based on the first deviation value, the sample distribution amount of the second sample dispensing component upon performing the sample distribution action; or
calculating a second deviation value of the first calibrator distribution amount relative to the second calibrator distribution amount, and correcting, based on the second deviation value, the sample distribution amount of the first sample dispensing component upon performing the sample distribution action; or
calculating a third deviation value of the first calibrator distribution amount relative to a reference amount; calculating a fourth deviation value of the second calibrator distribution amount relative to the reference amount; correcting, based on the third deviation value, the sample distribution amount of the first sample dispensing component upon performing the sample distribution action; and correcting, based on the fourth deviation value, the sample distribution amount of the second sample dispensing component upon performing the sample distribution action,
wherein the reference amount is a target distribution amount of the sample actually required to be distributed by the sample distribution device into the reaction vessel in the sample distribution action, or there is a preset difference between the reference amount and the target distribution amount of the sample actually required to be distributed by the sample distribution device into the reaction vessel in the sample distribution action.

5. The sample analyzer of claim 3 or 4, wherein the correcting, based on the first calibrator distribution amount and the second calibrator distribution amount, a sample distribution amount of the first sample dispensing component upon performing the sample distribution action and/or a sample distribution amount of the second sample dispensing component upon performing the sample distribution action, comprises:
calculating a first deviation value of the second calibrator distribution amount relative to the first calibrator distribution amount, obtaining a first correction parameter based on the first deviation value, calculating a corrected sample distribution amount of the second sample dispensing component based on a target distribution amount of the sample actually required to be distributed by the sample distribution device into the reaction vessel in the sample distribution action and the first correction parameter, and keeping the sample distribution amount of the first sample dispensing component unchanged; or
calculating a second deviation value of the first calibrator distribution amount relative to the second calibrator distribution amount, obtaining a second correction parameter based on the second deviation value, calculating a corrected sample distribution amount of the first sample dispensing component based on a target distribution amount of the sample actually required to be distributed by the sample distribution device into the reaction vessel in the sample distribution action and the second correction parameter, and keeping the sample distribution amount of the second sample dispensing component unchanged; or
calculating a third deviation value of the first calibrator distribution amount relative to a reference amount, obtaining a third correction parameter based on the third deviation value, calculating a corrected sample distribution amount of the first sample dispensing component based on a target distribution amount of the sample actually required to be distributed by the sample distribution device into the reaction vessel in the sample distribution action and the third correction parameter; and calculating a fourth deviation value of the second calibrator distribution amount relative to the reference amount, obtaining a fourth correction parameter based on the fourth deviation value, and calculating a corrected sample distribution amount of the second sample dispensing component based on the target distribution amount and the fourth correction parameter, wherein the reference amount is the target distribution amount, or there is a preset difference between the reference amount and the target distribution amount.

6. The sample analyzer of claim 3, wherein
the distribution amount detection device is a weighing device; wherein the controlling the distribution amount detection device to detect a first calibrator distribution amount distributed by the first sample dispensing component into the reaction vessel comprises: controlling the weighing device to weigh the sample addition calibrator distributed by the first sample dispensing component into the reaction vessel, and obtaining, based on weight information fed back by the weighing device, the first calibrator distribution amount distributed by the first sample dispensing component into the reaction vessel; and wherein the controlling the distribution amount detection device to detect a second calibrator distribution amount distributed by the second sample dispensing component into the reaction vessel comprises: controlling the weighing device to weigh the sample addition calibrator distributed by the second sample dispensing component into the reaction vessel, and obtaining, based on the weight information fed back by the weighing device, the second calibrator distribution amount distributed by the second sample dispensing component into the reaction vessel;
or,
the distribution amount detection device is a first optical detection device, and the sample addition calibrator is a pigment solution; wherein the controlling the first sample dispensing component to aspirate a sample addition calibrator and distribute the sample addition calibrator into the reaction vessel and controlling the distribution amount detection device to detect a first calibrator distribution amount distributed by the first sample dispensing component into the reaction vessel, comprises: controlling the first sample dispensing component to aspirate the pigment solution and distribute the pigment solution into the reaction vessel, and controlling the first optical detection device to detect an absorbance of the pigment solution distributed by the first sample dispensing component into the reaction vessel, so as to obtain the first calibrator distribution amount distributed by the first sample dispensing component into the reaction vessel; and wherein the controlling the second sample dispensing component to aspirate the sample addition calibrator and distribute the sample addition calibrator into the reaction vessel and controlling the distribution amount detection device to detect a second calibrator distribution amount distributed by the second sample dispensing component into the reaction vessel, comprises: controlling the second sample dispensing component to aspirate the pigment solution and distribute the pigment solution into the reaction vessel, and controlling the first optical detection device to detect an absorbance of the pigment solution distributed by the second sample dispensing component into the reaction vessel, so as to obtain the second calibrator distribution amount distributed by the second sample dispensing component into the reaction vessel;
or,
the distribution amount detection device is a first optical detection device, and the sample addition calibrator is a pigment solution; wherein the controlling the first sample dispensing component to aspirate a sample addition calibrator and distribute the sample addition calibrator into the reaction vessel and controlling the distribution amount detection device to detect a first calibrator distribution amount distributed by the first sample dispensing component into the reaction vessel, comprises: controlling the first sample dispensing component to aspirate the pigment solution and distribute the pigment solution into the reaction vessel, controlling the reagent distribution device to aspirate a diluent and distribute the diluent into the reaction vessel, and controlling the first optical detection device to detect an absorbance of a first mixed solution formed by mixing at least the pigment solution distributed by the first sample dispensing component into the reaction vessel with the diluent distributed by the reagent distribution device into the reaction vessel, so as to obtain the first calibrator distribution amount distributed by the first sample dispensing component into the reaction vessel; and wherein the controlling the second sample dispensing component to aspirate the sample addition calibrator and distribute the sample addition calibrator into the reaction vessel and controlling the distribution amount detection device to detect a second calibrator distribution amount distributed by the second sample dispensing component into the reaction vessel, comprises: controlling the second sample dispensing component to aspirate the pigment solution and distribute the pigment solution into the reaction vessel, controlling the reagent distribution device to aspirate a diluent and distribute the diluent into the reaction vessel, and controlling the first optical detection device to detect an absorbance of a second mixed solution formed by mixing at least the pigment solution distributed by the second sample dispensing component into the reaction vessel with the diluent distributed by the reagent distribution device into the reaction vessel, so as to obtain the second calibrator distribution amount distributed by the second sample dispensing component into the reaction vessel;
or,
the distribution amount detection device is a first optical detection device, and the sample addition calibrator is a diluent; wherein the controlling the first sample dispensing component to aspirate a sample addition calibrator and distribute the sample addition calibrator into the reaction vessel and controlling the distribution amount detection device to detect a first calibrator distribution amount distributed by the first sample dispensing component into the reaction vessel, comprises: controlling the first sample dispensing component to aspirate the diluent and distribute the diluent into the reaction vessel, controlling the reagent distribution device to aspirate a pigment solution and distribute the pigment solution into the reaction vessel, and controlling the first optical detection device to detect an absorbance of a third mixed solution formed by mixing at least the diluent distributed by the first sample dispensing component into the reaction vessel with the pigment solution distributed by the reagent distribution device into the reaction vessel, so as to obtain the first calibrator distribution amount distributed by the first sample dispensing component into the reaction vessel; and wherein the controlling the second sample dispensing component to aspirate the sample addition calibrator and distribute the sample addition calibrator into the reaction vessel and controlling the distribution amount detection device to detect a second calibrator distribution amount distributed by the second sample dispensing component into the reaction vessel, comprises: controlling the second sample dispensing component to aspirate the diluent and distribute the diluent into the reaction vessel, controlling the reagent distribution device to aspirate the pigment solution and distribute the pigment solution into the reaction vessel, and controlling the first optical detection device to detect an absorbance of a fourth mixed solution formed by mixing at least the diluent distributed by the second sample dispensing component into the reaction vessel with the pigment solution distributed by the reagent distribution device into the reaction vessel, so as to obtain the second calibrator distribution amount distributed by the second sample dispensing component into the reaction vessel.

7. The sample analyzer of claim 3, wherein the distribution amount detection device is a second optical detection device, and the sample addition calibrator is a first marker reagent with a luminescent marker,
the sample analyzer further comprises a substrate distribution device configured to distribute a luminescent substrate reagent into the reaction vessel,
the controlling the first sample dispensing component to aspirate a sample addition calibrator and distribute the sample addition calibrator into the reaction vessel and controlling the distribution amount detection device to detect a first calibrator distribution amount distributed by the first sample dispensing component into the reaction vessel, comprises: controlling the first sample dispensing component to aspirate the first marker reagent and distribute the first marker reagent into the reaction vessel, controlling the substrate distribution device to distribute the luminescent substrate reagent into the reaction vessel, and controlling the second optical detection device to detect a luminescent intensity of a first reaction solution prepared from at least the first marker reagent distributed by the first sample dispensing component into the reaction vessel and the luminescent substrate reagent distributed by the substrate distribution device into the reaction vessel, so as to obtain the first calibrator distribution amount distributed by the first sample dispensing component into the reaction vessel,
the controlling the second sample dispensing component to aspirate the sample addition calibrator and distribute the sample addition calibrator into the reaction vessel and controlling the distribution amount detection device to detect a second calibrator distribution amount distributed by the second sample dispensing component into the reaction vessel, comprises: controlling the second sample dispensing component to aspirate the first marker reagent and distribute the first marker reagent into the reaction vessel, controlling the substrate distribution device to distribute the luminescent substrate reagent into the reaction vessel, and controlling the second optical detection device to detect a luminescent intensity of a second reaction solution prepared from at least the first marker reagent distributed by the second sample dispensing component into the reaction vessel and the luminescent substrate reagent distributed by the substrate distribution device into the reaction vessel, so as to obtain the second calibrator distribution amount distributed by the second sample dispensing component into the reaction vessel,
and/or,
wherein performing, by the reagent distribution device, the reagent distribution action comprises: aspirating a magnetic bead reagent with magnetic beads from a first reagent vessel and distributing the magnetic bead reagent into the reaction vessel, and aspirating a second marker reagent with a luminescent marker from a second reagent vessel and distributing the second marker reagent into the reaction vessel,
the reaction vessel is carried by a reaction device to incubate a liquid containing at least the sample, the magnetic bead reagent and the second marker reagent, to prepare a third reaction solution,
the sample analyzer further comprises a magnetic separation device configured to perform a magnetic separation cleaning operation on the third reaction solution, to prepare a fourth reaction solution,
the substrate distribution device is further configured to dispense the luminescent substrate reagent into the fourth reaction solution, to prepare the to-be-detected solution from the fourth reaction solution and the luminescent substrate reagent,
the sample detection device is configured to detect a luminescent intensity of the to-be-detected solution,
wherein the sample addition calibration process differs from the first detection process and the second detection process in at least one of: a component of the first marker reagent differing from a component of the second marker reagent, a concentration of the first marker reagent differing from a concentration of the second marker reagent, a distribution amount of the first marker reagent differing from a distribution amount of the second marker reagent, different distribution amounts of the luminescent substrate reagent, different incubation durations, or different incubation temperatures.

8. The sample analyzer of claim 3, wherein the sample analyzer is pre-stored with a first preset condition, and the first preset condition comprises at least one of: reaching a first preset duration since a last execution of the sample addition calibration process; acquiring information indicating a completion of troubleshooting of the first sample dispensing component and/or the second sample dispensing component; acquiring information indicating a completion of assembling of the first sample dispensing component and/or the second sample dispensing component; or reaching a first preset time point of a first preset maintenance period,
the controller is further configured to perform the sample addition calibration process when the first preset condition is satisfied.

9. The sample analyzer of claim 1 or 2, wherein the first sample dispensing component and the second sample dispensing component share at least a portion of their parts,
and/or,
the first sample dispensing component further comprises a first aspirating and dispensing power part configured to provide a driving force for the first sample needle to perform aspirating and dispensing actions,
the second sample dispensing component further comprises a second aspirating and dispensing power part configured to provide a driving force for the second sample needle to perform aspirating and dispensing actions, and
the first aspirating and dispensing power part and the second aspirating and dispensing power part are the same aspirating and dispensing power part.

10. The sample analyzer of claim 1, wherein
the first sample needle is configured with a first identification code associated with a sample addition correction parameter of the first sample needle, and the sample analyzer further comprises a first information acquisition part configured to identify the first identification code; wherein the controller is further configured to: acquire the sample addition correction parameter of the first sample needle based on information fed back by the first information acquisition part by identifying the first identification code; and correct, based on at least the sample addition correction parameter of the first sample needle, a sample distribution amount of the first sample dispensing component upon performing the sample distribution action, such that a deviation between a sample distribution accuracy of the first sample dispensing component and a sample distribution accuracy of the second sample dispensing component is less than or equal to a first preset value;
and/or,
the second sample needle is configured with a second identification code associated with a sample addition correction parameter of the second sample needle, and the sample analyzer further comprises a first information acquisition part configured to identify the second identification code; wherein the controller is further configured to: acquire the sample addition correction parameter of the second sample needle based on information fed back by the first information acquisition part by identifying the second identification code; and correct, based on at least the sample addition correction parameter of the second sample needle, a sample distribution amount of the second sample dispensing component upon performing the sample distribution action, such that a deviation between a sample distribution accuracy of the first sample dispensing component and a sample distribution accuracy of the second sample dispensing component is less than or equal to a first preset value;
and/or,
the controller is further configured to acquire the sample addition correction parameter of the first sample needle based on the information fed back by the first information acquisition part by identifying the first identification code, before controlling the first sample needle to perform the sample distribution action in the sample analyzer for the first time;
and/or,
the controller is further configured to acquire the sample addition correction parameter of the second sample needle based on the information fed back by the first information acquisition part by identifying the second identification code, before controlling the second sample needle to perform the sample distribution action in the sample analyzer for the first time.

11. The sample analyzer of claim 1 or 2 or claim 10, wherein
the first sample dispensing component further comprises a first aspirating and dispensing power part configured to provide a driving force for the first sample needle to perform aspirating and dispensing actions, the first aspirating and dispensing power part is configured with a third identification code associated with a sample addition correction parameter of the first aspirating and dispensing power part, and the sample analyzer further comprises a first information acquisition part configured to identify the third identification code; wherein the controller is further configured to: acquire the sample addition correction parameter of the first aspirating and dispensing power part based on information fed back by the first information acquisition part by identifying the third identification code; and correct, based on the sample addition correction parameter of the first aspirating and dispensing power part, a sample distribution amount of the first sample dispensing component upon performing the sample distribution action, such that a deviation between a sample distribution accuracy of the first sample dispensing component and a sample distribution accuracy of the second sample dispensing component is less than or equal to a first preset value;
and/or,
the second sample dispensing component further comprises a second aspirating and dispensing power part configured to provide a driving force for the second sample needle to perform aspirating and dispensing actions, the second aspirating and dispensing power part is configured with a fourth identification code associated with a sample addition correction parameter of the second aspirating and dispensing power part, and the sample analyzer further comprises a first information acquisition part configured to identify the fourth identification code; wherein the controller is further configured to: acquire the sample addition correction parameter of the second aspirating and dispensing power part based on information fed back by the first information acquisition part by identifying the fourth identification code; and correct, based on the sample addition correction parameter of the second aspirating and dispensing power part, a sample distribution amount of the second sample dispensing component upon performing the sample distribution action, such that a deviation between a sample distribution accuracy of the first sample dispensing component and a sample distribution accuracy of the second sample dispensing component is less than or equal to a first preset value.

12. The sample analyzer of claim 11, wherein the controller is further configured to acquire the sample addition correction parameter of the first aspirating and dispensing power part based on the information fed back by the first information acquisition part by identifying the third identification code, before controlling the first aspirating and dispensing power part to drive the first sample needle to perform the sample distribution action in the sample analyzer for the first time; and/or
the controller is further configured to acquire the sample addition correction parameter of the second aspirating and dispensing power part based on the information fed back by the first information acquisition part by identifying the fourth identification code, before controlling the second aspirating and dispensing power part to drive the second sample needle to perform the sample distribution action in the sample analyzer for the first time.

13. The sample analyzer of claim 1 or 2 or claim 10, further comprising a reaction device configured to carry the reaction vessel to incubate the sample and the reagent in the reaction vessel,
the controller is further configured to: control the reagent distribution device to perform both the reagent distribution action in the first detection process and the reagent distribution action in the second detection process; control the reaction device to incubate both the sample and the reagent in the first detection process and the sample and the reagent in the second detection process; and control the sample detection device to detect both the to-be-detected solution in the first detection process and the to-be-detected solution in the second detection process,
and/or,
wherein performing, by the reagent distribution device, the reagent distribution action comprises: aspirating a magnetic bead reagent from a first reagent vessel and distributing the magnetic bead reagent into the reaction vessel, and aspirating a second marker reagent from a second reagent vessel and distributing the second marker reagent into the reaction vessel,
the reaction device is configured to carry the reaction vessel to incubate a liquid containing at least the sample, the magnetic bead reagent and the second marker reagent, to prepare a third reaction solution,
the sample analyzer further comprises a magnetic separation device and a substrate distribution device, the magnetic separation device is configured to perform a magnetic separation cleaning operation on the third reaction solution, to prepare a fourth reaction solution,
the substrate distribution device is configured to perform a substrate distribution action comprising: aspirating a luminescent substrate reagent from a substrate reagent vessel and dispensing at least a portion of the aspirated luminescent substrate reagent into the reaction vessel, to prepare the to-be-detected solution from the fourth reaction solution and the luminescent substrate reagent,
the sample detection device is configured to detect a luminescent intensity of the to-be-detected solution,
the controller is further configured to: control the magnetic separation device to perform both the magnetic separation cleaning operation in the first detection process and the magnetic separation cleaning operation in the second detection process; and control the substrate distribution device to perform both the substrate distribution action in the first detection process and the substrate distribution action in the second detection process.

14. The sample analyzer of claim 1 or 2 or claim 10, wherein the detection item is a first detection item, and the controller is further configured to perform an item calibration process for the first detection item, comprising: controlling the first sample dispensing component to aspirate an item calibrator from a second calibrator vessel and distribute the item calibrator into the reaction vessel, controlling the reagent distribution device to aspirate the reagent from the reagent vessel and distribute the reagent into the reaction vessel; controlling the sample detection device to detect a calibration solution prepared from at least the item calibrator distributed by the first sample dispensing component and the reagent distributed by the reagent distribution device; and obtaining the first calibration data corresponding to the first detection item based on detection information fed back by the sample detection device,
the controller is further configured to perform the second detection process for the first detection item, comprising: controlling the second sample dispensing component to perform the sample distribution action, controlling the reagent distribution device to perform the reagent distribution action, controlling the sample detection device to detect the to-be-detected solution prepared from at least the sample distributed by the second sample dispensing component and the reagent distributed by the reagent distribution device, obtaining the second detection data based on detection information fed back by the sample detection device, and obtaining the second detection result based on the second detection data and the first calibration data corresponding to the first detection item,
and/or,
wherein the controller is further configured to: set the first calibration data and the second calibration data to be the same calibration data, when the detection item performed by the first detection process and the detection item performed by the second detection process are both the first detection item; and set the first calibration data and the second calibration data to be two different calibration data, when the detection item performed by the first detection process and the detection item performed by the second detection process are both a second detection item, wherein the first detection item and the second detection item are two different detection items,
and/or,
wherein the sample analyzer is configured with a first operation mode and a second operation mode; in the first operation mode, the controller is configured to set the first calibration data and the second calibration data to be the same calibration data, when the detection item performed by the first detection process and the detection item performed by the second detection process are the same detection item; and in the second operation mode, the controller is configured to set the first calibration data and the second calibration data to be two different calibration data, when the detection item performed by the first detection process and the detection item performed by the second detection process are the same detection item.

15. A sample analyzer, comprising:
a sample distribution device, configured to perform a sample distribution action comprising: aspirating a sample from a sample vessel and dispensing at least a portion of the aspirated sample into a reaction vessel;
a reagent distribution device, comprising a first reagent dispensing component and a second reagent dispensing component, wherein each of the first reagent dispensing component and the second reagent dispensing component is configured to perform a reagent distribution action comprising: aspirating a reagent from a reagent vessel and dispensing at least a portion of the aspirated reagent into the reaction vessel, wherein the first reagent dispensing component comprises a first reagent needle, the second reagent dispensing component comprises a second reagent needle, and the first reagent needle and the second reagent needle are two reagent needles capable of performing the reagent distribution action independently of each other;
a sample detection device, configured to detect a to-be-detected solution prepared from at least the sample distributed by the sample distribution device and the reagent distributed by the reagent distribution device; and
a controller, configured to perform a third detection process comprising: controlling the sample distribution device to perform the sample distribution action, controlling the first reagent dispensing component to perform the reagent distribution action, controlling the sample detection device to detect the to-be-detected solution prepared from at least the sample distributed by the sample distribution device and the reagent distributed by the first reagent dispensing component, obtaining third detection data based on detection information fed back by the sample detection device, and obtaining a third detection result based on the third detection data and third calibration data; wherein
the controller is further configured to perform a fourth detection process comprising: controlling the sample distribution device to perform the sample distribution action, controlling the second reagent dispensing component to perform the reagent distribution action, controlling the sample detection device to detect the to-be-detected solution prepared from at least the sample distributed by the sample distribution device and the reagent distributed by the second reagent dispensing component, obtaining fourth detection data based on the detection information fed back by the sample detection device, and obtaining a fourth detection result based on the fourth detection data and fourth calibration data,
wherein when a detection item performed by the third detection process and a detection item performed by the fourth detection process are the same detection item, the third calibration data and the fourth calibration data are the same calibration data.
